# EUROPÄISCHE PATENTSCHRIFT

(11) **EP 4 233 639 B1**
(45) Veröffentlichungstag und Bekanntmachung des Hinweises auf die Patenterteilung: **15.10.2025**
(21) Anmeldenummer: 23180403.0
(22) Anmeldetag: 20.04.2016
(51) Int. Cl.: A46B 9/04, A61C 17/16

(54) **ELEKTROGERÄT FÜR DIE KÖRPERPFLEGE**
ELECTRIC APPLIANCE FOR PERSONAL CARE
APPAREIL ÉLECTRIQUE DE SOINS CORPORELS

(30) Priorität: 04.05.2015 EP 15166214
(43) Veröffentlichungstag der Anmeldung: 30.08.2023
(62) Teilanmeldung aus: 21181032.0
(73) Patentinhaber: Trisa Holding AG, 6234 Triengen (CH)
(72) Erfinder: Bärtschi, Armin, 4652 Winznau (CH); Fischer, Herbert, 5057 Reitnau (CH); Schär, Michael, 6243 Egolzwil (CH)
(74) Vertreter: Schaad, Balass, Menzl & Partner AG

(56) Entgegenhaltungen:
- EP-A2- 1 790 312
- WO-A1-2013/076904
- WO-A1-2013/132363
- US-A1- 2013 000 061
- US-B1- 6 546 585

## Beschreibung

Die Erfindung betrifft ein Aufsteckteil für die Zahnreinigung, welches auf einen Handgriff aufbringbar ist, wobei das Aufsteckteil einen Basisbereich und einen Kopfbereich aufweist, welche durch ein Halsbereich verbunden sind, wobei das Aufsteckteil eine buchsenartige Kupplungsstruktur umfasst, welche zumindest zwei Stufen mit unterschiedlicher Umfangsgeometrie aufweist und welche den aufsteckteilseitigen Teil für eine Schnittstelle mit einer im Wesentlichen gegengleichen, steckerartigen Kupplungsstruktur des Handgriffs bildet, wobei das Aufsteckteil eine Anschlagfläche aufweist, welche schräg zu einer geraden Einführrichtung verläuft.

Aus der US 5,365,627 ist ein Mundhygienegerät mit einem Handgriff und einem automatischen Schafteinführungssystem bekannt. Das Mundhygienegerät weist auf der Antriebsmotorwelle ein Paar von schlüsselartigen Erhebungen auf. Eine Bohrung im Schaft nimmt dabei die Welle auf und Schlitze des Schafts nehmen die schlüsselartigen Erhebungen auf. Ein Paar von Manschetten an dem Schaft weist jeweils eine rampenartige Struktur auf, um die schlüsselartigen Erhebungen aufzunehmen und mit ihnen in Eingriff zu gelangen. Wenn der Schaft mit dem Handgriff gekoppelt wird, werden mittels einer Gleitbewegung der schlüsselartigen Erhebungen auf den Rampen die schlüsselartigen Erhebungen in die Schlitze eingeführt. A21426WOEP/4

An der Basis der Welle ist ein sich radial nach aussen erstreckender Flansch angeordnet, welcher von einem Paar flexibler Arme, die von der Basis des Schafts abragen und jeweils eine Ausnehmung aufweisen, aufgenommen wird. Beim Koppeln des Schafts mit dem Handgriff, gelangt der Flansch in Eingriff mit den flexiblen Armen und biegt diese auseinander wobei bei einer weiteren Bewegung des Schafts in Richtung des Hangriffs der Flansch in die Ausnehmungen der Arme einschnappt. Beim Abziehen des Flansches von dem Handgriff bewirkt der Flansch, dass sich die flexiblen Arme wiederum auseinander biegen, um den Flansch aus ihren Ausnehmungen freizugeben.

Weitere Kopplungsstrukturen für einen Handgriff und entsprechende Aufsteckbürsten einer elektrischen Zahnbürste sind aus dem US-Patent 3,088,148, der WO 2011/073848 A1 sowie dem US-Patent 3,369,265 bekannt.

Elektrische Zahnbürsten bei denen der Vibrationsantrieb im Handgriff in unterschiedlichen Positionen bezüglich der Kupplungs- bzw. Schnittstelle zwischen dem Handgriff und der Aufsteckbürste angeordnet ist, sind aus der WO 2008/130246 A1, der DE 1 632 389 sowie dem US-Patent 3,685,080 bekannt.

Die Druckschrift EP 1 790 312 offenbart eine elektrisch angetriebene Zahnbürste mit Fluidabgabefunktion. Die Zahnbürste verfügt über Kanäle, welche von einer Druckkartusche in das Aufsteckteil führen und die gezielte Abgabe eines Fluids während des Zähneputzens ermöglichen. Die Druckkartusche ist in einer Ausnehmung im Handgriff untergebracht.

Die Druckschrift WO 2013/132363 A1 beschreibt eine A21426WOEP/4

Gesichtsbürste. Die Bürste hat eine Anschlagfläche, welche schräg zur Längsachse des Handgriffs der Gesichtsbürste und senkrecht zur Einführrichtung der Bürste verläuft.

Die Druckschrift US 6 546 585 lehrt, das Aufsteckteil am Handgriff zu sichern, indem ein horizontaler Vorsprung einer Kupplungsstruktur des Handgriffs in eine Ausnehmung des Aufsteckteils eingreift. Dies erfordert ein passgenaues senkrechtes Aufsetzen des Aufsteckteils auf dem Handgriff. Zudem kann über die Ausnehmung Flüssigkeit und Schmutz in das Innere des Aufsteckteils eindringen.

Es ist die Aufgabe der vorliegenden Erfindung, ein Aufsteckteil der eingangs genannten Art zu schaffen, welches auf effiziente Weise eine einfache und sichere Montage sowie einen festen Halt am Handgriff gewährleistet und ausserdem eine effektive Übertragung der Vibration vom Handgriff auf das Aufsteckteil sicherstellt.

Diese Aufgabe wird erfindungsgemäss dadurch gelöst, dass das Aufsteckteil eine buchsenartigen Kupplungsstruktur umfasst, welche zumindest zwei Stufen mit unterschiedlicher Umfangsgeometrie aufweist und welche den aufsteckteilseitigen Teil für eine Schnittstelle mit einer im Wesentlichen gegengleichen, steckerartigen Kupplungsstruktur eines Handgriffs bildet. Das Aufsteckteil hat eine Anschlagfläche, welche schräg zu einer geraden Einführrichtung verläuft.

Das Aufsteckteil ist aufbringbar auf einen Handgriff eines Elektrogerätes für die Zahnreinigung. Der Handgriff hat eine Längsachse A_{G}, wobei im Handgriff eine Vibrationseinheit aufweisend einen Elektromotor und einen Exzenter angeordnet ist, wobei von dem Handgriff eine steckerartige Kupplungsstruktur abragt, welche mit einer im Wesentlichen gegengleichen buchsenartigen Kupplungsstruktur des Aufsteckteils eine Schnittstelle bildet, wobei die Schnittstelle zumindest zwei Stufen mit unterschiedlicher Umfangsgeometrie aufweist, wobei zumindest eine der Stufen eine Verdrehsicherung oder Mittel zur Verdrehsicherung zwischen dem Handgriff und dem Aufsteckteil umfasst und wobei eine Anschlagfläche des Handgriffs für das Aufsteckteil schräg zur Längsachse A_{G} des Handgriffs verläuft; sowie in einer ersten Alternativlösung durch ein Elektrogerät für die Zahnreinigung mit einem Handgriff mit einer Längsachse A_{G} und einem auf den Handgriff aufbringbaren Aufsteckteil, wobei im Handgriff eine Vibrationseinheit aufweisend einen Elektromotor und einen Exzenter angeordnet ist, wobei von dem Handgriff eine steckerartige Kupplungsstruktur abragt, welche mit einer im Wesentlichen gegengleichen buchsenartigen Kupplungsstruktur des Aufsteckteils eine Schnittstelle bildet, wobei die Schnittstelle zumindest zwei Stufen mit unterschiedlicher Umfangsgeometrie aufweist, wobei eine Anschlagfläche zwischen dem Handgriff und dem Aufsteckteil schräg zur Längsachse A_{G} des Handgriffs verläuft und wobei der Handgriff einen Nocken aufweist, welcher mit einer gegengleichen Ausnehmung des Aufsteckteils in der Art einer Schnappverbindung zusammenwirkt; sowie in einer zweiten Alternativlösung durch ein Elektrogerät für die Zahnreinigung mit einem Handgriff mit einer Längsachse A_{G} und einem auf den Handgriff aufbringbaren Aufsteckteil, wobei im Handgriff eine Vibrationseinheit aufweisend einen Elektromotor und einen Exzenter angeordnet ist, wobei von dem Handgriff eine steckerartige Kupplungsstruktur abragt, welche mit einer im Wesentlichen gegengleichen buchsenartigen Kupplungsstruktur des Aufsteckteils eine Schnittstelle bildet, wobei die Schnittstelle zumindest zwei Stufen mit unterschiedlicher Umfangsgeometrie aufweist, wobei zumindest eine der Stufen eine Verdrehsicherung zwischen dem Handgriff und dem Aufsteckteil umfasst, wobei der Elektromotor im Bereich der Schnittstelle angeordnet ist und wobei die Rotationsachse A_{M} des Elektromotors und die Längsachse A_{G} des Handgriffs einen Winkel β zwischen 3° und 20° besonders bevorzugt zwischen 7° und 13° einschliessen.

In einer bevorzugten Ausführungsform der vorliegenden Erfindung schliessen die Anschlagfläche und die Längsachse des Handgriffs A_{G} einen Winkel α zwischen 30° und 70° vorzugsweise zwischen 45° und 55°. Vermittels der auf diese Weise abgeschrägten Anschlagfläche kann die für die Kupplung zur Verfügung stehende Berührungsfläche zwischen der steckerartigen Kupplungsstruktur und der gegengleichen buchsenartigen Kupplungsstruktur vergrössert werden (mit anderen Worten, die Berührungsfläche der Schnittstelle als solcher wird grösser als etwa bei einer herkömmlichen senkrechten Ausgestaltung). Dies ist im Hinblick auf eine sichere Führung des Aufsteckteils sowie ein verbessertes, d.h. höheres, Abzugsgewicht wünschenswert.

In einer weiteren bevorzugten Ausführungsform der vorliegenden Erfindung ist die Abmessung von der Anschlagfläche zum hinteren Ende des Handgriffs auf der Vorderseite grösser als auf der Rückseite, so dass die Anschlagfläche von vorne nach hinten verläuft. Diese Art der Ausgestaltung hat sich beim Handling als vorteilhaft erwiesen.

Die Vorderseite ist im Übrigen generell diejenige Seite des Handgriffs bzw. des Elektrogeräts, auf welcher der Daumen bei der Betätigung (z.B. beim Ein- und Ausschalten) aufgelegt wird. Die Vorderseite ist generell auch diejenige Seite zu der hin ggf. das Borstenfeld einer Aufsteckbürste gerichtet ist. Die Rückseite ist entsprechend die 180° gegenüberliegende Seite.

In einer weiteren bevorzugten Ausführungsform der vorliegenden Erfindung schliessen die Anschlagfläche des Handgriffs und die, gegenüber der Längsachse des Handgriffs A_{G} vorzugsweise geneigte, Rotationsachse des Elektromotors A_{M} einen Winkel φ zwischen 35° und 90° bevorzugt zwischen 50° und 70°. Auf diese Weise kann die Vibrationseinheit, welche erfindungsgemäss einen Elektromotor mit Exzenter aufweist, besonders effektiv in den Bereich der Schnittstelle, vorzugsweise in die Nähe des Basisbereichs der steckerartigen Kupplungsstruktur gebracht werden.

In einer weiteren bevorzugten Ausführungsform der vorliegenden Erfindung ermöglichen die steckerartige Kupplungsstruktur des Handgriffs und die gegengleiche buchsenartige Kupplungsstruktur des Aufsteckteils ein gerades Aufstecken, wobei vorzugsweise die Längsachse der steckerartigen Kupplungsstruktur A_{K} parallel versetzt ist zur Längsachse des Handgriffs A_{G}. Diese Ausgestaltung hat sich als besonders vorteilhaft für das Handling erwiesen.

Bevorzugt weist der Handgriff im Bereich der steckerartigen Kupplungsstruktur einen Nocken auf, welcher mit einer gegengleichen Ausnehmung des Aufsteckteils in der Art einer Schnappverbindung zusammenwirkt.

Zur Begriffsdefinition:
- Handgriff - ist definiert als gebrauchsfertiges Teil bestehend aus Handteil und Verschlussdeckel sowie dem Innenleben;
- Handteil - ist definiert als Handkörper mit Innenleben;
- Handkörper - ist definiert als Spritzgussteil bestehend aus Grundkörper(n) und Umspritzkörper(n).

In einer weiteren bevorzugten Ausführungsform der vorliegenden Erfindung ist das Material aus welchem der Handkörper beziehungsweise der Grundkörper des Handkörpers (und insbesondere auch der Nocken) gebildet ist härter als das Material aus welchem das Aufsteckteil beziehungsweise der Grundkörper des Aufsteckteils (und insbesondere auch die Ausnehmung) gebildet ist. Generell werden bevorzugt jeweils Polypropylen-Materialien mit unterschiedlichen e-Modulen verwendet (ein tieferes e-Modul gibt jeweils ein weicheres Material an). Der Grund dafür, dass das Material des Aufsteckteils bzw. des Grundkörpers des Aufsteckteils weicher gewählt wird als jenes des Handkörpers bzw. des Grundkörpers des Handkörpers, liegt in der gewünschten Langlebigkeit der Schnappverbindung begründet, denn aufgrund des weicheren Materials generiert das Aufsteckteil bzw. der Grundkörper des Aufsteckteils weniger Abrieb am Nocken und generell der ganzen steckerartigen Kupplungsstruktur.

Generell können so die Reibungskräfte zwischen der Aufsteckteilwand und der Schnittstellenoberfläche bzw. der steckerartigen Kupplungsstruktur minimal gehalten werden und der durch den Wechsel verursachte Verschleiss findet vorzugsweise am Grundkörper des Aufsteckteils statt.

Vorzugsweise kann die steckerartige Kupplungsstruktur des Handgriffs einen leichten Verzug aufweisen, so dass Abzugsgewicht der Schnappverbindung erhöht werden kann.

Vorzugsweise ist der Grundkörper des Handkörpers aus Hartkomponente, nämlich Total PPH 5042 von Total SA (Total ist ein Markenzeichen von Total SA) oder Moplen HP548L von LyondellBasell Industries Holdings B.V. (Moplen ist ein Markenzeichen von LyondellBasell Industries Holdings B.V.) gebildet und die Hartkomponente des Grundkörpers des Aufsteckteils vorzugsweise aus PP Tipplen R359 von TVK Plc. (Tipplen ist ein Markenzeichen TVK Plc.), gebildet.

Das e-Modul der Hartkomponente des Grundkörpers des Handkörpers beträgt zwischen 1300 MPa und 2500 MPa vorzugsweise zwischen 1300 MPa und 1800 MPa. Das e-Modul der Hartkomponente des Grundkörpers des Aufsteckteils beträgt zwischen 700 MPa und 1500 MPa vorzugsweise zwischen 900 MPa und 1250 MPa

In einer weiteren bevorzugten Ausführungsform der vorliegenden Erfindung ist der Nocken in der steckerartigen Kupplungsstruktur baumförmig ausgebildet, vorzugsweise mit einem geraden Stamm und einer kreisförmigen Krone. Hierdurch kann eine besonders effektive Schnappverbindung mit der gegengleichen Ausnehmung bereitgestellt werden.

Der gerade Stamm weist vorzugsweise eine Breite von 2 mm bis 4 mm, vorzugsweise von 2,5 mm bis 3,5 mm auf. Die kreisförmige Krone weist vorzugsweise einen Durchmesser von 2 mm bis 5 mm, vorzugsweise von 3 mm bis 4,5 mm auf.

Die Gesamtlänge des Nockens ab seinem Ansatzpunkt beträgt bevorzugt 4 mm bis 7 mm, besonders bevorzugt 5 mm bis 6 mm. Der Abstand des Kreismittelpunktes (Krone) ab dem Ansatzpunkt des Nockens beträgt vorzugsweise 2 mm bis 6 mm, vorzugsweise 3 mm bis 4 mm. Die Höhe des Nockens (bzw. der Absetzung des Nockens von der restlichen Oberfläche der dritten Stufe) beträgt vorzugsweise von 1 mm bis 3 mm, besonders bevorzugt 1,5 mm bis 2,5 mm.

Die Ausnehmung auf dem Aufsteckteil ist gegengleich zum Nocken und weist vorzugsweise eine Toleranz gegenüber dem Nocken von 0 mm bis 0,4 mm, vorzugsweise von 0,15 mm bis 0,25 mm auf. Dies ist hinsichtlich der gewünschten Langlebigkeit der Schnappverbindung vorteilhaft. Weiter vorzugsweise weist die nockengegengleiche Ausnehmung auf dem Aufsteckteil in Verlängerung (d.h. in Längsrichtung der nockengegengleichen Ausnehmung zum freien Ende des Aufsteckteils hin gesehen) einen Schlitz auf, welcher weiter zum Einstellen der gewünschten Haltestärke bzw. des Abzugsgewichts dient. Die Länge des Schlitzes (d.h. ohne die nockengegengleiche Ausnehmung) beträgt 1 mm bis 8 mm, bevorzugt 1 mm bis 5 mm.

Vermittels der geometrischen Ausgestaltung des Nockens und der Ausnehmung sowie der entsprechenden Materialauswahl kann ein Abzugsgewicht in der Grössenordnung von 2 kg bis 6 kg, vorzugsweise von 2 kg bis 4 kg erzielt werden.

Bevorzugt ist die Vibrationseinheit mit dem Elektromotor und dem Exzenter im Bereich der Schnittstelle angeordnet, wobei die Rotationsachse des Elektromotors A_{M} und die Längsachse des Handgriffs A_{G} einen Winkel β zwischen 3° und 20° einschliessen. Insbesondere der Exzenter ragt dabei, im Querschnitt gesehen, in einen vorderen Bereich des Handgriffs hinein, welcher jedenfalls teilweise von der Mündung des Aufsteckteils umgeben ist. Zusammen mit dem Winkel β kann so eine besonders effiziente Vibrationsübertragung erreicht werden.

In einer weiteren bevorzugten Ausführungsform der vorliegenden Erfindung schliessen die Rotationsachse des Elektromotors A_{M} und die Längsachse des Handgriffs A_{G} einen Winkel β zwischen zwischen 7° und 13° ein. Auf diese Weise kann die Effizienz der Vibrationsübertragung weiter gesteigert werden.

In einer weiteren bevorzugten Ausführungsform der vorliegenden Erfindung ist der Elektromotor auf einem Trägerelement angeordnet, welches vorzugsweise aus einem Kunststoffmaterial gebildet ist. Dabei schaut vorzugsweise der Exzenter über die Vorderkante des Trägerelements hinaus, um eine ungestörte Vibrationsübertragung zu ermöglichen.

In einer weiteren bevorzugten Ausführungsform der vorliegenden Erfindung wird der Elektromotor in dem Trägerelement durch Klemmung, vorzugsweise durch beidseitige seitliche Klemmung oberhalb seiner Rotationsachse A_{M}, gehalten. Der Elektromotor muss dabei nicht über die gesamte Länge geklemmt sein, bevorzugt erfolgt die Klemmung im hinteren Bereich des Elektromotors beim Kabelanschluss. Auf diese Weise kann der Elektromotor besonders gut in das Trägerelement eingeschnappt bzw. in dem Trägerelement fixiert werden.

In einer weiteren bevorzugten Ausführungsform der vorliegenden Erfindung weist das Trägerelement einen Anschlag für das vordere (genannt vorderer Motoranschlag) sowie ggf. auch für das hintere Ende (genannt hinterer Motoranschlag) des Elektromotors auf, wobei beide Anschläge vorzugsweise der Höhe nach unterhalb der Rotationsachse A_{M} des Elektromotors enden. Hierdurch kann ein sicherer Halt für den Elektromotor gewährleistet werden und der Anschluss der Kabel sowie die Rotationsachse A_{M} mit Exzenter werden nicht gestört. Der Exzenter steht bevorzugt über den vorderen Motoranschlag des Trägerelements hervor, damit ein störungsfreier Betrieb sichergestellt ist.

Alternativ zum Elektromotor mit direkt am Elektromotor anliegenden Exzenter (wie vorgängig beschrieben) ist es auch möglich, den Elektromotor mit einer verlängerten, allenfalls flexiblen Achse auszugestalten und den Exzenter vom Elektromotor entfernt anzubringen. Dadurch kann der Exzenter weiter vorne in die Kupplungsstruktur eingebracht werden, weil das Motorvolumen nicht direkt anschliessend untergebracht werden muss.

Unter einer flexiblen Achse wird eine Achse verstanden, die sich vom Motor her gebogen zum Exzenter fortsetzt d.h. der Exzenter liegt nicht auf einer Geraden mit der Motorenachse. Durch die Flexibilität der Achse ist die Dreh-Bewegung dennoch möglich.

Die verlängerte Achse kann ein- oder mehrteilig aufgebaut sein. Sie kann sich einerseits in einem Stück ab der Rotationsachse A_{M} des Motors fortsetzen und andererseits aber auch an die Rotationsachse A_{M} des Motors angebracht sein.

Die verlängerte Achse kann mit sich bringen, dass sie in sich zu wenig stabil ist und den Exzenter in Bewegung nicht stabil in einer Lage halten kann. So kann es allenfalls notwendig sein, die Achse abzustützen. Die Stützung kann beispielsweise, vom Motor her gesehen, nach dem Exzenter passieren, dass die Achse über den Exzenter hinaus ragt, und dass die Achse in eine Buchse eingeführt wird und so positioniert gehalten bzw. geführt/gelagert wird. Weiter besteht die Möglichkeit, die Achse zwischen dem Motor und dem Exzenter zu führen. Dabei kann die Führung so gestaltet sein, dass die Achse eingefahren wird oder die Führung kann so gestaltet sein, dass die Achse anliegt.

Die Buchse ist vorzugsweise im Grundkörper des Handteils geformt und besteht aus demselben Material wie der Grundkörper. Die Buchse kann aber auch mit Mitteln zur Abstützung/Lagerung ausgestattet sein, beispielsweise mit Metallbuchsen oder Kugellagern. Diese Mittel können nach dem Spritzguss montiert werden oder direkt in das Spritzgusswerkzeug eingelegt und umspritzt werden.

Bevorzugt findet die vorliegende Erfindung Anwendung bei Produkten für die Zahnreinigung, wie z.B. Mundhygiene.

Für die Mundhygiene sind dabei vorzugsweise Anwendungen als manuelle Zahnbürste vorgesehen (hier insbesondere in Form einer nicht motorisierten Mehrwegzahnbürste, denn die Kupplungsstruktur bzw. die Schnittstelle können auch für manuelle, nicht motorisierte Anwendungen eingesetzt werden). Dabei kann der Handgriff eine lange Zeit genutzt werden und ausgetauscht wird lediglich die Aufsteckbürste.

Besonders bevorzugt wird die vorliegende Erfindung aber für elektrische Zahnbürsten zum Einsatz kommen, insbesondere für Vibrations- /Schallzahnbürsten.

Weitere bevorzugte Anwendungen in der Mundhygiene sind Interdental-Bürsten, Interdentalreinigungsprodukte oder aber Zungenreiniger.

In der Kosmetik sind bevorzugt Anwendungen zur Applikation von Kosmetikmedien in flüssigem oder festen Zustand **z.B.** als Mascarabürste, Nagellackpinsel, zur Make-up Applikation oder Entfernung etc. vorgesehen.

Eine weitere Anwendung ist die Haarentfernung als Nassrasierer oder mit anderen geeigneten Mitteln.

Weitere bevorzugte Anwendungen sind Gesichtsreinigung und -pflege, Fusspflege (Pediküre) & Handpflege (Maniküre) insbesondere die Nagelreinigung und -pflege sowie die Hornhautentfernung.

### Bevorzugte Herstellung

Die Herstellung des erfindungsgemässen Handkörpers und des erfindungsgemässen Aufsteckteils bzw. Grundkörper und Umspritzkörper des Aufsteckteils erfolgt vorzugsweise durch Spritzguss in einem Spritzgusswerkzeug.

Der Handkörper wird bevorzugt in einem Zwei-, Drei- oder Mehrstationen-Werkzeug (z.B. Helikopterwerkzeug) gefertigt. Dabei wird zunächst die Hartkomponente gespritzt und so der Grundkörper geschaffen, anschliessend werden ein oder zwei Weichkomponenten, jeweils Umspritzkörper genannt, an den Grundkörper angespritzt (im gleichen Spritzvorgang), schliesslich wird der fertige Handkörper im geschlossenen Zustand dem Spritzgusswerkzeugs entnommen. Gewisse Komponenten im Grundkörper oder auch den Umspritzkörpern können mit Seitenschiebern gestaltet werden (Öffnungen, Ausnehmungen, etc.). Dabei erfordert der Spritzguss von mehreren Weichkomponenten im selben Schritt eine spezielle Geometrie des entsprechenden Teils, wobei die Anforderung ist, dass die Weichkomponenten explizit separate Volumen bzw. Zonen bilden und nicht direkt aneinander angrenzen.

Die Aufsteckteile bzw. Aufsteckbürsten werden vorzugsweise im Ein-Komponenten-Spritzguss hergestellt (vorzugsweise aus einer Hartkomponente). Es ist aber auch möglich, die Aufsteckteile im Mehr-Komponenten-Spritzguss herzustellen und so jeweils eine oder mehrere Hart- und/oder Weichkomponenten einzusetzen und so den Grundkörper und mehrere Umspritzkörper zu schaffen.

Die Beborstung der Aufsteckbürsten erfolgt vorzugsweise im AFT-Verfahren (Anchor Free Tufting), durch konventionelles Ankerstanzen, durch IMT (In Mould Tufting), durch IAP (Integrated Anchorless Production) oder aber durch das Spritzen von Borsten bzw. Reinigungselementen.

Insgesamt wird ein kleines, leichtes und handliches, stiftförmiges Gerät für Zahnreinigung-Anwendungen geschaffen. Dies erlaubt den einfachen Transport (beispielsweise in einer Beauty Case) und die genaue Applikation/Anwendung.

Das Volumen des Handgriffs (den Verschlussdeckel mitgerechnet) liegt zwischen 75 cm³ und 150 cm³.

Das Gewicht des Handgriffs beträgt etwa 35 g bis 50 g, vorzugsweise 40 g bis 47 g.

Das Gewicht der Aufsteckteile beträgt etwa 5 g bis 25 g, vorzugsweise 7 g bis 15 g.

In weiterer Ausgestaltung der Erfindung ist umfasst:
Handgriff für ein Elektrogerät für die Zahnreinigung, auf welchen ein Aufsteckteil aufbringbar ist und welcher eine Längsachse A_{G} aufweist, wobei im Handgriff eine Vibrationseinheit aufweisend einen Elektromotor und einen Exzenter angeordnet ist, wobei von dem Handgriff eine steckerartige Kupplungsstruktur abragt, welche zumindest zwei Stufen mit unterschiedlicher Umfangsgeometrie aufweist und welche den handgriffseitigen Teil für eine Schnittstelle mit einer gegengleichen, buchsenartigen Kupplungsstruktur eines Aufsteckteils bildet.

Der erfindungsgemässe Handkörper für den Handgriff wird vorzugsweise im Spritzgussverfahren aus drei Materialkomponenten gebildet, nämlich vorzugsweise einer Hartkomponente und zwei Weichkomponenten.

Die erste Komponente ist dabei vorzugsweise die Hartkomponente. Die Hartkomponente bildet den Grundkörper des Handkörpers, welcher die handgriffseitige, steckerartige Kupplungsstruktur für die Schnittstelle mit der Aufsteckbürste umfasst sowie eine korrespondierende Verschlussstruktur für den Verschlussdeckel, welcher den Handgriff regelmässig verschliesst. Auf den Grundkörper werden des Weiteren die Weichkomponenten als Umspritzkörper aufgebracht. Zudem umschliesst der Grundkörper bevorzugt das Innenleben/den Innenraum des Handkörpers.

Der Grundkörper enthält weiterhin vorzugsweise eine oder mehrere Flachstellen, damit der Handgriff in einer Position stabil liegen kann, und weist überdies bevorzugt eine vorzugsweise frei stehende Position für ein Entlüftungsloch auf (d.h. das Entlüftungsloch ist in der Ruhelage, wenn der Grundkörper auf den Flachstellen auf einer ebenen Fläche aufliegt, nicht verdeckt).

Das Entlüftungsloch definiert einen Durchgang durch vorhandene Hart- und / oder Weichkomponenten von der Umgebung (dem Aussenraum) in den Innenraum des Handgriffs bzw. des Handteils/Handkörpers. Es wird bevorzugt durch eine Entlüftungsmembrane verschlossen, wobei die Entlüftungsmembrane auf der Innenseite, d.h. im Innenraum des Handkörpers angebracht ist. Das Gehäuse wird auf diese Weise dicht verschlossen, so dass kein Wasser und Staub eindringen sondern nur ein Gasaustausch mit dem Innenraum stattfindet. Die Entlüftungsmembrane wird auf der zylindrischen Innenfläche des Hohlraums mit einem Applikationsdorn aufgeklebt.

Zweck des Entlüftungslochs ist es, ein Überdruckventil bereitzustellen und eine Entgasung des Innenraums von Gas aus einem Akku oder einer Batterie zu ermöglichen.

Der Anspritzpunkt für die Hartkomponente des Handkörpers ist an der Vorderseite gelegen, vom Daumengriff her gesehen in Richtung Aufsteckteil.

Eine Weichkomponente des Handkörpers welche gespritzt wird bildet vorzugsweise die Schalterpartie, welche den funktionalen Übergang von innen nach aussen repräsentiert. Direkt unter der Schalterpartie ist vorzugsweise auf einer Printplatte der Schalter selbst angebracht. Die Weichkomponente kann aus diesem Grund mit einem Ein-/Ausschalter-Symbol versehen sein.

Der Anspritzpunkt für die erste Weichkomponente des Handkörpers ist vorzugsweise auf der Vorderseite des Handkörpers bzw. Grundkörpers, im Bereich der Schalterpartie. Die erste Weichkomponente deckt vorzugsweise den Anspritzpunkt der Hartkomponente ab bzw. liegt über diesem.

Die zweite Weichkomponente des Handkörpers dient bevorzugt der farblichen Gestaltung der Frontpartie, dem Branding (Aufdruck) und auch der Griffigkeit des Handgriffs. Sie kann neben dem Grundkörper aus Hartkomponente und der ersten Weichkomponente eine weitere Farbe auf den Körper bringen. Der Anspritzpunkt liegt vorzugsweise auf der Vorderseite des Handkörpers bzw. Grundkörpers, unterhalb der Schalterpartie. Die erste Weichkomponente bildet mit einer Zone eine Insel innerhalb der zweiten Weichkomponente.

Die Weichkomponenten sollen generell einen guten Halt bzw. eine nicht-rutschige Oberfläche bereitstellen. Zusätzlich dämpfen die Weichkomponenten die Vibrationen ab.

Im vorderen Teil des Handgriffes sind auf der Vorder- und Rückseite des Gerätes jeweils eine Zone aus Weichmaterial angebracht welche es dem Nutzer erlauben das Gerät wie ein stiftförmiges Schreibgerät zu halten. Mind. eine der Zonen ist vorzugsweise leicht konkav ausgestaltet. Die beiden Zonen sind vorzugsweise aus dem gleichen Weichmaterial in einem Arbeitsschritt gefertigt.

Der Exzenter welcher die Vibrationen erzeugt befindet sich vorzugsweise nicht zwischen den besprochenen Zonen aus Weichmaterial.

Die Länge des Handgriffs beträgt mit montiertem Verschlussdeckel bis zum Ende der Schnittstelle bzw. der steckerartigen Kupplungsstruktur vorzugsweise 130 mm bis 190 mm, besonders bevorzugt 160 mm bis 175 mm; ohne montierten Verschlussdeckel, d.h. in Form des Handteils, bis zum Ende der Schnittstelle bzw. der steckerartigen Kupplungsstruktur von 120 mm bis 170 mm, vorzugsweise von 145 mm bis 151 mm.

Der Handgriff weist bevorzugt eine annährend rundliche Gestaltung im Querschnitt auf, eher höher als breit, d.h. er besitzt üblicherweise eine grössere vertikale Ausdehnung. Weiter ist der Handgriff in Längsrichtung vorzugsweise tailliert. Dabei ist regelmässig das freie Ende (gegenüber der Kupplungsstruktur für das Aufsteckteil) am breitesten. Die Taillierung ist bevorzugt zwischen dem freien Ende und dem Daumengriff bzw. der Schalterpartie vorgesehen. Der Bereich der Schalterpartie bzw. der Übergang zum Hals ist vorzugsweise die zweitbreiteste Stelle. Diese Taillierung erlaubt dem Nutzer ebenfalls das Gerät wie ein stiftartiges Schreibgerät zu halten und dieses entsprechend Präzise zu führen.

Die Breite des Handgriffs beträgt 12 mm bis 25 mm, an der breitesten Stelle bevorzugt 19 bis 23 mm und vorzugsweise 12 bis 15 mm an der schmalsten Stelle.

Die Höhe des Handgriffs beträgt 14 mm bis 30 mm, an der höchsten Stelle vorzugsweise 20 mm bis 25 mm und bevorzugt 15 mm bis 20 mm an der am wenigsten hohen Stelle.

Innerhalb des Handgriffs bzw. des Handteils ist bevorzugt ein Trägerelement angeordnet, welches als Gerüst für das Innenleben des Handgriffs bzw. des Handteils dient.

Bei der Ausführung des Trägerelements wird grundsätzlich zwischen einer wieder aufladbaren Akku Version und einer Einweg Batterie Version unterschieden, welche sich z.T. hinsichtlich ihrer Komponenten deren Anordnung und Eigenschaften unterscheiden.

Bei der Akkuversion wie auch bei der Batterieversion ist aber zunächst ein Elektromotor mit einem Exzenter als Vibrationseinheit vorgesehen, wobei der Elektromotor den Exzenter antreibt beziehungsweise der Exzenter auf der Rotationsachse A_{M} (oder deren Verlängerung) des Elektromotors aufgebracht ist, so dass eine Vibration erzeugt wird (andere Vibrationserzeuger sind denkbar).

Der Elektromotor weist in der Akkuversion bevorzugt eine Spannung (im geladenen Zustand) von etwa 1,2-1.3 V, einen Stromverbrauch mit Exzenter von 50 mA - 600 mA bevorzugt 200-500 mA, sowie eine Drehzahl von 3000 U/min bis 16000 U/min, besonders bevorzugt von 13500 U/min, auf.

Der Elektromotor weist in der Batterieversion bevorzugt eine Spannung von 1,5 V, eine Stromstärke von 50 mA - 600 mA bevorzugt 200-500 mA, sowie bevorzugt eine Drehzahl von 5000 U/min bis 16000 U/min, besonders bevorzugt von 13000 U/min, auf.

Ist das Handteil auf eine Gesichtsbürste ausgerichtet, so ist das Gerät vorzugsweise als Akkuversion gestaltet, eine Batterieversion wird nicht ausgeschlossen. Die Drehzahl beträgt von 5000 U/min bis 16000 U/min, besonders bevorzugt von 9000 U/min bis 11000 U/min.

Ist das Handteil auf eine Anwendung als Nail Tool ausgerichtet, so ist das Gerät vorzugsweise als Batterieversion gestaltet, eine Akkuversion wird nicht ausgeschlossen. Die Drehzahl beträgt von 5000 U/min bis 12000 U/min, besonders bevorzugt von 7500 U/min bis 9000 U/min.

Beide Elektromotor-Versionen weisen vorzugsweise eine zylindrische Form auf sowie eine Länge von 13 mm bis 20 mm, vorzugsweise von 15 mm bis 17 mm und bevorzugt einen Durchmesser von 5 mm bis 10 mm, vorzugsweise von 6 mm bis 7 mm.

Der Exzenter ist vorzugsweise halbzylindrisch bzw. pilzförmig geformt und auf die Elektromotorwelle aufgesteckt. Er weist eine Länge von 2 mm bis 6 mm, vorzugsweise von 3 mm bis 5 mm auf. Sein Durchmesser beträgt 4 mm bis 8 mm, vorzugsweise 5 mm bis 7 mm. Das Gewicht des Exzenters beträgt zwischen 0.5 g und 5 g vorzugsweise zwischen 0.8 g und 1.5 g. Die Elektromotorwelle kann einteilig- oder mehrteilig verlängert sein damit der Exzenter weiter in die Kupplungsstruktur ragt. Der Exzenter kann damit 2 mm - 30 mm vom Elektromotor beanstandet sein. Die Achse kann am freien Ende innerhalb der Kupplungsstruktur gelagert sein.

Der Elektromotor und der Exzenter sind im montierten Zustand im Bereich der steckerförmigen Kupplungsstruktur angeordnet und stellen somit sowohl das vorderste Funktionselement im Innern des Handgriffs / des Handteils als auch auf dem Trägerelement dar.

Der Elektromotor oder zumindest der Exzenter liegt bevorzugt bei der Anwendung vor der Haltestellung des Handgriffs, welche durch Daumen und Zeigefinger definiert wird. Der Daumen liegt dabei im Bereich des Ein-/Ausschalter-Symbols auf und der Zeigefinger liegt auf einer Weichkomponentenfläche der Rückseite auf. Daumen und Zeigefinger können je nach Anwendung auch vertauscht sein. Beide Stellungen erlauben das Gerät wie ein Stiftartiges Schreibgerät zu halten.

Bevorzugt ist die Rotationsachse A_{M} des Elektromotors bzw. die Exzenterachse winklig zur Längsachse des Handgriffs A_{G} angeordnet und bevorzugt auch winklig zum Trägerelement. Dies bedeutet, dass die Einführrichtung R des Trägerelements nicht der Richtung der Rotationsachse des Elektromotors A_{M} entspricht.

Der Elektromotor ist bevorzugt beidseitig vermittels von Klemmelementen am Trägerelement gehalten. Die Klemmelemente sind bevorzugt an den Seitenwänden der Führung nach innen gerichtete Stege, die den Elektromotor oberhalb der Rotationsachse A_{M} festklemmem bzw. in die der Elektromotor eingeschnappt wird. Das vordere Teil des Trägerelements sowie die seitlichen Klemmelemente bzw. -stege weisen vorzugsweise dieselbe Abschrägung gegenüber der Längsachse des Handgriffs A_{G} auf wie die Rotationsachse A_{M} des Elektromotors.

Die Klemmung muss dabei nicht über die gesamte Länge des Elektromotors erfolgen, sie erfolgt vorzugsweise nur im hinteren Teil des Elektromotors, etwa im Bereich des Kabelanschlusses.

In Längsrichtung des Trägerelements sind für den Elektromotor ein vorderer und ggf. auch ein hinterer Motoranschlag vorgesehen, welche bevorzugt jeweils unterhalb der Rotationsachse A_{M} des Elektromotors enden.

Der Exzenter ragt bevorzugt über das Trägerelement bzw. über den vorderen Motoranschlag hinaus, um einen ungestörten Betrieb zu gewährleisten.

Für den Elektromotor ergeben sich, ohne montiertes Aufsteckteil, die folgenden bevorzugten Längen- bzw. Abstandsverhältnisse gegenüber dem Handgriff (d.h. mit aufgebrachtem Verschlussdeckel).

Der Elektromotor (Bezugspunkt ist der Mittelpunkt der Baueinheit Elektromotor/Exzenter) liegt, gemessen vom hinteren Ende des Handgriffs, vorzugsweise bei etwa 75 % bis 90 % der Gesamtlänge, weiter vorzugsweise bei etwa 81 % der Gesamtlänge (die Gesamtlänge bemisst sich vom freien Ende der steckerartigen Kupplungsstruktur bis zum hinteren Ende des Verschlussdeckels).

Entsprechend liegt der Elektromotor, gemessen vom freien Ende der steckerartigen Kupplungsstruktur, vorzugsweise bei etwa 10 % bis 25 % der Gesamtlänge, weiter vorzugsweise bei etwa 19 % der Gesamtlänge.

Der Exzenter selbst (Bezugspunkt ist der Mittelpunkt des Exzenters) liegt, gemessen vom hinteren Ende des Handgriffs, vorzugsweise bei etwa 80 % bis 95 % der Gesamtlänge, weiter vorzugsweise bei etwa 86 % der Gesamtlänge des Handgriffs (die Gesamtlänge bemisst sich vom freien Ende der steckerartigen Kupplungsstruktur bis zum hinteren Ende des Verschlussdeckels).

Entsprechend liegt der Exzenter, gemessen vom freien Ende der steckerartigen Kupplungsstruktur, vorzugsweise bei etwa 5 % bis 20 % der Gesamtlänge des Handgriffs, weiter vorzugsweise bei etwa 14 % der Gesamtlänge des Handgriffs.

Für den Elektromotor ergeben sich, mit montiertem Aufsteckteil, die folgenden bevorzugten Längen- bzw. Abstandsverhältnisse gegenüber dem Handgriff mit Verschlussdeckel und aufgebrachtem Aufsteckteil (z.B. einer Aufsteckbürste).

Der Elektromotor (Bezugspunkt ist der Mittelpunkt der Baueinheit Elektromotor/Exzenter) liegt, gemessen vom hinteren Ende des Handgriffs, vorzugsweise bei etwa 55 % bis 70 % der Gesamtlänge, weiter vorzugsweise bei etwa 62 % der Gesamtlänge (die Gesamtlänge bemisst sich von der Mitte der Arbeitsspitze des Aufsteckteils bis zum hinteren Ende des Handteils).

Entsprechend liegt der Elektromotor, gemessen von der Mitte der Arbeitsspitze des Aufsteckteils, vorzugsweise bei etwa 30 % bis 45 % der Gesamtlänge, weiter vorzugsweise bei etwa 38 % der Gesamtlänge.

Der Exzenter selbst (Bezugspunkt ist der Mittelpunkt des Exzenters) liegt, gemessen vom hinteren Ende des Handgriffs, vorzugsweise bei etwa 60 % bis 75 % der Gesamtlänge, weiter vorzugsweise bei etwa 66 % der Gesamtlänge (die Gesamtlänge bemisst sich von der Mitte der Arbeitsspitze des Aufsteckteils bis zum hinteren Ende des Handteils).

Entsprechend liegt der Exzenter, gemessen von der Mitte der Arbeitsspitze des Aufsteckteils, vorzugsweise bei etwa 25 % bis 40 % der Gesamtlänge des Handgriffs, weiter vorzugsweise bei etwa 34 % der Gesamtlänge des Handgriffs.

Die Ausgestaltung und Anordnung des Schalters ist bei der Akku- und bei der Batterieversion des Trägerelements vorzugsweise gleich.

Der Schalter dient bevorzugt zum Ein- und Ausschalten des jeweiligen Elektrogeräts und allenfalls zur Auswahl eines bestimmten Programms bzw. Betriebsmodus für das jeweilige Elektrogerät. Er ist bevorzugt in einem separaten Kompartiment (Schalterkompartiment) hinter dem Elektromotor auf dem Trägerelement angeordnet.

Der Schalter ist vorzugsweise ein mechanischer Ein-/Ausschalter der mittels Kontaktunterbruch funktioniert; es kann aber auch ein elektrischer Wahlschalter eingesetzt werden (z.B. mit den Modi: Ein - Modus 1 - Modus 2 - Modus X - Aus). Dies wird vorzugsweise mit einem Impulsschalter und einem Mikroprozessor umgesetzt. Der Mikroprozessor definiert dann auch die vordefinierte Programm/Modus Wahl. Möglichkeiten für verschiedene Modi bestehen beispielsweise in reduzierten Geschwindigkeiten (Sensitive), Massage (wechselnde Geschwindigkeit), Pulsieren (Ein-/Ausschalten des Motors mit Unterbrüchen) oder Kombinationen dieser Möglichkeiten.

Die übrigen Komponenten sind so ausgelegt, dass sie mit beiden Schaltervarianten operieren können.

Der Schalter hat vorzugsweise Abmessungen in der Grundfläche von rund 6 mm x 6 mm. Weiter beträgt seine Höhe im Off-Zustand rund 10 mm und im On-Zustand rund 9 mm. Das bedeutet, dass zur Betätigung des Schalters, dieser rund 1 mm bewegt werden muss.

Im montierten Zustand ist der Schalter also im Schalterkompartiment des Trägerelements angeordnet, wobei er auf einer Printplatte fix montiert ist, welche auf der Unterseite des Trägerelements angeordnet bzw. verrastet ist. Die Halterung des Schalters wird über die Halterung der Printplatte sichergestellt. Die Printplatte weist bevorzugt fünf Abgänge für den Schalter auf (doppelter Schalter).

In der Akku-Version speichert der Akku die für den Betrieb des jeweiligen Elektrogeräts notwendige Energie.

Der Akku weist vorzugsweise eine zylindrische Form auf. Er ist 35 mm bis 50 mm lang, vorzugsweise 40 mm bis 45 mm. Sein Durchmesser beträgt 8 mm bis 12 mm, vorzugsweise 10 mm bis 11 mm. Er hat eine Kapazität von 400 mAh bis 1000 mAh, vorzugsweise 700 mAh bis 900 mAh, und eine Spannung von 0,6 bis 1,4 V, vorzugsweise 1,2 V. Die Grösse des Akkus ist bevorzugt AAA. Bei dem Akku handelt es sich vorzugsweise um eine NiMH (nickel-metal hydride battery).

Im montierten Zustand ist der Akku vorzugsweise fest mit der Printplatte verbunden. Die Printplatte wird bevorzugt an der Unterseite des Trägerelements montiert bzw. verrastet. Der Akku wird bevorzugt an der Oberseite des Trägerelements montiert. Die Kontaktbleche bzw. Lötfahnen des Akkus werden durch die Printplatte geführt und anschliessend entsprechend verlötet.

Zur Herstellung einer Verbindung mit einem Stromnetz und zum Laden des Akkus ist bevorzugt am hinteren Ende des Trägerelements eine Buchse vorgesehen, welche durch Abnehmen des Verschlussdeckels freigelegt wird.

Die Buchse ist vorzugsweise eine runde Buchse, deren Grundform ein Zylinder ist. Die Aussenform des Zylinders ist rotationssymmetrisch und erfährt am Buchsenende einen umlaufenden Vorsprung. Die Buchse ist bevorzugt wasserdicht und korrosionsfest, was durch eine geeignete Beschichtung erreicht wird.

Zur Montage wird die Buchse vorzugsweise von hinten her, mit der Rückseite voran, in ein hohlzylinderförmiges Buchsenkompartiment des Trägerelements gepresst, bis die Buchse am vorderen Ende des Buchsenkompartiments (in Einführrichtung R gesehen) an einem entsprechenden umlaufenden Anschlag des Buchsenkompartiments anschlägt, die Rückseite der Buchse schlägt bevorzugt an diesem vorderen Anschlag an, welcher bevorzugt unterhalb der Mittellängsachse der Buchse endet. An der Rückseite der Buchse sind bevorzugt Anschlüsse vorgesehen, über die die Buchse mittels elektrischer Verbindungsleitungen mit der Printplatte verbunden ist. Eine Drehung der Buchse in dem hohlzylindrischen Buchsenkompartiment wird durch Pressung/Reibung (d.h. durch einen Presssitz und einen Reibschluss) unterbunden.

Die Buchse hat einen Durchmesser von 5 mm bis 11 mm, vorzugsweise von 7 mm bis 9 mm, wobei von diesem Erhöhungen/Vorsprünge abgehen. Die Vorsprünge dienen dazu, die Verankerung im Trägerelement zu verbessern, bzw. ein Herausrutschen der Buchse aus dem _Buchsenkompartiment zu verhindern. Ein Vorsprung ist von der Rückseite der Buchse her als Rampe mit anschliessender senkrechter Fläche gestaltet (zum ursprünglichen Buchsendurchmesser abfallend), womit ein Widerhaken gebildet wird. Dieser Vorsprung ist im mittleren Bereich der Buchse gestaltet und hat eine Höhe ab dem Buchsendurchmesser von 0,1 mm bis 0,8 mm vorzugsweise von 0,25 mm bis 0,5 mm. Weiter weist die Buchse bei ihrem Abschluss - der Buchsen-Seite - ebenfalls einen ähnlich gestalteten Vorsprung auf. Dieser hat eine Erhöhung gegenüber dem Buchsendurchmesser von 0,5 mm bis 1,2 mm vorzugsweise von 0.7 mm bis 0.95 mm.

Die Montage der Buchse im Trägerelement bzw. im Buchsenkompartiment passiert mittels Einpressen der Buchse in die Struktur. Dabei wirken die beschriebenen Widerhaken und verhindern ein Ausrutschen der Buchse aus dem Buchsenkompartiment. Das Buchsenkompartiment ist etwas länger gestaltet als die Buchse selbst, sodass diese vorzugsweise 0,2 mm bis 1,5 mm vorzugsweise 0,5 mm bis 1 mm versenkt ist. Somit kann auch der Vorsprung bzw. Widerhaken am buchsenseitigen Ende der Buchse optimal wirken.

In der Standardvariante wird die Verbindung zum Stromnetz so gestaltet, dass ein Stecker in die Buchse eingesteckt wird. Dieser Stecker ist über ein Kabel mit dem Netzgerät verbunden, welches seinerseits wiederum am Stromnetz d.h. an der Steckdose, angeschlossen ist.

In einer Variante wird die Verbindung zum Stromnetz über einen USB-Anschluss (5 V) erreicht. Dazu wird die Verbindung so gestaltet, dass ein Stecker in die Buchse eingesteckt wird. Dieser Stecker ist über ein Kabel mit einem USB-Stecker verbunden, welcher seinerseits wiederum an einem USB-Anschluss, angeschlossen ist. Dieser kann beispielsweise vom PC oder von einem entsprechenden Netzteil, welches am Stromnetz hängt, her kommen. Auf diese Weise wird die Möglichkeit des Ladens via PC geschaffen. Diese Variante kann im Übrigen mit der gleichen Printplatte/mit den gleichen Komponenten realisiert werden.

In einer weiteren Variante ist eine induktive Ladung vorgesehen. Diese weist jedoch einen anderen Aufbau auf. Hier ist der Verschlussdeckel für den Nutzer nicht entfernbar gedacht und neben dem Handgriff wird eine (separate) Ladestation benötigt. Der Verschlussdeckel des Handgriffs weist eine Ausnehmung für den Ferrit-Kern der Ladestation und der Handgriff wird zum Laden auf die Ladestation bzw. deren Ferrit-Kern gestellt.

Im Handteil kann eine oder mehrere LED's untergebracht sein. Durch die Stärke des von den LED herkommenden Lichts kann ohne besondere Ausnehmungen durch das Gehäuse hindurch geleuchtet werden. Dabei kann es allenfalls nötig sein, dass das Gehäuse in dieser Zone eine gewisse maximal Dicke nicht überschreitet.

Die LED's sind vorzugsweise entweder zwischen dem Akku und dem vorderen Anschlag der Buchse oder in direkter Nähe zum Schalter angebracht.

Mittels LED's können verschiedene Ereignisse sichtbar gemacht werden. Merkmale hierbei sind On/Off, Farbe, Blinkintervall. Dargestellt werden können z.B. Timer-Funktionen, Anpressdruck, Akkustand.

In der Elektronik kann ein Mikroprozessor mit einer Timer Funktion integriert sein. Beispielsweise zur Indikation eines Wechsels des Behandlungsfeldes (bei Zahnbürsten Quadranten-Timer, bei der Gesichtsbürste Timer für verschiedene Gesichtszonen), der Indikation der Maximalputzdauer, zum Erstellen einer Auto-Off Funktion welche das Gerät stoppt, weil eine längere Behandlung nicht förderlich wäre.

Der Timer kann beispielsweise über die genannten LED's oder auch über die Motorenleistung indiziert werden.

Falls ein Mikroprozessor verwendet ist wird anstelle des mechanischen Ein-/Ausschalters ein Impulsschalter eingesetzt, welcher einen elektrischen Impuls an den Mikroprozessor sendet.

### Bevorzugtes Trägerelement für Akku-Version

Das Trägerelement weist eine grundsätzlich gerade Konfiguration auf. Am in Einführrichtung R gesehen vorderen Ende befindet sich vorzugsweise das Elektromotor-Kompartiment, welches bevorzugt aufgrund seiner abgeschrägten Bauweise (rampenförmiger Steg mit gerader Unterseite zur schrägen Abstützung des Elektromotors sowie entsprechend abgeschrägte Seitenwände mit gleichermassen schräg angeordneten Klemmelementen (in Form von Stegen) zum Einschnappen des Elektromotors) für die oben beschriebene Neigung des Elektromotors gegenüber der Längsachse des Handgriffs A_{G} sorgt (Winkel β).

Hinter dem Elektromotorkompartiment ist vorzugsweise eine Kabeldurchführung angeordnet (diese ist bei der Akkuversion kürzer als bei der Batterieversion). An die Kabeldurchführung schliesst sich bevorzugt das Schalterkompartiment an (dieses ist bei der Akkuversion länger als bei der Batterieversion, wobei aber der Schalter jeweils im Wesentlichen am selben Ort ist; das bedeutet, dass er relativ zum Handgriff am selben Ort ist, weil er ja durch die Schalterpartie bedient werden muss).

Danach folgt vorzugsweise das Akkukompartiment, an welches sich wiederum eine Kabeldurchführung anschliesst. Hierauf folgt bevorzugt das Buchsenkompartiment. Am Ende des Trägerelements befindet sich das (ebenfalls) hohlzylinderförmige Buchsen-Anschlusskompartiment, welches jedoch einen grösseren Durchmesser aufweist als das Buchsenkompartiment.

Auf der Unterseite des Trägerelements ist die Printplatte angeordnet, welche von einer Printplattenhalterung gehalten wird (vorzugsweise durch Rastnasen an der Unterseite des Trägerelements). Auf der Aussenseite des Buchsen- und Anschlusskompartiments ist ein Kontaktblech, das Trägerelement-Kontaktblech (in Richtung hin zum Verschlussdeckel) vorgesehen. In Einführrichtung R vor, beziehungsweise über, dem Kontaktblech (d.h. dem Trägerelement-Kontaktblech) ist weiter vorzugsweise eine Dichtung (etwa in Form eines Dichtungsrings) vorgesehen.

Ein Unterschied gegenüber der Batterieversion besteht darin, dass bei der Akkuversion die Printplatte länger ausgebildet ist und diese somit eine Art Träger für den Akku bildet.

Die Printplatte fungiert bevorzugt als Verbindungselement mit den verschiedenen elektrischen Komponenten (d.h. den verschiedene Verbindungs- und Kontaktelementen). Ausserdem dient sie als Träger bzw. Halterung für einen gewissen Teil der elektrischen Komponenten, insbesondere für den mechanischen Schalter oder alternativ für den Impulsschalter und Mikroprozessor und weitere für deren Funktion benötige Bauteile.

In der Akkuversion ist weiter vorzugsweise die Printplatte über eines oder mehrere Kabel fest mit Elektromotor verbunden. Der Schalter ist vorzugsweise direkt mit der Printplatte verbunden. Der Akku ist bevorzugt direkt mit der Printplatte verbunden und zwar über Lötfahnen. Die Buchse ist vorzugsweise wiederum über eines oder mehrere Kabel mit der Printplatte verbunden. Des Weiteren ist die Printplatte fest mit dem Trägerelement-Kontaktblech verbunden.

In einer weiteren bevorzugten Ausgestaltung wird die Ladestrombeschränkung über Widerstände auf der Printplatte realisiert (z.B. mittels zweier in Serie angeordneter Widerstände, wobei der Gesamtwiderstand aus thermischen Gründen in zwei serielle Widerstände aufgeteilt ist).

### Bevorzugtes Trägerelement für Batterieversion

Der Elektromotor samt Exzenter sowie der Schalter entsprechen dimensional jenen der Akkuversion.

Die Batterie mittels welcher die zum Betrieb benötigte Energie gespeichert bzw. zur Verfügung gestellt wird, ist regelmässig in Form einer auswechselbare AAA Batterie (1,5 V) bereitgestellt. Die Form der Batterie ist vorzugsweise zylindrisch. Die Batterie ist bevorzugt 42 mm bis 43 mm lang (ohne Polkappe). Der Durchmesser beträgt etwa 10 mm bis 11 mm.

Die Batterie wird bei geöffnetem Verschlussdeckel von hinten in ein Batteriekompartiment des Trägerelements eingeführt. Anschliessend wird der Verschlussdeckel ans Handteil angebracht, durch Drehen des Verschlussdeckels wird dieser einerseits verrastet und andererseits wird der Stromkreis geschlossen.

Im montierten Zustand ist die Batterie indirekt mit der Printplatte verbunden und zwar über ein erstes (vorderes) Kontaktblech, das Batterie-Kontaktblech, am ersten Pol und über ein zweites (hinteres) Kontaktblech, dem Trägerelement-Kontaktblech, zum Verschlussdeckel. Der Stromkreis wird über den Verschlussdeckel geschlossen.

Das Trägerelement-Kontaktblech ist sowohl in der Akkuals auch in der Batterie-Version vorgesehen. In beiden Fällen wird durch dieses Kontaktblech die Stromleitung zwischen der Printplatte und dem Verschlussdeckel hergestellt. Aufgrund der kürzeren Printplatte bei der Batterie-Version ist das Trägerelement-Kontaktblech bei der Batterie-Version entsprechend länger, um den Längenausgleich zu schaffen. Bei der Akku-Version ist das Trägerelement-Kontaktblech entsprechend kürzer.

Das Trägerelement weist vorzugsweise wiederum eine grundsätzlich gerade Konfiguration auf. Am in Einführrichtung R gesehen vorderen Ende befindet sich vorzugsweise das Elektromotorkompartiment, welches bevorzugt aufgrund seiner abgeschrägten Bauweise (rampenförmiger Steg mit gerader Unterseite zur schrägen Abstützung des Elektromotors sowie entsprechend abgeschrägte Seitenwände mit gleichermassen schräg angeordneten Klemmelementen (in Form von Stegen) zum Einschnappen des Elektromotors) für die oben beschriebene Neigung des Elektromotors beziehungsweise der Rotationsachse A_{M} des Elektromotors gegenüber der Längsachse des Handgriffs A_{G} sorgt (Winkel β).

Hinter dem Elektromotorkompartiment ist vorzugsweise wiederum eine Kabeldurchführung angeordnet (diese ist bei der Batterieversion vorzugsweise länger als bei der Akkuversion). An die Kabeldurchführung schliesst sich bevorzugt wiederum das Schalterkompartiment an (dieses ist bei der Batterieversion vorzugsweise kürzer als bei der Akkuversion, wobei aber der Schalter jeweils im Wesentlichen am selben Ort angeordnet ist).

Hinter dem Schalterkompartiment ist ein Kontaktblechkompartiment angeordnet für das erste Kontaktblech, genannt Batterie-Kontaktblech, welches zu einem ersten Batteriepol führt. Die Kontaktzunge bzw. der Kontaktbereich des Batterie-Kontaktblechs ragt entsprechend in das anschliessende Batteriekompartiment hinein.

Im Unterschied zu der Akkuversion ist hier das Trägerelement so gestaltet, dass die Batterie von hinten eingeschoben wird und dann seitlich geführt ist. Der hintere Bereich des Batteriekompartiments ist vorzugsweise hohlzylinderförmig ausgebildet. An ihn schliesst sich ein Anschlusskompartiment an mit etwas grösserem Durchmesser. An der Aussenseite des Anschlusskompartiments muss nicht unbedingt eine Dichtung angeordnet sein, da hier weniger Kontakt mit Spritzwasser zu befürchten ist.

Die Printplatte ist wiederum mittels einer Printplattenhalterung (z.B. Rastnasen) an der Unterseite des Trägerelements gehalten und zwar bevorzugt unterhalb oder zumindest jeweils teilweise unterhalb des Schalter- und Kontaktblechkompartiments. An der Aussenseite des Anschlusskompartiments ist das zweite Kontaktblech, das Trägerelement-Kontaktblech, zum Verschlussdeckel angeordnet.

Die Printplatte dient auch bei der Batterieversion als Verbindungselement der verschiedenen elektrischen Komponenten, d.h. der verschiedenen Verbindungs- und Kontaktelemente, und ausserdem als Träger bzw. Halterung für einen gewissen Teil der elektrischen Komponenten (nicht aber für die Batterie).

Bei der Batterieversion ist die Printplatte vorzugsweise kürzer. Die Printplatte ist des Weiteren (über entsprechende Verbindungskabel) fest mit dem Elektromotor verbunden. Die Printplatte ist zudem vorzugsweise direkt mit dem Schalter, dem Batterie-Kontaktblech sowie dem Trägerelement-Kontaktblech, welches schlussendlich mit dem Verschlussdeckel verbunden wird, verbunden.

Auf dem Trägerelement wird insbesondere ein Längenausgleich geschaffen, damit derselbe Verschlussdeckel für die Akku- und die Batterieversion verwendet werden kann. Entsprechend müssen auch gewisse Komponenten auf dem Trägerelement je nach Ausführungsvariante angepasst werden, um den Längenausgleich zu unterstützen.

### Bevorzugter Verschlussdeckel

Der Verschlussdeckel ist bei der Akku- und bei der Batterieversion identisch. Seine Funktion besteht zum einen im Verschluss des Innenraums. Dies erfolgt durch Einschieben in die hintere Öffnung des Handteils und anschliessendes Drehen, wodurch der Stromkreis durch das Kontaktblech des Verschlussdeckels geschlossen wird. Dabei erfolgt ein entsprechender Kontakt mit dem Trägerelement-Kontaktblech (auf Seite des Trägerelements) zum Verschlussdeckel sowie gleichzeitig mit einem Kontaktpunkt der Buchse (Akkuversion) bzw. mit einem Kontaktpunkt / Batteriepol der Batterie (Batterieversion). Weiter wird durch das Drehen des Verschlussdeckels ein Halten bzw. Fixieren des Verschlussdeckels gegenüber dem Handteil erreicht.

Hierzu weist ein korrespondierendes Kontaktblech des Verschlussdeckels zwei Elemente auf, nämlich einmal einen seitlichen Überstand, zum Fixieren gegenüber dem Handteil und zum Schliessen des Stromkreises sowie andererseits eine Federzunge zum Kontaktieren der Buchse bzw. des Kontaktelements der Buchse oder aber der Batterie sowie zum Schliessen des Stromkreises.

Dieses Kontaktblech des Verschlussdeckels hat eine Länge von 11 mm bis 15 mm vorzugsweise von 12,5 mm bis 13,5 mm, bei einer Blechdicke von 0,2 mm bis 0,5 mm vorzugsweise 0,25 mm bis 0,35 mm. Die Blechbreite ist so gestaltet, dass sie nicht über das ganze Kontaktblech gleich ist, da gewisse Teile breiter sein müssen, um das Halten im Verschlussdeckel sicherzustellen. Dabei beträgt die Breite des Kontaktblechs 2 mm bis 10 mm vorzugsweise 3 mm bis 7 mm.

Das Halten und Fixieren erfolgt vorzugsweise durch das gleiche Kontaktblech, das Kontaktblech des Verschlussdeckels, wie die vorbeschriebene Kontaktierung (Bajonettverschluss).

Der Verschlussdeckel dient des Weiteren zur Abdichtung des Innenraums gegenüber Spritzwasser und bildet im montierten Zustand im hinteren Bereich des Handgriffs einen Teil der äusseren Oberfläche.

Der Verschlussdeckel kann eine zylinderartige Gestaltung mit Ausdehnung in Längsrichtung des Handgriffs aufweisen und/oder einen runden kugligen Abschluss. Weiterhin können etwa Einkerbungen an der Aussenseite des Verschlussdeckels vorgesehen sein, welche etwa den Halt beim Drehen verbessern.

Die Gesamtlänge des Verschlussdeckels beträgt 30 mm bis 40 mm, vorzugsweise 33 mm bis 36 mm. Die Länge der Aussenseite (d.h. des nach Montage aussen liegenden Teils) beträgt 15 mm bis 20 mm, vorzugsweise 17 mm bis 19 mm. Die Länge der Innenseite (d.h. des nach Montage innen liegenden Teils) beträgt 14 mm bis 20 mm, vorzugsweise von 15 bis 17 mm (korrespondierend mit der Einführungslänge).

Der Aussendurchmesser des Verschlussdeckels beträgt 18 mm bis 21 mm. Der Durchmesser der ersten Führung d.h. des ersten Teils des nach Montage innen liegenden Teils beträgt 13 mm bis 17 mm. Der Durchmesser der zweiten Führung d.h. des zweiten Teils des nach Montage innen liegenden Teils beträgt 9 mm bis 12 mm.

### Bevorzugte Montage Trägerelement

Bei der Montage des Innenlebens im Handkörper wird vorzugsweise zunächst das fertig montierte Trägerelement in den Handkörper eingeschoben. Der Einschub erfolgt in Einführrichtung R von hinten in den Handkörper, die Einführrichtung R ist vorzugsweise parallel zur späteren Längsachse Handgriff A_{G}. Bei der Batterieversion wird dann (zusätzlich anschliessend) eine Batterie in das Batteriekompartiment des Trägerelements eingeschoben. Anschliessend wird der Verschlussdeckel auf das hintere Ende des Handteils aufgebracht. Der Handgriff ist dann betriebsbereit.

Eine Verdrehung des Trägerelements innerhalb des Handgriffs wird durch die im Wesentlichen rechteckige bzw. mindestens teilweise rechteckige Geometrie des Trägerelements (im Querschnitt) und geeignete Anschläge verhindert. Am hintersten Umfang des Trägerelements sind bevorzugt nach aussen abstehende Nocken angeordnet, welche gegen die Innenfläche des Handkörpers drücken. Dies bewirkt ein Verklemmen. Zusätzlich drücken die Nocken mindestens teilweise in Weichkomponentenstellen und verklemmen so. Es sind bevorzugt zwei Nocken auf der Vorder- und der Rückseite vorgesehen, das heisst vorzugsweise insgesamt 4 Nocken vorgesehen. Die Nocken stehen in der Höhe, gemessen an ihrer höchsten Stelle, 0,3 mm bis 0,6 mm vorzugsweise 0,4 mm bis 0,5 mm von der Fläche aus der sie kommen, ab. In der Länge bilden sie einen Verlauf, wobei die Höhe linear auf die Fläche aus der sie kommen abnimmt. Die Länge der Nocken (in Richtung der Einführrichtung R) beträgt 0,7 mm bis 1,1 mm vorzugweise 0,8 mm bis 1 mm. Grundsätzlich können diese Nocken auch wieder als Widerhaken bezeichnet werden.

In der Länge kann sich das Trägerelement durch Anschläge positionieren. Einerseits liegt die Oberfläche des Motors im montierten Zustand am Grundkörper des Handkörpers an, andererseits ist am Übergang vom Schalterkompartiment zum jeweils angrenzenden Kompartiment (am der Einführrichtung entgegengesetzten Ende) ein Übergang im Querschnitt, welcher ebenfalls als Anschlag wirkt. Dieser Übergang ist seitlich links und rechts gestaltet und wirkt nur da und nicht über den ganzen Umfang.

Weiter wird in der Akku-Version eine Klemmung unterhalb des Akkus auf dem Trägerelement erreicht. Auf dem Trägerelement sind Vorsprünge gebildet, die sich gegenüber dem Grundkörper des Handkörpers verklemmen.

### Bevorzugte Montage Verschlussdeckel

Zur Montage wird der Verschlussdeckel vorzugsweise in die (hintere) Öffnung des Handteils eingeführt und gedreht (d.h. um den Stromkreislauf zu schliessen).

Die Einführlänge beträgt etwa 14 mm bis 20 mm, vorzugsweise 15 mm bis 17 mm. Die Drehung des Verschlussdeckels liegt zwischen 30° und 60°, vorzugsweise zwischen 40° und 50°.

Vorzugsweise wirkt dabei eine hintere Anschlagfläche am Grundkörper des Handkörpers mit einer Anschlagschulter am Verschlussdeckel zusammen. Die Anschlagschulter am Verschlussdeckel bildet sich vorzugsweise am Übergang von der Aussenseite zur Innenseite, das heisst am Übergang vom im montierten Zustand aussen liegenden Teil des Verschlussdeckels zum innen liegenden Teil des Verschlussdeckels.

Die im Wesentlichen zylindrische Öffnung im Grundkörper des Handkörpers dient als Einführungs- und Dichtgegenstück für den Verschlussdeckel.

Der Verschlussdeckel seinerseits besteht bevorzugt aus einem zylindrischen Teil mit eingelassener Nut, welche mit einer Dichtung versehen ist.

Des Weiteren wirkt vorzugsweise eine Anschlagschulter am hinteren Endes des Trägerelements (d.h. innerhalb des Handkörpers) mit einer weiteren Anschlagschulter im Verschlussdeckel zusammen. Diese Anschlagschulter ist am eingeführten Ende des Verschlussdeckels ausgebildet.

Der hinterste zylindrische Teil des Trägerelements weist Längsausnehmungen auf, in welche das Kontaktblech des Verschlussdeckels eingeführt wird (d.h. zur Realisierung des Bajonettverschlusses).

Die Längsausnehmungen des Trägerelements setzen sich in seitliche Öffnungen fort, in welcher das Trägerelement-Kontaktblech eingesetzt ist. Bei einer Drehung des Verschlussdeckels wird dann der Kontakt zwischen dem Kontaktblech des Verschlussdeckels und dem Trägerelement-Kontaktblech hergestellt und so der Stromkreis geschlossen.

Die Energieversorgung der Funktionselemente im Handgriff passiert wie beschrieben über einen wiederaufladbaren Akku oder über eine auswechselbare Batterie.

Bei der Lösung mit wiederaufladbarem Akku ist das Vorgehen zum Laden des Akkus wie folgt gestaltet. Vom entladenen oder teilweise entladenen Gerät wird durch Drehen und anschliessendes Ziehen der Verschlussdeckel entfernt. Anschliessend wird die Verbindung eines mit dem Stromnetz verbundenen Netzteils durch Einstecken des Steckers des Netzteils in die Buchse des Handteils erreicht. Somit findet im Anschluss das Laden statt. Nach dem Laden wird der Stecker entfernt, der Verschlussdeckel wieder angebracht und das Gerät bzw. der Handgriff ist wieder funktionsbereit.

Die Lösung mit Batterie ist etwas anders gestaltet. Bei leerer oder ungenügend geladener Batterie wird der Verschlussdeckel ebenfalls entfernt. Anschliessend wird die leere Batterie entnommen und durch eine andere Batterie ersetzt. Der Verschlussdeckel wird wieder angebracht und das Gerät bzw. der Handgriff ist wieder funktionsbereit.

### Bevorzugte Ausgestaltung steckerförmige Kupplungsstruktur (Schnittstelle Handgriff)

Der handgriffseitige Teil der erfindungsgemässen Schnittstelle (d.h. die steckerförmige Kupplungsstruktur) weist bevorzugt drei Stufen auf. Diese drei Stufen sind längs aufeinander folgend angeordnet. Sie weisen, zumindest in den Umfangsbereichen, jeweils klar abgegrenzte Übergänge bzw. Sprünge auf. Die Längsachse der steckerförmigen Kupplungsstruktur A_{K} verläuft bevorzugt parallel zur Längsachse des Handgriffs A_{G}. Es ist grundsätzlich aber auch Ausführungsformen denkbar, bei denen die beiden Achsen kollinear sind.

Die erste Stufe der steckerförmigen Kupplungsstruktur weist vorzugsweise einen im Längs-Querschnitt rampenförmigen Einfädelverlauf auf. Die zweite und dritte Stufe sind hinsichtlich ihres Durchmessers vorzugsweise jeweils im Wesentlichen konstant, das heisst innerhalb der jeweiligen Stufe gibt es keine Durchmesserveränderung. Die einzelnen Stufen sind allerdings nicht immer rund oder annähernd rund.

Die steckerförmige Kupplungsstruktur weist in den verschiedenen Stufen jeweils eine spezifische Geometrie auf. Allerdings setzen sich einige geometrische Merkmale über verschiedene Stufen fort, was weiter unten im Detail erläutert wird.

Die Länge der steckerförmigen Kupplungsstruktur, gemessen vom freien Ende bis zum Ansatzpunkt des Nockens, beträgt 20 mmm bis 40 mm, vorzugsweise 27 mm bis 33 mm.

Das Aufstecken bzw. Einfahren eines Aufsteckteils auf die erfindungsgemässe steckerförmige Kupplungsstruktur kann nur in einer Position erfolgen. Mit anderen Worten, ein Aufsteckteil kann nicht falsch bzw. verkehrt herum aufgesteckt werden.

Die Geometrie der ersten Stufe mit vorzugsweise zwei im Wesentlichen runden bzw. kreisförmigen Teilelementen verhindert bereits das falsche bzw. verkehrte Einfahren in ein Aufsteckteil. Die zwei Teilelemente weisen dabei verschiedene Durchmesser auf. Zwischen den beiden Teilelementen ist seitlich jeweils eine Nut angeordnet, so dass ich in der Frontalansicht eine einer 8-förmigen Gestalt ähnliche Gestalt für die erste Stufe ergibt.

Die Durchmessermässige Anordnung der einzelnen Stufen ist im Übrigen vorzugsweise nicht konzentrisch,
Die Anordnung entspricht (näherungsweise) drei Zylindern, die in etwa auf einer Fläche aufliegen. Im Querschnitt betrachtet ergibt sich dabei folgendes Bild:
Der Mittelpunkt der nächstfolgenden Stufe liegt jeweils höher als der Mittelpunkt der vorangegangenen Stufe (gesehen vom freien Ende her, d.h. von Stufe 1 über Stufe 2 zu Stufe 3). Die einzelnen Stufen sind also eher "nach unten" bzw. zur Rückseite des Handteils hin ausgerichtet. Allerdings sind ihre Unterseiten nicht ganz auf einer Linie, es besteht vorzugsweise vielmehr eine minimale Abstufung zwischen den einzelnen Stufen.

Bevorzugt steht die Unterseite der zweiten Stufe dabei etwas über die Unterseite der ersten Stufe hervor und die Unterseite der dritten Stufe steht etwas über die Unterseite der zweiten Stufe hervor.

### Bevorzugte Ausgestaltung erste Stufe

Die erste Stufe befindet sich, wie bereits erwähnt, am freien Ende der steckerartigen Kupplungsstruktur; sie stellt mithin auch die erste Stufe bei einem Einführen in das gegengleiche Aufsteckteil dar.

Die erste Stufe weist vorzugsweise zunächst eine Längsführung in Form von zwei seitlichen Nuten auf, welche die Übergänge zwischen den beiden Teilelementen darstellen, so dass ich in der Frontalansicht eine einer 8-förmigen Gestalt ähnliche Gestalt für die erste Stufe ergibt.

Die beiden Teilelemente weisen vorzugsweise verschiedene Durchmesser auf, wobei vorzugsweise das obere Teilelement der ersten Stufe einen grösseren Durchmesser aufweist als das untere Teilelement. Der Durchmesser der Teilelemente bleibt bevorzugt über die gesamte erste Stufe im Wesentlichen konstant. Wohingegen die Querschnittsfläche bevorzugt vom freien Ende her bis fast zum Ende der ersten Stufe zunimmt (und nur für einen kurzen Übergangsbereich zur zweiten Stufe hin konstant bleibt).

Das obere Teilelement definiert daher, in Längsrichtung gesehen zusammen mit der Einführschräge, eine rampenartige Form (d.h. für sich selbst wie auch für die erste Stufe insgesamt).

Als weitere Komponente der Längsführung ist in der Oberseite des oberen Teilelements (vorzugsweise in dessen hinterer Hälfte, in Längsrichtung gesehen) eine vorzugweise eckige Nut ausgebildet. Aufgrund der rampenartigen Form des oberen Teilelements ist diese Nut nicht überall gleich tief. Die Tiefe nimmt in Richtung der zweiten Stufe zu und bleibt bevorzugt für einen kurzen Übergangsbereich zur zweiten Stufe konstant. Dabei ist der Boden der Nut verglichen mit der Längsachse A_{G} des Handgriffs über die ganze Länge jeweils im gleichen Abstand. Die Tiefenveränderung entsteht durch die Bildung der Einführschräge.

Weiter kann als Komponente der Längsführung auf der Oberseite des oberen Teilelements d.h. auf der rampenartigen Form ein weiteres Stabilisierungselement in Form einer im Wesentlichen rechteckigen Erhöhung integriert sein. Diese kann dem Ausgleich von Toleranzen dienen und die Klemmung im Aufsteckteil verbessern. Die Form ist so gestaltet, dass die Erhöhung in Richtung vom freien Ende weg auslaufend gestaltet ist. Die rechteckige Erhöhung hat eine Breite von 1.5 mm bis 4 mm vorzugsweise von 2 mm bis 3 mm und eine Länge von 3 mm bis 8 mm vorzugsweise von 4 mm bis 5 mm. Die Höhe des Elements beträgt zwischen 0.1 mm und 2 mm vorzugsweise zwischen 0.2 mm und 1 mm.

Auf der Unterseite der ersten Stufe bzw. auf der Unterseite des unteren Teilelements ist eine weitere Nut der Längsführung vorgesehen, welche gleichbleibend zumindest über die gesamte erste Stufe verläuft. Diese untere Nut weist vorzugsweise eine runde Form auf.

Die erste Stufe stellt mithin eine Einführschräge bereit, welche sich bevorzugt aber nicht über die gesamte erste Stufe erstreckt. In einem kurzen Übergangsbereich zur zweiten Stufe ist, wie vorstehend bereits erläutert, eine flache Partie vorgesehen. Auf diese Weise ergibt sich die in der Frontalansicht im Wesentlichen 8-förmige Gestalt der ersten Stufe. Der Querschnitt der ersten Stufe (d.h. in Frontalansicht) ist bevorzugt spiegelbildlich, also auf der linken und der rechten Seite in Längsrichtung des Griffs gespiegelt.

Der Durchmesser des oberen Teilelements beträgt 3 mm bis 6 mm, vorzugsweise von 4 mm bis 5 mm. Der Durchmesser des unteren Teilelements beträgt 2 mm bis 5 mm, vorzugsweise 3 mm bis 4 mm. Der Abstand der Kreismittelpunkte beträgt 2 mm bis 4 mm, vorzugsweise 2,5 mm bis 3 mm.

Die Länge der ersten Stufe beträgt 8 mm bis 20 mm, vorzugsweise 10 mm bis 15 mm. Die Höhe der ersten Stufe - am freien Ende - beträgt 2 mm bis 4 mm, vorzugsweise 2,5 mm bis 3,5 mm, sowie - gegen das Handgriff - 4 mm bis 8 mm, vorzugsweise 5 mm bis 7 mm.

Die Breite der ersten Stufe beträgt - am freien Ende - 2 mm bis 4 mm, vorzugsweise von 2,5 mm bis 3,5 mm, sowie - gegen das Handgriff - 3 mm bis 6 mm, vorzugsweise von 4 mm bis 5 mm.

Zu den geometrischen Elementen, welche sich zwischen der ersten und zweiten Stufe fortsetzen gehört vorzugsweise einmal die Nut auf der Oberseite. Sie dient im Zusammenwirken mit einem Aufsteckteil in erster Linie zur Sicherstellung der korrekten Einführung. Vorzugsweise ist zwischen einem korrespondierenden Kamm des Aufsteckteils und der Nut eine relativ grosse Toleranz vorgesehen.

Auch die Nut auf der Unterseite setzt sich vorzugsweise zwischen der ersten und zweiten Stufe fort. Sie unterstützt die korrekte Führung des Aufsteckteils. Beide sich fortsetzenden Nuten wirken ggf. auch in der Art einer Verdrehsicherung.

### Bevorzugte Ausgestaltung zweite Stufe

Die zweite Stufe der steckerartigen Kupplungsstruktur ist zwischen der ersten und der dritten Stufe angeordnet.

Sie weist vorzugsweise eine im Wesentlichen runde Grundform in Gestalt eines zumindest annähernd geraden Zylinders auf. Sie sorgt in erster Linie für eine Längsführung des entsprechenden Aufsteckteils.

Die zweite Stufe weist eine Nut an ihrer Oberseite auf, welche, wie oben beschrieben, sich von der ersten Stufe her fortgesetzt hat. Die Nut erstreckt sich bevorzugt auch über die volle Länge der zweiten Stufe, d.h. bis zum Übergang der zweiten auf die dritte Stufe. Der Abschluss der Nut bildet eine Art Anschlag. Die Nut weist eine Tiefe zwischen 1 mm und 3,5 mm, vorzugsweise zwischen 2 mm und 3 mm auf. Die Nut korrespondiert mit einem entsprechenden runden Kamm auf der Unterseite des Innenraums des entsprechenden Aufsteckteils.

Die zweite Stufe weist auch auf ihrer Unterseite eine Nut auf, welche sich von der ersten Stufe her fortsetzt. Auch diese Nut erstreckt sich über die volle Länge der zweiten Stufe. Ihre Tiefe beträgt zwischen 0,2 mm und 1,2 mm, vorzugsweise zwischen 0,5 mm und 0,9 mm.

Die zweite Stufe weist vorzugsweise des Weiteren an ihrem äusseren Umfang mehrere flache Ausnehmungen auf, welche insbesondere als Entlüftungselemente fungieren. Sie sollen die Luft im Hohlraum abführen, wenn das Aufsteckteil auf die steckerartige Kupplungsstruktur aufgesteckt wird. Diese flachen Ausnehmungen erstrecken sich bevorzugt ebenfalls über die gesamte Länge der zweiten Stufe.

Vorzugsweise sind zwei umfängliche Ausnehmungen auf der linken und, bevorzugt spiegelbildlich, zwei Ausnehmungen auf der rechten Seite der zweiten Stufe angeordnet. Es können aber auch mehr oder weniger Ausnehmungen in gleichmässiger Beabstandung vorgesehen werden.

Der Breite nach nehmen die Ausnehmungen in Richtung der dritten Stufe vorzugsweise leicht ab, etwa in der Art einer Einlaufschräge.

Zwischen den Ausnehmungen bilden sich entsprechende umfängliche Vorsprünge aus.

Die Tiefe der Ausnehmungen nimmt vorzugsweise ebenfalls in Richtung der dritten Stufe leicht ab.

Die Breite der Ausnehmungen liegt zwischen 1,1 mm und 2,1 mm, vorzugsweise zwischen 1,35 mm und 1,55 mm.

Alle vier Ausnehmungen sind bevorzugt der Länge nach identisch (auslaufend auf den Aussenradius der zweiten Stufe) .

Die Tiefe der Ausnehmungen liegt zwischen 0,1 mm und 0,6 mm, vorzugsweise zwischen 0,2 mm und 0,4 mm.

Die Querschnittsform der zweiten Stufe ist allgemein rundlich. Am vorderen bzw. freien Ende der zweiten Stufe beginnt der Querschnitt mit einer Fase, d.h. einer leicht konischen Abschrägung oder einer Abrundung. Die Länge der Fase beträgt vorzugsweise etwa 2 mm.

Die Länge der zweiten Stufe beträgt 2 mm bis 8 mm, vorzugsweise 4 mm bis 6 mm. Der Durchmesser der zweiten Stufe beträgt 5 mm bis 10 mm, vorzugsweise von 6,5 mm bis 8,5 mm.

### Bevorzugte Ausgestaltung dritte Stufe

Die sich an die zweite Stufe anschliessende dritte Stufe der steckerartigen Kupplungsstruktur bildet die hinterste Stufe der Kupplungsstruktur und grenzt schliesslich an den eigentlichen Haltebereich im Handgriff selbst an.

Die dritte Stufe hat im Gegensatz zu den vorher genannten Stufen grundsätzlich keine geometrischen Elemente, die sich von einer vorherigen Stufe fortsetzen.

Die dritte Stufe weist eine generell runde Grundform auf, vorzugsweise in Gestalt eines geraden Zylinders, was wiederum für eine Längsführung sorgt. Die dritte Stufe weist allerdings einen schrägen Abschluss (d.h. mit dem Handgriff) auf. Da der Durchmesser des Handgriffs im Bereich des schrägen Abschlusses der dritten Stufe grösser ist als der Durchmesser der dritten Stufe (bzw. des vorgenannten Zylinders) wird eine schräge Anschlagfläche für ein entsprechendes Aufsteckteil gebildet. Die Anschlagfläche ist in der Seitenansicht als Linie sichtbar.

Auf der Unterseite der dritten Stufe ist vorzugsweise ein Nocken aufgesetzt (d.h. die Höhe des Nockens wird grundsätzlich von der Aussenseite der dritten Stufe und der Aussenseite des Handteils ausserhalb der steckerartigen Kupplungsstruktur bestimmt).

Die Anschlagfläche steht in einem Winkel α von 30° bis 70°, vorzugsweise von 45° bis 55° zur Längsachse des Handgriffs A_{G} beziehungsweise zur Längsachse der steckerartigen Kupplungsstrukur A_{K}. Die dritte Stufe - und mit ihr die gesamte steckerartige Kupplungsstruktur (d.h. der handgriffseitige Teil der Schnittstelle) ist somit auf der Rückseite länger ausgebildet als auf der Vorderseite.

Auch die dritte Stufe weist an ihrer Aussenseite mehrere umfängliche Ausnehmungen (mit entsprechenden umfänglichen Vorsprüngen dazwischen) auf, welche wiederum als Entlüftungselemente (analog jener der zweiten Stufe) fungieren. Vorzugsweise sind wiederum zwei solcher Ausnehmungen (bzw. Vorsprünge) auf der rechten Seite und zwei Ausnehmungen auf der linken Seite der dritten Stufe ausgebildet.

Vorzugsweise sind die Ausnehmungen (bzw. Vorsprünge) dabei spiegelbildlich (und besonders bevorzugt um 90° zueinander verschoben) angeordnet. Bevorzugt sind diese Ausnehmungen (bzw. Vorsprünge) zudem (in Umfangsrichtung) versetzt zu den Ausnehmungen (bzw. Vorsprüngen) der zweiten Stufe angeordnet. Die Ausnehmungen (bzw. Vorsprünge) erstrecken sich jeweils im Wesentlichen über die gesamte Länge der dritten Stufe.

In der Breite nehmen die Ausnehmungen wiederum ab, in der Art einer Einlaufschräge.

Die Tiefe der Ausnehmungen ist ebenfalls abnehmend bzw. in Richtung des Handgriffs auslaufend gestaltet. Die Tiefe beträgt 0,2 mm bis ca. 0,8 mm, vorzugsweise 0,35 mm bis 0,6 mm (im Auslauf, d.h. dicht an der Anschlagfläche ggf. 0 mm).

Die Breite der Ausnehmungen liegt zwischen 1,8 mm und 2,8 mm, vorzugsweise 2 mm bis 2,3mm.

Die Länge der Ausnehmungen ist aufgrund der schrägen Anschlagfläche unterschiedlich. Je zwei Ausnehmungen sind dabei gleich, wobei die unteren beiden länger sind als die oberen beiden.

Die Querschnittsform ist im Wesentlichen rundlich bzw. im Wesentlichen kreisrund.

Die Länge der dritten Stufe beträgt an der Oberseite 2 mm bis 7 mm, vorzugsweise 3 mm bis 5 mm. Die Länge der dritten Stufe an der Unterseite beträgt 8 mm bis 17 mm, vorzugsweise von 10 mm bis 15 mm. Der Durchmesser der dritten Stufe liegt vorzugsweise zwischen 7 mm und 14 mm, vorzugsweise zwischen 9 mm und 11 mm.

Die Ausgestaltung der dritten Stufe ist generell so, dass ein bündiger Abschluss mit der Aussenseite des Aufsteckteils, das heisst zwischen Handgriff und Aufsteckteil, ermöglicht wird. Auf diese Weise wird eine kontinuierliche Oberfläche der Aussenhülle erreicht. Die dritte Stufe dient des Weiteren auch als Auflagefläche zum Aufnehmen von Kräften über die Anschlagfläche.

Der Elektromotor ist vorzugsweise gegenüber der steckerartigen Kupplungsstruktur so positioniert, dass der Exzenter, im Längsschnitt gesehen, in die dritte Stufe hineinragt. Vorzugsweise ragt auch der Elektromotor, jedenfalls teilweise, in den Bereich der dritten Stufe hinein.

Dies ist bedingt durch die schräge Ausgestaltung der dritten Stufe (Rück- bzw. Unterseite mit dem Nocken länger als die Vorder- bzw. Oberseite).

Die Vibrationen werden also vor allem im Bereich des Nockens bzw. der Schnappverbindung mit dem Aufsteckteil erzeugt (d.h. der Exzenter liegt bevorzugt in diesem Bereich).

Durch die Anbringung des Motors im Bereich der Schnittstelle ergeben sich signifikante Vorteile bei der Schwingungsübertragung. Besonders ausgeprägt ergeben sich diese Vorteile dann, wenn die Anschlagfläche des Handgriffs und die, gegenüber der Längsachse des Handgriffs A_{G} geneigte, Rotationsachse A_{M} des Elektromotors einen Winkel φ zwischen 35° und 90° vorzugsweise zwischen 50° und 70° einschliessen.

Das Zusammenspiel der vorgenannten geometrischen Elemente auf dem Handgriff mit den korrespondierenden Elementen auf Aufsteckbürste ergibt folgende Vorteile: Es wird eine schräge Anschlagfläche einer geraden Einführkontur und -richtung R gegenübergestellt.

Auf diese Weise kann der auftretende Anpressdruck bzw. die sich aus der Anwendung ergebende Kraft optimal aufgefangen werden. Dies beruht im Wesentlichen darauf, dass die Kontaktfläche (d.h. gegenüber einer "geraden" zylindrischen Struktur) grösser ist. Dies bringt eine bessere Übertragung beziehungsweise einen flächenmässig verteilteren Kontakt mit weniger Druck.

Des Weiteren wird so das Aufsteckteil in der Anwendung auf der Vorderseite (z.B. der Anwendung als Zahnbürsten-Aufsteckteil) in die Schnappung hinein gedrückt, d.h. die Kraft aus der Anwendung schliesst den Verbindungsmechanismus. Dies ergibt eine sichere Verbindung und verhindert ein Lösen bzw. Wegreissen des Aufsteckteils von der Schnappung weg.

Zudem bewirkt eine derart vergrösserte Kontaktfläche zwischen dem Aufsteckteil und dem Handgriff eine deutlich bessere Vibrationsübertragung.

Für die erfindungsgemäss vorgesehene Verdrehsicherung befinden sich zumindest auf der ersten und zweiten Stufe entsprechende Elemente, was ein ungewolltes Verdrehen oder Verkanten praktisch unmöglich macht. Die Elemente der Verdrehsicherung werden weiterhin bevorzugt zumindest teilweise mit Elementen für eine Einführ- bzw. Einfädelhilfe sowie ggf. einer Längsführung kombiniert.

Dabei wirken auch die Übergänge zwischen den Stufen als Verdrehsicherung, da die Querschnitte jeweils nicht konzentrisch angeordnet sind.

Der im Wesentlichen 8-förmige Querschnitt der ersten Stufe (d.h. den beiden Teilelementen mit unterschiedlichem Radius) zusammen mit den Nuten an der Ober- und Unterseite bewirkt, dass ein korrespondierendes Aufsteckteil nur in einer Position aufgesteckt werden kann.

Im Längsschnitt gesehen wird jedenfalls die dritte Stufe der steckerartigen Kupplungsstruktur zumindest teilweise von einer Weichkomponente (z.B. TPE) des Handkörpers überlappt. Der Querschnitt besteht also zumindest zum Teil aus Weichkomponente. Vorzugsweise besteht der Querschnitt jedoch nicht nur aus Weichkomponente, sondern aus einer Kombination aus Hart- und Weichkomponenten.

Die Weichkomponente ist dabei vorzugsweise zumindest auf der Vorderseite des Handgriffs angeordnet. Dies bringt insbesondere bei Kosmetikanwendungen Vorteile, da der Handgriff in diesen Anwendungen nicht identisch wie bei Zahnbürstenanwendung gehalten wird.

In noch weiterer Ausgestaltung der Erfindung ist umfasst:
Aufsteckteil für ein Elektrogerät für die Zahnreinigung, welches auf einen Handgriff aufbringbar ist, wobei das Aufsteckteil einen Basisbereich und einen Kopfbereich aufweist, welche durch ein Halsbereich verbunden sind, wobei das Aufsteckteil eine buchsenartige Kupplungsstruktur umfasst, welche zumindest zwei Stufen mit unterschiedlicher Umfangsgeometrie aufweist und welche den aufsteckteilseitigen Teil für eine Schnittstelle mit einer gegengleichen, steckerartigen Kupplungsstruktur eines Handgriffs bildet.

Das erfindungsgemässe Aufsteckteil umfasst also einen Basisbereich und Kopfbereich, welche durch einen Halsbereich verbunden sind. Bevorzugt umfassen der Basisbereich und ggf. ein Teil des Halsbereichs dabei die buchsenartige Kupplungsstruktur, also den aufsteckteilseitigen Teil der Schnittstelle.

Diese ist für alle Anwendungsfälle bzw. Ausführungsformen der erfindungsgemässen Aufsteckteile gleich ausgebildet (d.h. im Wesentlichen gegengleich zur steckerartigen Kupplungsstruktur des Handgriffs).

Die buchsenartige Kupplungsstruktur ist an der Innenseite der Aufsteckteile ausgebildet und vorzugsweise in drei Stufen unterteilt, nämlich eine erste Stufe (das Pendant zur dritten Stufe des Handgriffs), eine zweite Stufe (das Pendant zur zweiten Stufe des Handgriffs) sowie eine dritte Stufe (das Pendant zur ersten Stufe des Handgriffs). Von der schrägen Anschlagfläche des Aufsteckteils ausgehend wird vorzugsweise die Ausnehmung für den Nocken des Handgriffs ausgebildet.

Die erste Stufe umfasst umfängliche Aussparungen sowie umfängliche Vorsprünge. Die Aussparungen und Vorsprünge sind vorzugsweise symmetrisch zueinander ausgebildet, wobei die Vorsprünge der ersten Stufe des Aufsteckteils bevorzugt mit den entsprechenden umfänglichen Vorsprüngen der dritten Stufe des Handgriffs in Anlage gelangen. Demgemäss liegen die entsprechenden Aussparungen des Aufsteckteils mit den Aussparungen des Handteils ebenfalls direkt beieinander und bilden zwischen sich einen Hohlraum.

Insoweit ist bei der ersten Stufe der buchsenartigen Kupplungsstruktur und der dritten Stufe der steckerartigen Kupplungsstruktur keine (vollständige) Gegengleichheit gegeben.

Gleiches gilt auch im Hinblick auf die zweite Stufe der buchsenartigen Kupplungsstruktur, welche wiederum vorzugsweise umfängliche Aussparungen sowie umfängliche Vorsprünge aufweist, wobei die umfänglichen Vorsprünge dieser zweiten Stufe bevorzugt in Anlage gelangen mit den umfänglichen Vorsprüngen der zweiten Stufe der steckerartigen Kupplungsstruktur des Handgriffs. Demgemäss liegen auch hier die entsprechenden Aussparungen des Aufsteckteils mit den Aussparungen des Handteils ebenfalls direkt beieinander und bilden zwischen sich einen Hohlraum.

Die zwischen den Aussparungen gebildeten Hohlräume dienen dazu, die Luft abzuleiten, wenn das Aufsteckteil auf das Handteil bzw. die buchsenartige Kupplungsstruktur auf die steckerartige Kupplungsstruktur aufgebracht wird.

Die zweite Stufe der buchsenartigen Kupplungsstruktur weist vorzugsweise an der Oberseite einen eckigen Kamm auf, welcher bevorzugt in seiner Ausgestaltung mit der eckigen Nut der steckerartigen Kupplungsstruktur korrespondiert. Der eckige Kamm setzt sich bevorzugt von der zweiten Stufe bis zur dritten Stufe der buchsenartigen Kupplungsstruktur fort, so dass er vollständig in Eingriff mit der eckigen Nut gelangt.

Auf der Unterseite der zweiten Stufe der buchsenartigen Kupplungsstruktur ist vorzugsweise ein runder Kamm angeordnet, welcher bevorzugt mit der runden Nut an der Unterseite des unteren Teilelements der ersten und zweiten Stufe der steckerartigen Kupplungsstruktur korrespondiert. Auch der runde Kamm setzt sich bevorzugt über die dritte Stufe der buchsenartigen Kupplungsstruktur hinweg fort.

Der runde Kamm dient einerseits ebenfalls als Führungsstruktur, weiter kann dieser aber auch einen technischen Einfluss haben. Durch den runden Kamm wird nämlich bei dünnwandigen Teilen oder bei relativ dünnwandigen Teilen, wie beispielsweise bei Austeckteilen, eine grössere Festigkeit erreicht.

Die dritte Stufe der buchsenartigen Kupplungsstruktur weist vorzugsweise eine achtförmige Öffnung auf, an deren Seiten bevorzugt jeweils eine spitz zulaufende Rippe ausgebildet ist. Die spitz zulaufenden Rippen korrespondieren bevorzugt mit den beiden Nuten zwischen dem oberen Teilelement und dem unteren Teilelement der ersten Stufe der steckerartigen Kupplungsstruktur bzw. gelangen mit diesen in Eingriff.

Die Kupplungsstruktur kann auch Kupplungselemente oder Zonen aus Weichmaterial enthalten. Diese können einen gewissen Vorspann innerhalb der Kupplung bewirken. Das Weichmaterial kann aufsteckteil- und/oder handteilseitig vorgesehen sein.

Der Halsbereich des erfindungsgemässen Aufsteckteils kann je nach Art der Anwendung unterschiedlich ausgestaltet sein (d.h. etwa hinsichtlich der Länge, des Winkels etc.) - nicht aber hinsichtlich des Schnittstellenteils.

Die Längsachse des Aufsteckteils A_{A} bezeichnet die Längsachse der buchsenartigen Kupplungsstruktur. Diese Längsachse liegt im Basisbereich des Aufsteckteils. Die Längsachse des Kopfbereichs A_{B} liegt entsprechend im Kopfbereich. Der zwischen A_{A} und A_{B} liegende Winkel wird mit Δ bezeichnet.

Der Winkel Δ beträgt in der Regel zwischen 10° und 30°, besonders bevorzugt zwischen 15° und 25°.

Der Kopfbereich des erfindungsgemässen Aufsteckteils ist grundsätzlich für jede Anwendungsart unterschiedlich gestaltet.

Das Aufsteckteil kann ebenfalls über Zonen aus Weichmaterial verfügen. Diese Zonen können die Haptik vereinfachen, Vibrationen dämpfen oder Anzeigen wo das Aufsteckteil gehalten wird (zum Beispiel zum Aufstecken oder Entfernen vom Handteil).

Die Toleranzen des erfindungsgemässen Aufsteckteils (d.h. insbesondere des Basisbereichs) gegenüber dem Handgriff liegen zwischen 0 mm und 0,4 mm, vorzugsweise zwischen 0, 15 mm und 0,25 mm.

Das Aufsteckteil weist zumindest für gewisse Zahnreinigungsanwendungen bevorzugt Griffmulden auf, welche zur Verbesserung des Halts dienen. Diese Griffmulden können über Zonen aus Weichmaterial verfügen.

Die Griffmulden können auf einer auf oder mehreren Seiten ausgebildet sein (z.B. immer gegenüberliegend am Aufsteckteil; immer gegenüberliegend einem Funktionselement bzw. der Anwendungsseite), jeweils abhängig von der Position/Anordnung der Funktionselemente des Kopfbereichs.

Die Griffmulden sind vorzugsweise als Vertiefungen mit rundlicher bzw. ovaler Form ausgebildet (Fingermulden). Weiter vorzugsweise sind die Griffmulden auch mit einer Struktur versehen (z.B. mit Noppen oder Lamellen), welche aus Hart- und/oder Weichkomponente bestehen kann. Insgesamt kann die Griffmulde mitsamt ihrer Struktur aus Hart- und/oder Weichkomponente bestehen.

Des Weiteren ist es möglich auf die eigentliche Mulde zu verzichten und nur eine Struktur zu realisieren, welche den Halt verbessert. Die Struktur kann beispielsweise Noppen, Lamellen, etc. als Grundelement enthalten. Die Form/der Querschnitt des Grundelements kann rund, oval, generell n-eckig, bananenförmig, etc. sein. Die Höhe des einzelnen Elements beträgt zwischen 0.2 mm und 2 mm vorzugsweise zwischen 0.5 mm bis 1.5 mm.

In der Struktur können mehrere Grundelemente integriert sein. Diese können gleichartig oder unterschiedlich sein. Die Anordnung kann regelmässig oder unregelmässig sein.

Auf einem Aufsteckteil können mehrere voneinander getrennte Flächen mit Strukturen besetzt sein d.h. es können beispielsweise verschiedene Griffpositionen realisiert werden. Eine einzelne solche Fläche hat eine Breite von 4 mm bis 12 mm vorzugsweise von 6 mm bis 10 mm, bei einer Länge von 5 mm bis 35 mm vorzugsweise 8 mm bis 22 mm.

Anwendungsbeispiele für die Griffmulden wären beispielsweise im Kosmetik- oder Haarentfernungsbereich, wo das Gerät genauer geführt werden muss, oder aber der Bereich Mundhygiene Interdentalreinigung, wo ebenfalls eine genaue Führung notwendig ist. Generell sind die Griffmulden immer dann sinnvoll, wenn das Gerät wie ein Stift gehalten werden soll oder wenn es besonders genau gehalten bzw. manövriert werden soll.

### Bevorzugte Ausführungsformen Aufsteckteile

### Aufsteckbürsten (bzw. Aufsteck-Zahnbürsten)

Aufsteckbürsten kommen insbesondere bei der Zahnreinigung zum Einsatz.

Da jedenfalls der Basisbereich (mit der buchsenartigen Kupplungsstruktur), wie oben beschrieben, für alle Ausführungsformen gleich ist, wird er an dieser Stelle nicht noch einmal beschrieben.

Der Kopfbereich und der Halsbereich können bei der Aufsteckbürsten-Anwendung auf unterschiedlichste Weise ausgestaltet sein; es können insbesondere verschiedene Winkelstellungen des Bürstenkopfes sowie verschiedene Bürstenköpfe an sich realisiert werden.

Im Kopfbereich können vorzugsweise auch Schutzelemente vorgesehen sein. Bei einem Zwei-Komponenten-Aufsteckteil sind diese beispielsweise aus Weichkomponente gebildet und umgeben zumindest teilweise den Bürstenkopf, um ein Anschlagen des Aufsteckteils im Mund zu dämpfen.

Hinsichtlich des Halsbereichs werden vorzugsweise der Winkel gegenüber der Längsachse des Aufsteckteils bzw. Längsachse des Bürstenkopfs welche dieser entspricht, der Querschnitt des Halsbereichs sowie die Länge des Halsbereichs, d.h. der Abstand des Bürstenkopfs zum Handgriff, variabel ausgestaltet.

Der Bürstenkopf kann mittels verschiedener Beborstungsverfahren (siehe oben) für verschiedene Anforderungen variabel gestaltet werden. Auch bezüglich der Borstenanordnung im Borstenfeld, den Borsten selbst und der Kopfgrösse bestehen verschiedenste Variationsmöglichkeiten. Als Zusatzteil kann im Übrigen ein Kopfköcher zum Schutz vor Verunreinigungen bei der Aufbewahrung z.B. im Beauty Case vorgesehen sein. Dies gilt im Übrigen für sämtliche Ausführungsformen von Aufsteckteilen.

Weiter ist es möglich die Rückseite des Kopfteils ist es möglich Zungenreinigungselemente zu gestalten, beispielsweise in Form von Noppen oder Lamellenstrukturen. Mit diesen kann während der Zahnreinigung bzw. im Anschluss die Zunge ebenfalls gereinigt werden.

Die Länge der Aufsteckbürsten beträgt generell zwischen 50 mm und 100 mm, bevorzugt zwischen 60 mm und 90 mm und noch weiter bevorzugt zwischen 70 mm und 80 mm.

### Interdentalaufsteckteile

Bei Interdentalaufsteckteilen wird zunächst hinsichtlich der Wirkungsrichtung variiert. Diese kann, je nach Bedarf, entlang der Längsachse des Handgriffs A_{G} oder quer zur Längsachse des Handgriffs A_{G} verlaufen. Die Vibration hat je nach Richtung eine andere Wirkung. Auch hier kann das Aufsteckteil ein Zwei-Komponenten-Aufsteckteil mit Schutz- bzw. Reinigungselementen aus Weichkomponente sein (vgl. oben).

Beim Interdental-Aufsteckteil kommen verschiedene Funktionselemente in Betracht, insbesondere eine Interdental-Bürste. Diese kann als eingedrehte Bürste ausgebildet sein oder es kann ein entsprechend geeignetes Spritzguss-Teil sein (siehe beispielsweise WO 2014/005'659 A1). Auch ein Zahnstocher (z.B. aus Holz, umspritzt oder montiert) kann als Funktionselement vorgesehen sein. Des Weiteren kann es sich Interdentalaufsteckteil auch um einen sog. Flosser handeln - d.h. ein Kunststoffteil welches mit einem Stück Zahnseide versehen ist. Beschreibung siehe unten.

### Flosser-Aufsteckteile (oder Zahnseide-Aufsteckteile)

Bei Flosser-Aufsteckteilen können verschiedene Wirkrichtungen realisiert werden. Diese können, je nach Bedarf, entlang der Längsachse des Handgriffs A_{G} oder quer zur Längsachse des Handgriffs A_{G} verlaufen. So hat einerseits die Vibration je nachdem eine andere Wirkung und auch die Ergonomie in der Anwendung ist unterschiedlich.

Auch hier kann das Aufsteckteil ein Zwei-Komponenten-Aufsteckteil mit Schutz- bzw. Reinigungselementen aus Weichkomponente sein (vgl. oben).

Das Flosser-Aufsteckteil ist so gestaltet, dass ein Grundkörper des Aufsteckteils bestehend aus Basisbereich, Halsbereich und Kopfbereich geschaffen werden. Am Kopfbereich ist dann der sogenannte Flosser angebracht. Dazu sind zwei Haltearme, vorzugsweise aus einer Hartkomponente, geformt, zwischen welchen ein Stück Zahnzwischenraumreinigungselement z.B. Zahnseide gespannt ist.

Die Orientierung ist vorzugsweise so, dass die Arme zum einen senkrecht zur Längsachse des Handgriffs A_{G} ausgerichtet sind. Weiter sind die Haltearme vorzugsweise so ausgerichtet, dass das zwischen ihnen gespannte Zahnzwischenraumreinigungselement parallel zur Längsachse verläuft. Die Haltearme sind vorzugsweise in einem Stück mit der Hartkomponente des Grundkörpers des Aufsteckteils geformt. Alternativ können diese auch montiert sein, beispielsweise in entsprechend gestalteten Ausnehmungen im Grundkörper.

Das Zahnzwischenraumreinigungselement hat eine Länge zwischen den Haltearmen von 15 mm bis 25 mm vorzugsweise von 17 mm bis 22 mm. Die Haltearme haben eine Länge, gemessen ab der Oberfläche des Kopfbereichs, von 8 mm bis 20 mm vorzugsweise von 10 mm bis 17 mm. Diese Höhe entspricht vorzugsweise der Tiefe des freien Bereichs zwischen dem Zahnzwischenraumreinigungselement und dem Kopfbereich, gemessen senkrecht zur Längsachse des Handgriffs A_{G}.

Das Zahnzwischenraumreinigungselement kann aus Polyamid (PA), insbesondere PA6, PA6.6, PA6.10, PA6.12, aus Polytetrafluoroethylen (PTFE), aus Polyethylen (PE) oder aus Polyester sein. Das Zahnzwischenraumreinigungselement kann beschichtet oder unbeschichtet sein. So kann das Zahnzwischenraumreinigungselement gewachst oder ungewachst sein. Als Wachse kommen beispielsweise Bienenwachs (Cera Alba), Cera Microcristallina oder Vinapas^{®} der Firma Wacker Chemie AG in Frage.

Ferner kann das Zahnzwischenraumreinigungselement auch imprägniert sein oder eine weitere Beschichtung aufweisen. Die Imprägnierung bzw. Beschichtung kann der Geschmacksverbreitung (z. B. Minze) dienen. Ferner kann die Imprägnierung bzw. Beschichtung auch ein Wirkstoff beinhalten wie Fluorid (Natriumfluorid oder Ammonium Fluorid) oder Chlorhexidin.

Im Weiteren kann das Zahnzwischenraumreinigungselement auch eine Volumen-Zahnseide sein. Diese zeichnet sich durch einen Faserkörper aus, welcher bei Gebrauch aufbauscht oder aufquillt und so voluminös wird.

Für die Gestaltung des eigentlichen Funktionalen Elements des Flosser-Aufsteckteils wird auf die WO 2014/169398 A1 verwiesen.

Für die interdentale Anwendung der Aufsteckteile d.h. bei Interdentalaufsteckteilen und Flosser-Aufsteckteilen ist eine weitere Ausführungsform denkbar/möglich. Es kann ein Aufsteckteil gestaltet werden, welches das wechselbare Anbringen einer Interdentalbürste/eines Interdentalreinigers bzw. Flossers (Möglichkeiten siehe oben) ermöglicht. Dabei kann ein Grundteil des Aufsteckteils als Mehrweg-Teil gestaltet sein und die Bürste/das Reinigungselement/der Flosser an sich wechselbar. Damit ist es möglich die Bürste/das Reinigungselement/der Flosser öfters zu wechseln als das Grundteil. Das Grundteil würde in dem Fall den Basisbereich, den Halsbereich sowie einen Kopfbereich mit Haltemechanismus umfassen.

Das wechselbare Teil d.h. die Interdentalbürste bzw. der Interdentalreiniger, der Flosser kann dabei so gestaltet sein, dass es grundsätzlich auch ohne das Grundteil verwendet werden kann - beispielsweise in manueller, nicht elektrisch unterstützter Anwendung.

Weiter kann das Grundteil so beschaffen sein, dass die Interdentalbürste bzw. der Interdentalreiniger, der Flosser in verschiedenen Positionen angebracht werden kann. Beispielsweise durch verschiedene Halterichtungen des Haltemechanismus.

### Zungenreiniger

Zungenreiniger kommen in der Mundhygiene zur Reinigung der Zunge zum Einsatz. Vorliegend wird ein Aufsteckteil mit einem Zungenreiniger vorgesehen. Das Aufsteckteil hat im vorliegenden Fall nur die Funktion des Zungenreinigers und ist nicht mit weiteren Funktionen, beispielsweise einem Borstenfeld, versehen.

Die Wirkungsrichtung des Zungenreinigers ist entweder entlang der Längsachse des Handgriffs A_{G} oder quer zur Längsachse des Handgriffs A_{G}, wobei wiederum die Vibration je nach Richtung eine andere Wirkung aufweist.

Bei einem Zwei-Komponenten-Aufsteckteil können auch hier Schutzelemente aus Weichkomponente vorgesehen sein, welche zumindest teilweise um den variablen Kopf herum angeordnet sind und zum Dämpfen des Anschlagens des Aufsteckteils im Mund dienen.

Weiter ist der Zungenreiniger vorzugsweise mit Reinigungselementen aus einer oder mehreren Hart- und/oder Weichkomponenten ausgestattet. Die Reinigungselemente können beispielsweise in Form von Lamellen oder Flächen mit Noppen gestaltet sein.

Werden Lamellen als Reinigungselemente realisiert, so können diese aus einer oder mehreren Komponenten hergestellt sein. Die Lamellen können aus einer Weichkomponente, einer Hartkomponente oder einer Kombination davon hergestellt sein. Vorzugsweise ist dabei die Ausrichtung der Lamellen quer zur Längsachse des Handgriffs A_{G} (eine Längsorientierung ist aber auch möglich).

Der Zungenreiniger kann auch als mehrteiliges Aufsteckteil gestaltet sein. Die Mehrteiligkeit kann sich daraus ergeben, dass ein Teil oder die ganze Reinigungsstruktur nicht im selben Rhythmus gewechselt werden muss wie der Grundkörper/Träger, das heisst der Teil, der die Schnittstelle zum Handgriff bereitstellt. Beispielsweise kann ein Teil oder eben die ganze Reinigungsstruktur zum Einmalgebrauch ausgelegt sein. D.h. das Element, welches für den Einmalgebrauch vorgesehen ist, wird immer wieder gewechselt, während der Rest des Produkts mehrmals verwendet werden kann, also einen tieferen Wechselrhythmus hat. Dabei können beispielsweise nur der Grundkörper/Träger länger bestehen bleiben oder es können auch gewisse Reinigungselemente z.B. Lamellen am Träger angebracht sein und länger verwendet werden.

Beispiele für Elemente die eine kürzere Nutzungsdauer haben, sind beispielsweise Frischestreifen aus sich abbauendem Material (z.B. mit Wasser), d.h. Elemente die sich bei Wasserkontakt auflösen und so ihr Wirkmittel auf einen Schlag abgeben. Damit diese Elemente mit dem Grundkörper/Träger verbunden werden können, können diese zum einen in sich so gestaltet sein, dass sie direkt angebracht werden können oder sie können auf einem Schnittstellenteil so aufgebracht sein, dass das Schnittstellenteil montiert wird und insgesamt mitsamt dem besprochenen Element darauf gewechselt wird.

### Gesichtsbürsten

Eine weitere Anwendungsart sind Aufsteckteile in Form von Gesichtsbürsten. Diese werden insbesondere eingesetzt zur Gesichtsreinigung und zum Einmassieren von Crèmes und Ölen sowie generell zur Massage der Haut.

Insbesondere der Halsbereich ist hier eher kürzer als z.B. bei den Aufsteck-Zahnbürsten. Der Behandlungskopf liegt praktisch oberhalb der Schnittstelle während bei den Aufsteck-Zahnbürsten die Schnittstelle regelmässig in Linie mit dem Behandlungskopf liegt. Das heisst, dass das Borstenfeld oberhalb der Schnittstelle liegt und die Schnittstelle mindestens teilweise bis unter das Borstenfeld ragt.

Der Kopfbereich ist bei der Gesichtsbürste generell grösser als bei der Aufsteck-Zahnbürste.

Zusammen mit dem verkürzten Halsbereich ergibt sich dennoch eine gut handhabbare Länge des Gesamtprodukts.

Die Länge der Gesichtsbürsten-Aufsteckteile liegt bevorzugt zwischen 30 mm und 60 mm, d.h. zwischen 30 mm und 45 mm bei einer kleinen Grösse und zwischen 45 mm und 60 mm bei einer grossen Grösse.

Die Breite der Gesichtsbürsten-Aufsteckteile beträgt vorzugsweise 20 mm bis 60 mm, d.h. 20 mm bis 35 mm bei einer kleinen Grösse und 35 mm bis 60 mm bei einer grossen Grösse.

Die äussere Form des Kopfbereichs ist vorzugsweise rundlich ausgestaltet und kann beispielsweise kreisförmig, ellipsenförmig, tropfenförmig, rund, nierenförmig oder oval sein. Eckige Ausgestaltungen sind möglich, aber weniger bevorzugt. Beispielsweise zählen n-eckige Formen dazu. Die Gesichtsbürsten-Aufsteckteile können grundsätzlich ein Kunststoffteil als Träger aufweisen, auf welchem verschiedene Materialien angeordnet sind.

Der Kopfbereich kann flexibel ausgestaltet sein. Im Grundkörper im Bereich der Beborstung der Bürste können Elemente realisiert sein, die dem Grundkörper eine Flexibilität verleihen. Nicht abschliessende Aufzählung von Möglichkeiten:
- Kerben bzw. Filmscharniere auf der Ober- und/oder der Unterseite. Eine dünnere Materialverbindung bringt eine Bewegungsmöglichkeit.
- Geschlossene Ausnehmungen von der Ober- zur Unterseite. Die Ausnehmung kann beispielsweise als umschlossener Schlitz gestaltet sein. So kann beispielsweise ein hufeisenförmiger Teil geformt sein, der einen inneren Teil, der mit der Schnittstelle ausgestattet ist umgibt. So wird ein flexibler Aussenring geformt.
- Offene Ausnehmungen von der Ober- zu Unterseite. Beispielsweise Schlitze die in Richtung des äusseren Randes des Borstenfeldes orientiert sind und da dann offen sind.

Die Ausnehmungen können mit einem Materialfilm aus Hartmaterial oder aus Weichmaterial überdeckt sein. Immer mit der Voraussetzung, dass noch eine Flexibilität möglich ist.

Die Fläche, in welche die Borsten eingebracht werden, ist vorzugsweise eine ebene, stetige Fläche. Die Fläche kann aber auch eine Topographie z.B. eine Wellenform, längs- oder quer Bombierung aufweisen. Des Weiteren können nicht stetige Formen mit Oberflächensprüngen realisiert werden.

Das Borstenfeld (Borstenlängsachse) ist zur Längsachse des Handgriffs in einem Winkel angebracht. Der Winkel zwischen der Borstenlängsachse und der Längsachse des Handgriffs beträgt 30° bis 90° vorzugsweise 50° bis 70°.

Die Borstenfeld-Grundfläche ist zur Rotationsachse des Exzenters in einem Winkel von 0° bis 50° vorzugsweise 0° bis 30° angeordnet.

Die Längsachsen der Borsten stehen zur Rotationsachse des Exzenters in einem Winkel von 60° bis 80° vorzugsweise von 50° bis 90°.

Der Winkel den das Borstenfeld gegenüber der Längsachse und somit auch gegenüber dem Handgriff einnimmt ist so gestaltet, dass eine ergonomische Anwendung möglich ist. Der Winkel erlaubt es, dass die Behandlungsfläche (Haut) erreicht wird und kein Berühren der Behandlungsfläche mit der Hand passiert.

Die Verlängerung der Schnittstelle bzw. der Stufen in Richtung der Längsachse des Handgriffs führt durch das Borstenfeld. Das Borstenfeld (d.h. die Borsten) liegt also in der Verlängerung der Schnittstelle und deckt diese (betrachtet in Längsachsen-Richtung) komplett ab.

Die Rückseite der Aufsteckbürste ist so gestaltet, dass dies über die hintere Fläche der Aufsteckbürste hinaus ragt.

Das Gesichtsbürsten Aufsteckteil hat vorzugsweise auf seiner Rückseite eine Abflachung, welche zusammen mit Elementen auf dem Handteil dazu bestimmt sind die eine Auflage für das Ablegen des Produkts auf einer Fläche zu gestalten.

Weiter ist das Gesichtsbürsten-Aufsteckteil so ausgestaltet, dass ein Entfernen vom Handgriff problemlos möglich ist. Dies kann beispielsweise erfolgen durch:
- Taillierung: wie sie im Zusammenhang mit dem Nagel-Behandlungs-Aufsatz (Nagelpflege-Aufsteckteil) beschrieben ist.
- Haltegeometrie durch Behandlungselement: die Grundfläche des Borstenfeldes kann so gestaltet sein, dass ein gutes Ergreifen möglich ist. Dieses kann beispielsweise einiges breiter sein als die eigentliche Aufsteckgeometrie. Dadurch ergibt sich ein Sprung in der Breite, der quasi wiederum eine Taillierung schafft, was zum Besseren Handling beiträgt.
- Zonen aus Weichmaterial in der Taillierung oder vorgesehenen Haltegeometrie

Die Flexibilität im Kopfbereich bringt mit sich, dass ein gewisser Teil des Borstenfeldes statisch über das Aufsteckteil mit dem Handgriff verbunden ist und dass ein anderer Teil flexibel ist.

Auf dem statischen Teil sind zwischen 10 und 40 vorzugsweise zwischen 15 und 30 Borstenlöcher/Borstenbündel untergebracht. Auf dem flexiblen Teil sind zwischen 30 und 70 vorzugsweise zwischen 35 und 55 Borstenlöcher/Borstenbündel eingebracht.

Das Verhältnis der Anzahl Borstenlöcher/Borstenbündel auf dem statischen Teil zur Anzahl Borstenlöcher/Borstenbündel auf dem flexiblen Teil beträgt vorzugsweise 25% bis 75% vorzugsweise 40% bis 60%.

Die Fläche des statischen Teils beträgt zwischen 400 mm2 und 800 mm2 vorzugweise zwischen 500 mm2 und 600 mm2. Die Fläche des flexiblen Teils beträgt zwischen 800 mm2 und 1500 mm2 vorzugweise zwischen 1100 mm2 und 1300 mm2.

Die Flexibilität der Gesichtsbürste ist so ausgelegt, dass auf die Spitze mit einem Gewicht von 50 Gramm bis 300 Gramm eingewirkt wird, um eine Bewegung zu erlangen.

Die Gestaltung des statischen Teils ist so gemacht, dass dieser im Wesentlichen gleich breit ausgelegt ist, wie die Schnittstelle. Vorzugsweise gleich breit oder breiter, damit in der Bewegung der Flexibilität keine Berührung mit dem restlichen Körper des Aufsteckteils passiert.

Für die Beborstung der Bürste sind bevorzugt konventionelle Borstenlöcher vorgesehen. Denkbar sind allerdings auch Puck-Tufts (wie beispielsweise beim Makeup-Pinsel gemäss US 2015/0034113).

Es kommen vorzugsweise feine Borsten (d.h. feinere Borste als bei einer Standard-Zahnbürstenanwendung) zum Einsatz, wobei der Borstendurchmesser von 0,075 mm bis 0,225 mm reichen kann. Besonders feine Borsten weisen einen Durchmesser unterhalb von 0,175 mm auf.

Grundsätzlich weisen die Gesichtsbürsten anzahlmässig mehr Borsten auf als die Zahnbürsten, da eben die Borstendurchmesser viel kleiner sind und der Bürstenkopf grösser ist und auch mehr Borstenlöcher aufweist.

Die Gestaltung des Borstenfeldes kann beispielsweise so sein, dass ein Kranz einer Borstenart um ein Feld einer anderen Borstenart gelegt wird. Unter Borstenart werden hier Borsten mit bestimmten Eigenschaften (Farbe, Länge, Durchmesser, Material etc.) verstanden. So können weiche Borstenbündel um harte Borstenbündel angeordnet sein.

Es besteht auch die Möglichkeit gespritzte Borsten für einen Massagekopf vorzusehen; diese sind dann allerdings weniger geeignet zum Einmassieren von Crèmes etc.

Es kann allerdings für bestimmte Gesichtsanwendungen auch ein (von der Form her gleiches) Gesichtsbürsten-Aufsteckteil mit einem Kopfbereich ohne Borsten bzw. Borstenlöcher vorgesehen sein. Der Kopfbereich ist quasi identisch, nur das Funktionselement auf dem Kopfbereich unterscheidet sich. Das Aufsteckteil als solches ist aus den bereits angegeben Materialien gefertigt, mit Ausnahme eben des Funktionselements.

Der Kopfbereich bzw. das Funktionselement kann etwa aus Metall gebildet sein oder aber einen Metallüberzug aufweisen. Das Metall dient insbesondere zum Kühlen der Haut. Das Metall kann auch eine Struktur bzw. strukturierte Oberfläche (z.B. noppen-, rillen- oder rautenförmig) zum Massieren der Haut aufweisen.

Der Kopfbereich bzw. das Funktionselement kann alternativ auch aus Stein oder Keramik gebildet sein, was beim Kühlen der Haut für ein spezielles Wohlgefühl sorgt.

Des Weiteren kann ein Gesichtsbürsten-Aufsteckteil mit einem Kopfbereich ohne Borsten bzw. Borstenlöcher auch mit einem Schwamm als Funktionselement, etwa zum Auftragen von Cremes, versehen sein.

Wiederum als Alternative kann ein Schleifaufsatz (ggf. etwas grösser dimensioniert) als Funktionselement vorgesehen sein, mit welchem beispielsweise Hornhaut (insbesondere auch an den Füssen) abgeschliffen werden kann.

Bei den Ausführungsformen mit Metall oder Stein als Funktionselement, kann im Übrigen der Kopfbereich vermittels eines geeigneten Heizelements beheizbar sein. Hierfür kann eine separate Batterie eingesetzt werden oder es kann eine Kopplung über die Schnittstelle erfolgen (die Schnittstelle ist dann mit entsprechenden Kontaktelementen versehen, um das Funktionselement vom Handteil her mit Energie zu versorgen) .

### Nagelpflege-Aufsteckteil

Zur Nagelpflege kann ein Nagelpflege-Aufsteckteil oder ein Set von Nagelpflege-Aufsteckteilen bereitgestellt werden.

Entsprechende Aufsteckteile bzw. Funktionselemente können verwendet werden als Nagelbürste zum Polieren der lackierten Nägel oder aber zum Polieren der unbehandelten Nägel (Polierbürste) sowie zum Reinigen der Nägel von Dreck oder Fett, insbesondere unter den Nagelrändern (Reinigungsbürste).

Weiterhin sind Schleif- bzw. Polieraufsätze zum Schleifen der Nagelränder oder aber zum Wegschleifen von Nagellack/Leim/Gel für Extensions vorgesehen. Eine weitere Ausführungsform umfasst einen Nagellackpinsel zum Auftragen von Nagellack.

Der Hals- und Kopfbereich ist wiederum je nach Anwendungsart unterschiedlich ausgestaltet.

Bei den Nagelbürsten können gespritzte Borsten vorgesehen sein, so dass sich ein Mehr-Komponenten-Aufsteckteil ergibt mit einem Grundkörper (vorzugsweise aus einer Hartkomponente) und gespritzten Borsten (vorzugsweise aus einer weiteren Komponente). Daneben können weitere Elemente als Umspritzkörper beispielsweise aus Hart- und/oder Weichkomponente realisiert werden.

Alternativ sind auch in den Grundkörper gestanzte Borsten möglich, wobei auch in solchen Ausführungsformen der Grundkörper mit weiteren Komponenten als Umspritzkörper versehen sein kann.

Bei den Schleif- bzw. Polieraufsätzen ist regelmässig eine entsprechende Einlage (d.h. mit Schleif- und/oder Poliermitteln) im Körper des Aufsteckteils vorgesehen. Die Einlage kann auswechselbar gestaltet sein, beispielsweis mittels von Klett- oder Klebstreifen etc. Sie kann aber auch fix im Körper des Aufsteckteils montiert sein, beispielsweise mittels kleben. Alternativ können Schleif- oder Poliermittel direkt im Kunststoff eingebettet sein und während dem Spritzgussprozess verarbeitet werden.

Die Befestigungsfläche der Einlage mit der Schleif- bzw. Polierfläche kann im Körper auf einer plane Fläche realisiert sein oder mit einer Vertiefung leicht im Körper versenkt angeordnet sein. Dabei kann sich um die Einlage auf der Fläche ein Rand ausbilden. Dieser Rand hat eine Breite von 0.1 mm bis 0.7 mm vorzugsweise von 0.3 mm bis 0.5 mm. Der Rand weist weiterhin eine Höhe von 0.1 bis 0.7 mm auf, vorzugsweise von 0.1 bis 0.4 mm. Diese Werte sind bedingt durch die Toleranzen der Positionierung der Einlage bei der Fertigung.

Des Weiteren kann die Schleif- bzw. Polierfläche aber auch die ganze plane Fläche einnehmen und so erst an der Kante, quasi randlos, enden.

Die Fläche der Schleif- bzw. Polieraufsätze ist vorzugweise als ebene, stetige Fläche gestaltet. Sie hat eine Grösse von 30 mm² bis 1800 mm² vorzugsweise von 180 mm² bis 750 mm². Die Länge beträgt 10 mm bis 60 mm vorzugsweise 30 mm bis 50 mm, bei einer Breite von 3 mm bis 30 mm vorzugsweise 6 mm bis 15 mm.

Die Form der eigentlichen Schleif- bzw. Polierfläche kann jegliche geschlossene Kontur sein. Beispielsweise können Kreise, Ovale, n-Ecke realisiert werden.

Die Körnung der Schleif- bzw. Polierfläche beträgt zwischen 100 µm und 5000 µm (Grösse der Korngrösse), vorzugsweise werden die Körnungen zwischen 150 µm und 300 µm, zwischen 350 µm und 450 µm und zwischen 3500 µm und 4500 µm angewendet. Die Körnung bestimmt die Funktion, tiefere Körnungen ergeben eine gröbere Schleif- bzw. Polierfläche, während höhere Körnungen eine feinere Schleif- bzw. Polierfläche ergeben.

Die eigentliche Schleif- bzw. Polierfläche kann als ebene, stetige Fläche gestaltet sein. Die Stetigkeit muss immer gegeben sein, aber es können auch andere stetige Profile realisiert werden. Beispielsweise eine konkave, konvexe oder kombinierte Bombierung, eine konkave oder konvexe Längsbiegung, eine Querbiegung oder auch eine Wellenform.

Die Schleif- bzw. Polierfläche kann gegenüber der Hauptachse des Handgriffs verschiedene Lagen einnehmen. So kann sie parallel ausgerichtet sein oder auch verschiedenste Winkel einnehmen. Generell ist die Fläche vorzugsweise gegen die Rückseite des Handteils gerichtet.

Bei Schleif- und Polieraufsätzen sind meist Griffmulden oder Strukturen die das Halten verbessern im Aufsatz integriert. Die Strukturen sind auf dem Aufsatz so angeordnet, dass ein feinfühliges Manövrieren erlaubt wird. Vorzugsweise befinden sich die Strukturen, die den Halt verbessern dem eingesetzten Mittel im Rücken d.h. hinter dem Schleif- und Polierelement.

Damit die Montage und Demontage des Aufsteckteils auf das Handgerät einfacher passieren ist der Trägerkörper d.h. der Grundkörper des Aufsteckteils vorzugsweise tailliert gestaltet. Damit kann der Körper gut gegriffen und besser vom Handteil gezogen werden. Die Taillierung ist vorzugsweise so gestaltet, dass sie, wenn das Aufsteckteil auf dem Handteil angeordnet ist, sich zwischen der linken und der rechten Seite erstreckt. Der Minimalquerschnitt hat dabei eine Breite von 7 mm bis 15 mm vorzugsweise von 8.5 mm bis 11.5 mm. Die Taillierung ist vorzugsweise als Rundung bzw. runde stetige Form gestaltet.

Ein Nagelpflege-Aufsteckteil kann ein Mittel vorzugsweise eine Kante für das zurückschieben der Nagelhaut haben. Die Kante ist als relativ scharfe Kante gestaltet. Die Kante hat eine Nutz-Länge von mindestens 3 mm vorzugsweise von mindestens 5 mm und ist freigestellt, damit Manipulationen an den Nägeln möglich sind. Das heisst, dass die Kante mindestens an gewissen Stellen so exponiert sein muss, dass die Behandlung überhaupt möglich ist.

Die Kante bzw. die beiden zur Kante führenden Flächen nehmen einen spitzen Winkel ein. Der Winkel beträgt weniger als 80° vorzugsweise weniger als 60°.

Die Kante für die Nagelhaut-Behandlung kann flach oder mit einem Verlauf gestaltet sein. Beispielsweise kann sie in einem gewissen Rahmen wellenförmig gestalte sein.

Die Kante ist auf dem Aufsteckteil vorzugsweise symmetrisch zur Längsachse angelegt.

Auf dem Aufsteckteil ist die Schabkante vorzugsweise am vorderen, freien Ende angebracht.

Beim Nagellackpinsel sind die Borsten in Längs- oder Querrichtung des Aufsteckteils angeordnet.

Die Nagelpflege-Aufsteckteile können als Einzelaufsätze oder aber als kombinierte Aufsätze ausgestaltet sein. Bei den kombinierten Aufsätzen umfassen die verschiedenen Seiten des Aufsteckteils verschiedene Funktionselemente.

### Mascarabürsten-Aufsteckteil

Auf den Mascarabürsten-Aufsteckteilen werden bevorzugt eingedrehte oder gespritzte Bürsten verwendet. Die Wirkungsrichtung ist dabei entweder in Längsrichtung des Handgriffs oder quer zur Längsachse des Handgriffs A_{G}, wobei die Vibrationen je nach Richtung eine andere Wirkung aufweisen.

Die Mascarabürsten-Aufsteckteile sind in ähnlicher Weise ausgebildet wie die Interdental-Aufsteckteile.

### Massagebürsten-Aufsteckteile

Die Massagebürsten-Aufsteckteile sind generell ähnlich ausgestaltet wie die Gesichtsbürsten und weisen einen eher grösseren Pflegekopf auf. Sie sind für Massageanwendungen am ganzen Körper vorgesehen.

### Massageroller-Aufsteckteile

Massageroller-Aufsteckteile sind so ausgestaltet, dass das Aufsteckteil mit einem Massageelement beispielsweise mit einer oder mehreren Massagerollen oder -kugeln ausgestattet sind.

Grundsätzlich sind die Rollen oder Kugeln auf dem Aufsteckteil angeordnet. Vorzugsweise sind die Rollen oder Kugeln mit einer Drehachse versehen, die eine Drehung um die Achse zulassen. Die Achse ist im Aufsteckteil verankert und trägt diese Elemente. Für Kugelelemente ist es auch möglich diese in einer Kugelführung - ähnlich wie bei einem Deo-Roller - zu lagern.

Die Achse der Massagekugeln kann gegenüber der Längsachse des Handgriffs A_{G} quasi eine beliebige Orientierung einnehmen. Die Achse der Massageroller nimmt vorzugsweise eine Richtung senkrecht zur Längsachse des Handgriffs A_{G} ein.

Massageroller sind vorzugsweise als gerade zylinder-, kegelstumpf- oder kegelförmige Elemente ausgestaltet. Die Achse ist dabei so ausgerichtet, dass sie beim Zylinder parallel zur Zylinderachse verläuft und zwar vorzugsweise zentrisch, die Anordnung kann aber auch exzentrisch sein. Bei der kegelförmigen/kegelstumpfförmigen Anordnung läuft die Achse vorzugsweise parallel zur Höhe und zwar vorzugsweise zentrisch, die Anordnung kann aber auch exzentrisch sein.

Der Massageroller kann so ausgestaltet sein, dass die Anwendungsoberfläche nicht glatt gestaltet ist, sondern Erhebungen und/oder Vertiefungen enthält. Weiter ist es möglich, die Oberfläche in verschiedenen Materialien zu gestalten beispielsweise im Ein- oder Mehrkomponenten-Spritzguss oder aus Metall.

Die Mantelfläche des Zylinders ist vorzugsweise als Anwendungsoberfläche ausgestaltet. Die Anwendung auf diese Weise erlaubt das Rollen auf der Haut. Weiter ist es möglich, zusätzlich auch die freie Grundfläche als Anwendungsoberfläche zu gestalten, damit ist neben der rollenden Anwendung auch eine punktuelle Anwendung oder Verwendung der Drehung möglich.

### Nassrasierer-Aufsteckteile

Schliesslich sind auch Nassrasierer-Aufsteckteile vorgesehen, welche zur Nassrasur mit Vibrationsunterstützung verwendet werden. Das Aufsteckteil ist hier bevorzugt als Klingenhalter geformt.

Die Grösse des erfindungsgemässen Handgriffs bringt hier insbesondere für ältere Benutzer ergonomische Vorteile.

Zum Wechseln der Klinge besteht einerseits die Möglichkeit das ganze Aufsteckteil (d.h. wenn die Klinge fest montiert ist) oder nur die Klinge selbst (d.h. wenn die Klinge lösbar montiert ist) auszutauschen. Ein Wechsel des ganzen Aufsteckteils bringt Handhabungsvorteile insbesondere für ältere Benutzer.

### Schwamm-Aufsteckteil

Es ist möglich Aufsteckteile für Beauty-Anwendungen zu schaffen, bei denen im Kopfbereich ein Behandlungselement mit einer schwammartigen Struktur aufgebracht ist.

Die Grösse der schwammartigen Struktur kann dabei vom effektiven Anwendungsgebiet abhängen. Beispielsweise können die schwammartigen Strukturen für die Anwendung im Gesicht - verglichen mit Anwendungen am restlichen Körper - stark differieren. Die Anwendung im Gesicht ist vorzugsweise mit einer kleineren Struktur versehen.

Die schwammartige Struktur kann aus den verschiedensten Materialien mit verschiedensten Porengrössen etc. geschaffen werden.

Weiter ist es möglich, die schwammartige Struktur im Kopfbereich rund um das Aufsteckteil anzuordnen. Der eigentliche Grundkörper des Aufsteckteils mit Basisbereich, Halsbereich und Kopfbereich bildet in diesem Fall die Trägerstruktur im Innern der schwammartigen Struktur.

Bei allen Aufsteckteilen ist es zudem möglich Flachstellen auszubilden, die es ermöglichen den Handgriff mit aufgestecktem Aufsteckteil liegend in stabiler Position zu lagern bzw. hinzulegen. Diese Flachstellen können bzw. müssen selbstverständlich mit den oder der Flachstelle am Handgriff korrespondieren.

### Serum-Applikator-Aufsteckteil

Für die Kosmetik kann ein Serum-Applikator-Aufsteckteil gestaltet werden, mittels welchem beispielsweise flüssige oder zähflüssige Medien aufgetragen werden können.

Dieses Aufsteckteil ist vorzugsweise so gestaltet, dass ein Grundkörper des Aufsteckteils für mehrere Anwendungen verwendet werden kann und im Kopfbereich des Aufsteckteils ein Wechselteil angebracht wird.

Das Wechselteil kann neben dem Medium auch noch andere Elemente zum Auftragen, wie beispielsweise Borsten oder einen Schwamm umfassen. Damit kann für die Anwendung ein Wechselteil auf den Grundkörper gesteckt werden und dieses wird dann nach der Anwendung weggeworfen.

Das Medium kann im Wechselteil in verschiedenen Formen integriert sein. Beispielsweise in Form einer sich im Kontakt mit Wasser auflösenden Kugel oder als Kugel die aufgestochen wird. Wird in diesem Fall das Wechselteil montiert, ist es so, dass im Grundkörper Mittel angebracht sind, die die Kugel aufbrechen und es dann so erlauben, dass das Medium austritt und so aufgetragen werden kann.

Die genannte Wechselbarkeit des funktionalen Elements ohne Wechsel des Grundkörpers des Aufsteckteils kann grundsätzlich nicht nur, wie spezifisch beschrieben für Interdentalaufsteckteile und Flosser-Aufsteckteile realisiert werden; auch im Bereich der KosmetikAnwendungen ist die Verwendung denkbar, wie bereits beschrieben.

Alles in allem stellt die vorliegende Offenbarung ein Elektrogerät für die Zahnreinigung bzw. einen Universalhandgriff für verschiedene Zahnreinigungsanwendungen, auf welchen Aufsteckteile für die verschiedensten Anwendungen aufbringbar sind, zur Verfügung.

Für alle Anwendungen ist es möglich Schutzaufsätze, sogenannte Köcher, zu gestalten, die das Aufsteckteil beziehungsweise die darauf angebrachten Funktionselemente wie Borsten etc. beispielsweise vor Verunreinigung schützen. Diese Kopfköcher sind normalerweise als separat geformte Elemente erstellt und nicht direkt mit dem Aufsteckteil verbunden.

Weiter ist es für alle Anwendungen möglich einen Sockel / Halter zu erstellen, in welchem der Handgriff gelagert werden kann. Beispielsweise kann der Halter so gestaltet sein, dass das Handteil vertikal in diesen gestellt wird und um die Ausnehmung für den Handgriff weitere Vorsprünge gestaltet sind, auf welchen die Aufsteckteile gelagert werden können. So ist es beispielsweise möglich, die Aufsteckteile für verschiedene Anwendungen zusammen mit dem Handgriff zu lagern. Der Halter kann als einfachstes Ein- oder Mehrkomponentenspritzgussteil gestaltet sein.

Weiter kann dieser Sockel als Ladegerät ausgestaltet sein, sodass beispielsweise Handgriffe mit wiederaufladbaren Akkus im Sockel induktiv geladen werden können.

Für die Realisierung des erfindungsgemässen Elektrogeräts bzw. des erfindungsgemässen Handgriffs und der erfindungsgemässen Aufsteckteile können verschiedene Kunststoffe eingesetzt werden.

Beispielhafte Möglichkeiten aus dem Bereich der Thermoplaste umfassen folgende Hartkomponenten:
Styrolpolymerisate wie Styrolacrylnitril (SAN), Polystyrol (PS), Acrylnitrilbutadienstyrol (ABS), Styrolmethylmethacrylate (SMMA) oder Styrolbutadien (SB);
Polyolefine wie Polypropylen (PP) oder Polyethylen (PE), insbesondere auch in Form von High Density Polythylen (HDPE) oder Low Density Polyethylen (LDPE);
Polyester wie Polyethylenterephthalat (PET) in Form von säuremodifiziertem Polyethylenterephthalat (PETA) oder glykolmodifiziertem Polybutylenterephthalat (PETG), Polybutylenterephtalat (PBT), säuremodifiziertem Polycyclohexylendimethylenterephthalat (PCT-A) oder glykolmodifiziertem Polycyclohexylendimethylenterephthalat (PCT-G);
Cellulosederivate wie Celluloseacetat (CA), Celluloseacetobutyrat (CAB), Cellulosepropionat (CP), Celluloseacetatphthalat (CAP) oder Cellulosebutyrat (CB) ;
Polyamide (PA) wie PA 6.6, PA 6.10 oder PA 6.12; Polymethymethacrylat (PMMA) ; Polycarbonat (PC); Polyoxymethylen (POM); Polyvinylchlorid (PVC); Polyurethan (PUR).

Beispielhafte Möglichkeiten aus dem Bereich der Thermoplastischen Elastomere (TPE's) umfassen folgende Weichkomponenten:
Thermoplastische Polyurethan-Elastomere (TPE-U); Thermoplastische Styrol-Elastomere (TPE-S) wie etwa Styrol-Ethylen-Butylen-Styrol-Copolymer (SEBS) oder Styrol-Butadien-Styrol-Copolymer (SBS); Thermoplastische Polyamid-Elastomere (TPE-A); Thermoplastische Polyolefin-Elastomere (TPE-O); Thermoplastische Polyester-Elastomere (TPE-E).

Des Weiteren können die vorgenannten Thermoplaste Polyethylen (PE) und Polyurethan (PU) sowohl als Hartkomponente als auch als Weichkomponente eingesetzt werden.

Besonders geeignet als Hartkomponente ist PP. Bevorzugt wird PP mit einem Elastizitäts-Modul von 1000 - 2400 N/mm², weiter vorzugsweise mit einem Elastizitäts-Modul von 1300 - 1800 N/mm².

Als Weichkomponente wird bevorzugt ein TPE-S eingesetzt. Die Shore A Härten der Weichkomponente liegen vorzugsweise unterhalb von 90 Shore A. Die Weichkomponenten bilden mit der Hartkomponente mittels überspritzen im Zwei- oder Mehrkomponentenspritzgussverfahren einen Materialschluss.

Beispielmaterialien für die Herstellung von gespritzten Borsten umfassen:
Polyamid Elastomer (z.B. Grilflex ELG 5930 von Ems-Chemie AG); Polyester Elastomer (z.B. Riteflex 672 RH Nat oder Riteflex RKX 193 RF Nat von Ticona Polymers oder Hytrel 7248 von DuPont. Die Borstenmaterialien für die gespritzten Borsten haben eine Shore A Härte von 0 bis 100, vorzugsweise von 30 bis 80 Shore A.

Konventionelle Borsten (zugespitzt oder zylindrisch) sind vorliegend vorzugsweise aus Polyamid (PA) oder Polyester (PBT) hergestellt.

Gummielastische Massage- und Reinigungselemente sind vorliegend aus einer Weichkomponente hergestellt.

Auch Biokunststoffe, d.h. Kunststoffe die aus nachwachsenden Rohstoffen hergestellt sind, sind grundsätzlich einsetzbar.

Eine besonders bevorzugte Hartkomponente für die erfindungsgemässen Aufsteckteile ist PP Tipplen R359 von TVK Plc. (Tipplen ist ein Markenzeichen TVK Plc.). Eine besonders bevorzugte Hartkomponente für den erfindungsgemässen Handgriff ist Total PPH 5042 von Total SA (Total ist ein Markenzeichen von Total SA) oder alternativ Moplen HP548L von LyondellBasell Industries Holdings B.V. (Moplen ist ein Markenzeichen von LyondellBasell Industries Holdings B.V.).

Anhand der beiliegenden Figuren sollen beispielhaft und lediglich zum Zwecke der Veranschaulichung mögliche Ausführungsformen der vorliegenden Erfindung dargestellt werden. Die einzelnen Ausführungsformen können ganz oder in Teilen mit anderen Ausführungsformen der Erfindung kombiniert werden, ohne den Rahmen der Erfindung zu verlassen. Ebenso kann die nachfolgende Beschreibung zu den einzelnen Figuren auf andere Figuren übertragen werden, die gleiche oder ähnliche Ausführungsformen zeigen und ggf. weniger detailliert beschrieben sind.

Es zeigt:
- Fig. 1a: eine perspektivische Ansicht einer ersten Ausführungsform eines erfindungsgemässen Elektrogeräts für die Zahnreinigung;
- Fig. 1b: eine Seitenansicht des erfindungsgemässen Elektrogeräts gemäss Fig. 1a;
- Fig. 1c: eine Draufsicht auf das erfindungsgemässe Elektrogerät gemäss Fig. 1a;
- Fig. 1d: eine Unteransicht des erfindungsgemässen Elektrogeräts gemäss Fig. 1a;
- Fig. 1e: eine Querschnittsansicht des erfindungsgemässen Elektrogeräts gemäss Fig. 1a;
- Fig. 1f: eine Querschnittsansicht einer zweiten Ausführungsform eines erfindungsgemässen Elektrogeräts für die Zahnreinigung;
- Fig. 2a: eine perspektivische Ansicht eines erfindungsgemässen Handgriffs;
- Fig. 2b: eine perspektivische Ansicht des um 180° gedrehten erfindungsgemässen Handgriffs gemäss Fig. 2a;
- Fig. 2c: eine Seitenansicht des erfindungsgemässen Handgriffs gemäss Fig. 2a;
- Fig. 2d: eine Draufsicht auf den erfindungsgemässen Handgriff gemäss Fig. 2a;
- Fig. 2e: eine Unteransicht des erfindungsgemässen Handgriffs gemäss Fig. 2a;
- Fig. 2f: eine Querschnittsansicht des erfindungsgemässen Handgriffs gemäss Fig. 2a (entsprechend der in Fig. 1e dargestellten Ausführungsform des erfindungsgemässen Elektrogeräts);
- Fig. 3a: eine perspektivische Ansicht einer ersten Ausführungsform eines erfindungsgemässen Aufsteckteils;
- Fig. 3b: eine Seitenansicht des erfindungsgemässen Aufsteckteils gemäss Fig. 3a;
- Fig. 3c: eine Draufsicht auf das erfindungsgemässe Aufsteckteil gemäss Fig. 3a;
- Fig. 3d: eine Unteransicht auf das erfindungsgemässe Aufsteckteil gemäss Fig. 3a;
- Fig. 3e: eine Hinteransicht des erfindungsgemässen Aufsteckteils gemäss Fig. 3a;
- Fig. 4: eine Seitenansicht einer zweiten Ausführungsform eines erfindungsgemässen Aufsteckteils;
- Fig. 5: eine Seitenansicht einer dritten Ausführungsform eines erfindungsgemässen Aufsteckteils;
- Fig. 6: eine Seitenansicht einer vierten Ausführungsform eines erfindungsgemässen Aufsteckteils;
- Fig. 7a: eine perspektivische Ansicht einer fünften Ausführungsform eines erfindungsgemässen Aufsteckteils;
- Fig. 7b: eine weitere perspektivische Ansicht des erfindungsgemässen Aufsteckteils gemäss Fig. 7a;
- Fig. 7c: eine Draufsicht des erfindungsgemässen Aufsteckteils gemäss Fig. 7a;
- Fig. 7d: eine Seitenansicht des erfindungsgemässen Aufsteckteils gemäss Fig. 7a;
- Fig. 8a: eine perspektivische Ansicht einer sechsten Ausführungsform eines erfindungsgemässen Aufsteckteils;
- Fig. 8b: eine Seitenansicht des erfindungsgemässen Aufsteckteils gemäss Fig. 8a;
- Fig. 8c: eine Unteransicht des erfindungsgemässen Aufsteckteils gemäss Fig. 8a;
- Fig. 8d: eine Draufsicht auf das erfindungsgemässe Aufsteckteil gemäss Fig. 8a;
- Fig. 9a: eine Seitenansicht einer siebten Ausführungsform eines erfindungsgemässen Aufsteckteils;
- Fig. 9b: eine Draufsicht des erfindungsgemässen Aufsteckteils gemäss Fig. 9a;
- Fig. 9c: eine Unteransicht des erfindungsgemässen Aufsteckteils gemäss Fig. 9a;
- Fig. 10a: eine Seitenansicht einer achten Ausführungsform eines erfindungsgemässen Aufsteckteils;
- Fig. 10b: eine Draufsicht des erfindungsgemässen Aufsteckteils gemäss Fig. 10a;
- Fig. 11a: eine Seitenansicht einer neunten Ausführungsform eines erfindungsgemässen Aufsteckteils;
- Fig. 11b: eine Draufsicht des erfindungsgemässen Aufsteckteils gemäss Fig. 11a;
- Fig. 12a: eine Seitenansicht einer zehnten Ausführungsform eines erfindungsgemässen Aufsteckteils;
- Fig. 12b: eine Draufsicht des erfindungsgemässen Aufsteckteils gemäss Fig. 12a;
- Fig. 12c: eine Unteransicht des erfindungsgemässen Aufsteckteils gemäss Fig. 12a;
- Fig. 13a: eine Seitenansicht einer elften Ausführungsform eines erfindungsgemässen Aufsteckteils;
- Fig. 13b: eine Draufsicht des erfindungsgemässen Aufsteckteils gemäss Fig. 13a;
- Fig. 13c: eine Unteransicht des erfindungsgemässen Aufsteckteils gemäss Fig. 13a.
- Fig. 14a: eine perspektivische Ansicht des Aufsteckteils gemäss Fig. 7a auf einem Handgriff;
- Fig. 14b: eine Seitenansicht des Aufsteckteils gemäss Fig. 7a auf einem Handgriff;
- Fig. 14c: eine Querschnittsansicht des Aufsteckteils gemäss Fig. 7a auf einem Handgriff;
- Fig. 15a: eine perspektivische Ansicht einer zwölften Ausführungsform eines erfindungsgemässen Aufsteckteils;
- Fig. 15b: eine Seitenansicht des erfindungsgemässen Aufsteckteils gemäss Fig. 15a;
- Fig. 15c: eine Frontansicht des erfindungsgemässen Aufsteckteils gemäss Fig. 15a;
- Fig. 15d: eine Draufsicht des erfindungsgemässen Aufsteckteils gemäss Fig. 15a;
- Fig. 16a: eine perspektivische Ansicht einer dreizehnten Ausführungsform eines erfindungsgemässen Aufsteckteils auf einem Handgriff;
- Fig. 16b: eine Unteransicht des erfindungsgemässen Aufsteckteils auf einem Handgriff gemäss Fig. 16a;
- Fig. 16c: eine Seitenansicht des erfindungsgemässen Aufsteckteils auf einem Handgriff gemäss Fig. 16a;
- Fig. 16d: eine Draufsicht auf das erfindungsgemässe Aufsteckteil auf einem Handgriff gemäss Fig. 16a;
- Fig. 16e: eine Querschnittsansicht auf das erfindungsgemässe Aufsteckteil auf einem Handgriff gemäss Fig. 16a;
- Fig. 17a: eine perspektivische Ansicht einer vierzehnten Ausführungsform eines erfindungsgemässen Aufsteckteils;
- Fig. 17b: eine Explosionsdarstellung in perspektivischer Ansicht des erfindungsgemässen Aufsteckteils gemäss Fig. 17a;
- Fig. 17c: eine Explosionsdarstellung in Draufsicht des erfindungsgemässen Aufsteckteils gemäss Fig. 17a;
- Fig. 18a: eine perspektivische Ansicht einer fünfzehnten Ausführungsform eines erfindungsgemässen Aufsteckteils;
- Fig. 18b: eine Seitenansicht des erfindungsgemässen Aufsteckteils gemäss Fig. 18a;
- Fig. 18c: eine Draufsicht auf das erfindungsgemässe Aufsteckteil auf einem Handgriff gemäss Fig. 18a
- Fig. 18d: eine Ansicht von vorne des erfindungsgemässen Aufsteckteils gemäss Fig. 18a;
- Fig. 19a: eine perspektivische Ansicht einer sechzehnten Ausführungsform eines erfindungsgemässen Aufsteckteils;
- Fig. 19b: eine Seitenansicht des erfindungsgemässen Aufsteckteils gemäss Fig. 19a;
- Fig. 19c: eine Draufsicht auf das erfindungsgemässe Aufsteckteil gemäss Fig. 19a;
- Fig. 19d: eine Unteransicht des erfindungsgemässen Aufsteckteils gemäss Fig. 19a.

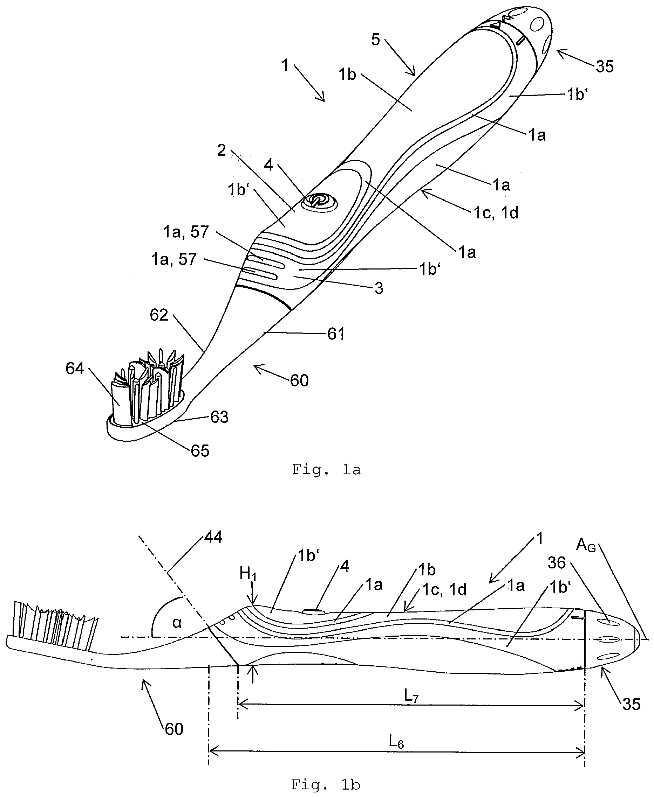

In der **Fig. 1a** wird eine perspektivische Ansicht einer ersten Ausführungsform des erfindungsgemässen Elektrogerätes für die Zahnreinigung, hier in Form einer Elektrozahnbürste, wiedergegeben.

Die Elektrozahnbürste setzt sich im Wesentlichen aus dem Handgriff 1 bestehend aus Handteil 1c und dem Verschlussdeckel 35 sowie dem Aufsteckteil 60 zusammen. Das Handteil 1c besteht im Wesentlichen aus dem Grundkörper 5, welcher zumindest eine Hartkomponente 1a umfasst, sowie dem Umspritzkörper, der eine oder mehrere Weichkomponenten 1b, 1b' umfasst, und dem Innenleben.

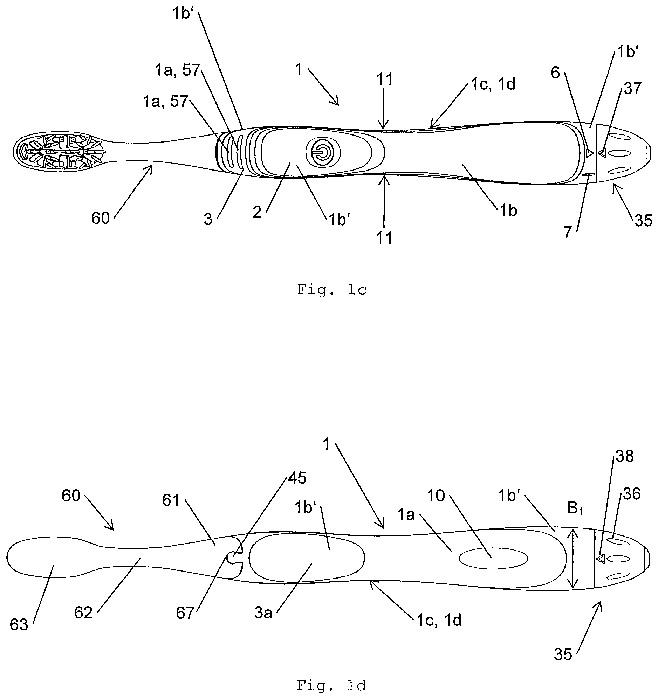

Vorliegend sind insbesondere die Schalterpartie 2, Teile der Frontpartie 3 sowie die Rückenpartie 3a (vgl. **Fig. 1d****)** aus einer Weichkomponente 1b' gebildet. Weiter ist auf der Vorderseite eine Partie aus Weichkomponente 1b gestaltet. Dabei kann es sich jeweils um dieselbe Weichkomponente handeln, es können aber auch je nach Bedarf, unterschiedliche Weichkomponenten verwendet werden. Bezüglich der in Frage kommenden Materialien wird jeweils auf die allgemeine Beschreibung oben verwiesen.

Im Bereich der Schalterpartie 2 ist auch das Ein-/Ausschalter-Symbol 4 für die Elektrozahnbürste angeordnet. Das Ein-/Ausschalter-Symbol 4 steht für jene Stelle die gedrückt werden muss, um den Schalter 24 im Innern des Handteils zu betätigen. Die Frontpartie 3 umfasst zwei oder mehrere Stege 57, welche aus der Hartkomponente 1a gebildet sind und welche zusammen mit der umgebenden Weichkomponente 1b' der Frontpartie 3 eine besonders gute Griffigkeit ergeben. An die Frontpartie 3 schliesst sich das Aufsteckteil 60 an, hier in Form eines Zahnbürsten-Aufsteckteils.

Das Aufsteckteil umfasst einen Basisbereich 61, mit welchem es an den Grundkörper 5 aus der Hartkomponente 1a des Handgriffs 1 bzw. an die steckerartige Kupplungsstruktur 40 des Handgriffs 1 anschliesst, sowie einen Kopfbereich 63 und einen den Basisbereich 61 mit dem Kopfbereich 63 verbindenden Halsbereich 62.

Im vorliegenden Fall ist im Kopfbereich 63 ein Trägerplättchen 65 montiert, mit darauf angeordneten Reinigungselementen 64. Bei den Reinigungselementen 64 kann es sich um Borsten bzw. Borstenbündel und/oder weichelastischen Reinigungs- und Massageelemente (diese werden vorzugsweise aus einer Weichkomponente gebildet bzw. gespritzt) handeln. Die Borsten bzw. Borstenbündel werden vorzugsweise im AFT-Verfahren (Anchor-Free Tufting) aufgebracht.

Die **Fig. 1b** stellt eine Seitenansicht der Elektrozahnbürste gemäss **Fig. 1a** dar. Die Längsachse des Handgriffs 1 wird vorliegend mit A_{G} bezeichnet. Der Übergangsbereich zwischen dem Handgriff 1 und dem Aufsteckteil 60 umfasst eine schräggestellte Anschlagfläche 44, welche mit der Längsachse A_{G} des Handgriffs einen Winkel α einschliesst. Dieser ist in der vorliegenden Darstellung aufgrund des Winkels als Linie sichtbar.

Die Länge von der Anschlagfläche 44 bis zum Griffende (auf der Vorder- bzw. Oberseite des Handteils 1c ohne Verschlussdeckel 35) wird mit L₆ bezeichnet und die Länge von der Anschlagfläche 44 bis zum Griffende (auf der Rück- bzw. Unterseite des Handteils 1c ohne Verschlussdeckel 35) mit L₇, wobei stets L₆ > L₇ gilt.

Der Verschlussdeckel 35 weist an seinem hinteren Ende Einkerbungen 36 auf, welche dazu dienen, dass der Benutzer beim Verdrehen des Verschlussdeckels 35 mit den Fingern nicht so leicht abrutscht. An seiner höchsten Stelle, im Bereich der Frontpartie 3, weist der Handgriff 1 eine maximale Höhe H₁ auf. Im Bereich der Schalterpartie 2 erkennt man wiederum das Ein-/Ausschalter-Symbol 4.

Die **Fig. 1c** stellt eine Draufsicht auf die erfindungsgemässe Elektrozahnbürste gemäss **Fig. 1a** dar. Man erkennt wiederum das Aufsteckteil 60, den Handteil 1c sowie den Verschlussdeckel 35.

Im Übergangsbereich von dem Handteil 1c zu dem Verschlussdeckel 35 sind auf Seiten des Handteils 1c die Markierungen 6 und 7 angebracht sowie auf der Seite des Verschlussdeckels 35 die Markierung 37. Die beiden dreieckigen Markierungen 6 und 37 liegen sich dabei direkt gegenüber, was vorliegend bedeutet, dass die entsprechenden Kontaktbleche des Handteils 1c und des Verschlussdeckels 35 in Kontakt stehen, was weiter unten detaillierter erläutert wird.

Wird der Verschlussdeckel 35 so verdreht, dass sich die Markierungen 7 (auf Seite des Handteils 1c) und 37 (auf Seite des Verschlussdeckels) gegenüber liegen, dann bedeutet dies vorliegend, dass die entsprechenden Kontaktbleche des Handteils 1c sowie des Verschlussdeckels 35 nicht in Kontakt stehen.

Des Weiteren erkennt man, dass die Oberseite des Handgriffs 1 überwiegend aus der Weichkomponente 1b gebildet wird und auch im Bereich der Schalterpartie 2 sowie im Bereich der Frontpartie 3 eine Weichkomponente 1b' aufweist. Die Weichkomponente 1b' der Frontpartie 3 verläuft dabei bis zum Griffende und die Markierungen 6 und 7 sind im Bereich dieser Weichkomponente 1b' aufgebracht. Die Stege 57 sind aus der Hartkomponente 1a gebildet.

Etwa in der Mitte des Handgriffs 1 weist dieser eine Taillierung 11 auf, welche wiederum die Griffigkeit der Elektrozahnbürste verbessert (d.h. die Ergonomie ist optimiert und die Zahnbürste liegt so besser in der Hand) .

In **Fig. 1d** wird eine Unteransicht der erfindungsgemässen Elektrozahnbürste nach **Fig. 1a** wiedergegeben. Man erkennt, dass der Verschlussdeckel 35 auch auf der Rückseite eine dreieckförmige Markierung 38 aufweist. Auf der Rückseite des Verschlussdeckels 35 sind ebenfalls Einkerbungen 36 vorhanden. Der Verschlussdeckel 35 ist spiegelsymmetrisch aufgebaut und da er in zwei Positionen auf den Handgriff 1c aufgebracht werden kann, sind einerseits die dreieckförmige Markierung 38 und andererseits die Einkerbungen 36 (welche rund um den Verschlussdeckel 35 angeordnet sind) auch auf der Rückseite sichtbar.

Das Handteil 1c weist auf seiner Rückseite eine Flachstelle 10 auf, welche zur stabilen Ablage des Handteils 1c bzw. der Elektrozahnbürste dient. Hinter der Flachstelle 10, d.h. in Richtung des Verschlussdeckels 35, weist das Handteil 1c seine maximale Breite B₁ auf. Die Rückseite des Handteils 1c wird überwiegend aus der Hartkomponente 1a gebildet, allerdings sind auch auf der Rückseite mit Weichkomponente 1b' versehene Bereiche, nämlich die Rückenpartie 3a und der Abschluss des Handteils 1c, vorgesehen.

Die Weichkomponente 1b' dient wiederum einer verbesserten Griffigkeit der Elektrozahnbürste, indem etwa der Zeigefinger beim Halten des Handgriffs 1 nicht so leicht abrutscht.

Im Bereich des Übergangs vom Handgriff 1 zum Basisbereich 61 des Aufsteckteils 60 befindet sich auf Seiten des Handgriffs 1 ein Nocken 45, welcher mit einer korrespondierenden Ausnehmung 67 auf der Seite des Aufsteckteils 60 verrastet ist. Mit diesen beiden Elementen (Nocken 45 und Ausnehmung 67) kann das Abzugsgewicht für die Aufsteckbürste in sicherheitsrelevanter Hinsicht erhöht bzw. eingestellt werden. Je nach Toleranz zwischen den beiden Elementen und zugehöriger Materialwahl stellt sich das Abzugsgewicht ein.

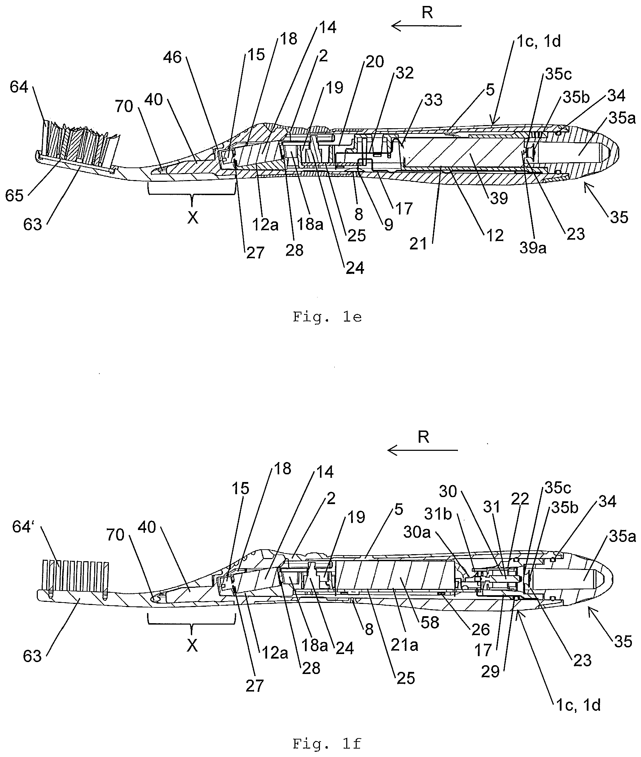

Die **Fig. 1e** zeigt eine Querschnittsansicht der erfindungsgemässen Elektrozahnbürste gemäss **Fig. 1a****.** Hierbei handelt es sich um die Batterieversion. Im Innenraum des Grundkörpers 5 bzw. des Handkörpers 1d ist ein Trägerelement 12 angeordnet, auf bzw. an dem alle wesentlichen Komponenten des Elektroantriebs angeordnet sind.

Der Verschlussdeckel 35 der Elektrozahnbürste ist auf das Handteil 1c aufgebracht. Der Verschlussdeckel 35 weist einen Deckelhohlraum 35a auf, in welchen der Batteriepol 39a der Batterie 39 hineinragt. Zum Kontaktieren des Batteriepols 39a weist der Verschlussdeckel ein Kontaktblech 35b mit einem Federblechelement 35c. Das Kontaktblech 35b liegt quer zum Deckelhohlraum 35a und verschliesst diesen mindestens teilweise. Das Kontaktblech 35b ist seitlich des Deckelhohlraums 35a in der entsprechenden Seitenwand in einer Ausnehmung und in der anschliessenden Seitenwand gehalten. Das Kontaktblech 35b schneidet zum Halten in die Seitenwand ein, sodass ein Reibschluss entsteht. Das Federblechelement 35c des Kontaktblechs 35b ist in Richtung Batterie 39 gerichtet und kontaktiert so den Batteriepol 39a.

Das Kontaktblech 35b stellt im Weiteren den Kontakt mit dem Trägerelement-Kontaktblech 17 her, damit der Stromkreis geschlossen wird.

Auf der Aussenseite des Verschlussdeckels 35 ist ein Dichtungsring 34 angeordnet, welcher den Innenraum des Handgriffs gegen Spritzwasser etc. abdichten hilft. Der Bereich des Trägerelements 12, welcher am hinteren Ende des Handgriffs mit dem vorderen Bereich des Verschlussdeckels 35 überlappt, wird als Anschlusskompartiment 23 bezeichnet.

In Einführrichtung R nach dem Anschlusskompartiment 23 ist das Batteriekompartiment 21 des Trägerelements 12 angeordnet, in welches eine Batterie 39 eingesetzt ist. Der vordere Pol der Batterie 39 berührt die Kontaktzunge 33 des entsprechenden Batterie-Kontaktblechs 32. Das Batterie-Kontaktblech 32 ist im Kontaktblechkompartiment 20 des Trägerelements 12 angeordnet, welches sich in Einführrichtung R direkt nach dem Batteriekompartiment 21 befindet. Das Batterie-Kontaktblech 32 ist des Weiteren mit der Printplatte 25 verbunden.

Innerhalb des Kontaktblechkompartiments 20 ist auch das Trägerelement-Kontaktblech 17, mindestens teilweise, angeordnet, welches ebenfalls mit der Printplatte 25 verbunden ist, wobei das Trägerelement-Kontaktblech 17 dann weiter entlang der unteren Aussenseite des Trägerelements 12 entlang des Batteriekompartiments 21 verläuft und auf der Aussenseite des Anschlusskompartiments 23 halbkreisförmig entlang dem Aussenumfang des Trägerelements 12 bzw. des Anschlusskompartiments 23, radial, weiter geführt wird, wo es in Öffnungen in der Aussenseite des Anschlusskompartiments hineinragt, um in der Art eines an sich bekannten Bajonettverschlusses mit dem Kontaktblech 35b des Verschlussdeckels 35 zusammen zu wirken (hier nicht dargestellt).

In Einführrichtung R nach dem Kontaktblechkompartiment 20 ist das Schalterkompartiment 19 vorgesehen, in welchem der Schalter 24 angeordnet ist, der durch Drücken des Ein-/Ausschalter-Symbols 4 der Schalterpartie 2 bedient wird. Der Schalter 24 ist direkt auf die Printplatte 25 aufgebracht.

In Einführrichtung R nach dem Schalterkompartiment 19 ist eine Kabeldurchführung 18a für die Kabel vorgesehen, welche von der Rückseite des Elektromotors 14 zur Unterseite der Printplatte verlaufen und dort entsprechend verlötet sind (die Kabel sind in der Darstellung nicht zu erkennen).

Der Elektromotor 14 ist schliesslich im Motorkompartiment 18 des Trägerelements 12 angeordnet, und zwar mit einer Schrägstellung, welche durch die Schräge 12a des Trägerelements 12 definiert wird, auf welcher die Unterseite des Elektromotors 14 aufliegt. Mit seiner Vorderseite bzw. Vorderkante liegt der Elektromotor 14 an einem vorderen Motoranschlag 27 des Trägerelements 12 an, mit seiner Hinterseite liegt der Elektromotor 14 am hinteren Motoranschlag 28 des Trägerelements 12 an.

Der auf der Rotationsachse A_{M} des Elektromotors 14 angeordnete Exzenter 15 ragt über den vorderen Motoranschlag 27 hinaus und in den Basisbereich 46 der steckerartigen Kupplungsstruktur 40 hinein. Diese Anordnung hat sich als besonders effizient für die Vibrationsübertragung erwiesen.

Man erkennt in der vorliegenden Querschnittsansicht auch, wie die steckerartige Kupplungsstruktur 40 des Handgriffs und die gegengleich ausgebildete, buchsenartige Kupplungsstruktur 70 des Aufsteckteils 60 die Schnittstelle X zwischen dem Handgriff 1 und dem Aufsteckteil 60 bilden.

Im Kopfbereich 63 des Aufsteckteils 60 ist das Trägerplättchen 65 zu erkennen, auf welchem die Reinigungselemente 64 angeordnet sind.

Bezüglich der konkreten Abmessungen, Materialien und sonstigen Ausgestaltungen wird auch auf die obige allgemeine Beschreibung zur Batterieversion verwiesen.

In der **Fig. 1f** wird nun eine Querschnittsansicht einer zweiten Ausführungsform der erfindungsgemässen Elektrozahnbürste dargestellt, nämlich die Akkuversion.

Auch hier ist wiederum der Verschlussdeckel 35 auf das hintere Ende des Handteils 1c aufgebracht. Das Kontaktelement 31 der Buchse 30 ragt dabei in den Deckelhohlraum 35a des Verschlussdeckels 35 hinein und zwar wiederum im Bereich des Anschlusskompartiments 23, welches im Bereich der Überlappung zwischen Trägerelement 12 und dem vorderen Ende des Verschlussdeckels 35 gebildet ist.

Auf der Aussenseite des Verschlussdeckels 35 ist wiederum ein Dichtungsring 34 angeordnet, welcher den Innenraum des Handgriffs 1 vor Spritzwasser etc. schützen hilft. Die Buchse 30 ist fest im Buchsenkompartiment 22 des Trägerelements 12 angeordnet, welches die Buchse 30 grösstenteils umfänglich umschliesst. Das Buchsenkompartiment 22 weist im Übrigen einen vorderen Anschlag 31b für die Buchse 30 auf, wobei die Buchse 30 mit ihrer Hinterseite daran anschlägt. Der in Einführrichtung R vordere Anschlag der Buchse 30 wird mit 31b bezeichnet.

Am Trägerelement 12 über dem Trägerelement-Kontaktblech 17 ist weiter eine Dichtung 29 (d.h**.** ein Dichtring) angebracht, welche eine weitere Abdichtung des Innenraums gegen Spritzwasser bringt. Des Weiteren dämpft diese Dichtung 29 auch unerwünschte Schwingungen.

Am in Einführrichtung R vorderen Ende der Buchse 30 (der eigentlichen Hinterseite der Buchse 30) befinden sich zwei Buchsenanschlüsse 30a, welche über (nicht dargestellte) Kabel mit der Printplatte 25 verbunden sind. Der Akku 58 ist fest auf der Printplatte 25 montiert bzw. angelötet und ist so auf dem Trägerelement 12 montiert und liegt mindestens teilweise direkt an diesem an. An der Unterseite des Trägerelements 12 sind mehrere Rastnasen 26 vorgesehen, mit denen die Printplatte am Trägerelement 12 gehalten wird.

Im Anschluss an das Akkukompartiment 21a folgt wiederum das Schalterkompartiment 19. Der Schalter 24 ist auch hier direkt auf der Printplatte 25 montiert und dort vorzugsweise fünffach verlötet. Auch in dieser Ausführungsform ist eine Kabeldurchführung 18a vorgesehen, durch welche Kabel vom hinteren Ende des Elektromotors 14 zur Printplatte 25 geführt werden.

Die Kabeldurchführung 18a ist etwas kürzer als die entsprechende Kabeldurchführung 18a bei der Batterieversion. Entsprechend ist das Schalterkompartiment 19 bei der Akkuversion etwas länger. In dem Motorkompartiment 18 ist wiederum der Elektromotor 14 in einer Schrägstellung angeordnet und wird an seiner Unterseite abgestützt von der Schräge 12a des Trägerelements 12**.**

Der auf der Rotationsachse A_{M} des Elektromotors aufgebrachte Exzenter 15 steht wiederum über den vorderen Motoranschlag 27 hinaus und ragt in den Basisbereich 46 der steckerartigen Kupplungsstruktur 40 hinein (d.h**.** wie bei der oben beschriebenen Batterieversion).

Auch in der Akkuversion definieren die steckerartige Kupplungsstruktur 40 und die im Wesentlichen gegengleich ausgebildete, buchsenartige Kupplungsstruktur 70 die Schnittstelle X. Der Kopfbereich 63 des Zahnbürsten-Aufsteckteils 60 ist bei dieser Ausführungsform etwas anders ausgestaltet als bei der Batterieversion.

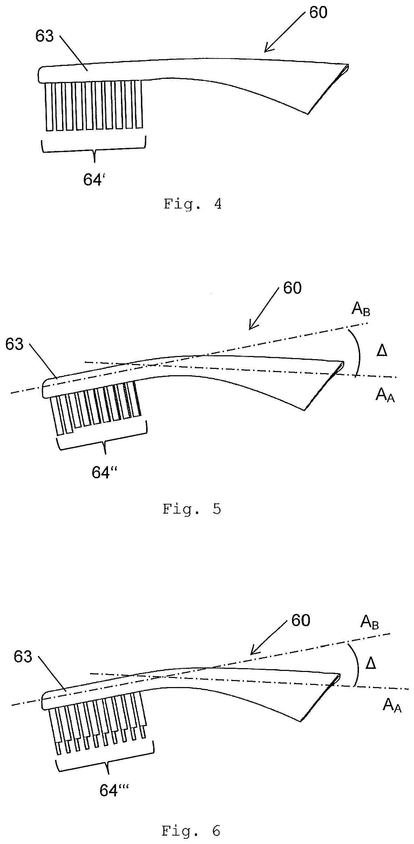

Anstelle eines in dem Kopfbereich montierten Trägerplättchens mit im AFT-Verfahren aufgebrachten Borsten bzw. Borstenbündel der Reinigungselementen 64 sind hier die Borstenbündel 64**'** im konventionellen Verfahren direkt in den Kopfbereich 63 eingestanzt. Des Weiteren weist die Längsachse des Kopfbereichs A_{B} hier weniger Neigung gegenüber der Längsachse des Handgriffs A_{G} auf. Allerdings kann auch in der Akkuversion das Zahnbürstenaufsteckteil der Batterieversion verwendet werden. Weitere Ausführungen zum entsprechenden Aufsteckteil sind in der Beschreibung zu Fig. 4 zu finden, die entsprechenden Aufsteckteile entsprechen sich.

Bezüglich der konkreten Abmessungen, Materialien und sonstigen Ausgestaltungen wird im Übrigen auch auf die obige allgemeine Beschreibung zur Akkuversion verwiesen.

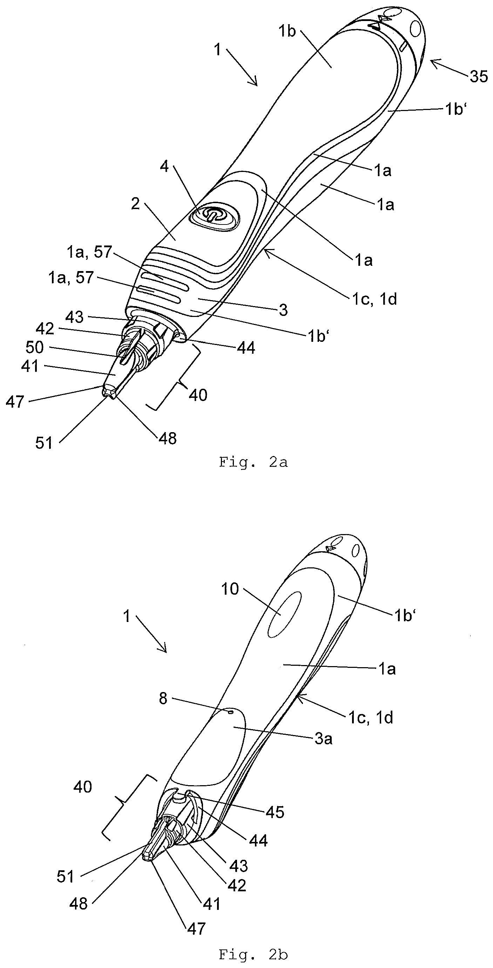

In **Fig. 2a** wird nun ein erfindungsgemässer Handgriff 1, das heisst ein Handteil 1c mit Verschlussdeckel 35 aber ohne Aufsteckteil 60 in perspektivischer Ansicht dargestellt.

Man erkennt insbesondere die schräge Anschlagfläche 44 des Handgriffs 1, an welche die Frontpartie 3 mit der Kombination aus Hart- und Weichkomponente angrenzt. Von der schrägen Anschlagfläche 44 ragt horizontal, d.h. im Wesentlichen parallel zur Längsachse A_{G} des Handgriffs 1, die steckerartige Kupplungsstruktur 40 ab. Diese unterteilt sich in drei Stufen, nämlich in die erste Stufe 41 am freien Ende, die zweite Stufe 42 sowie die dritte Stufe 43, welche in die schräge Anschlagfläche 44 übergeht.

Die erste Stufe 41 unterteilt sich in ein oberes Teilelement 47 und ein unteres Teilelement 48. Die erste Stufe 41 steigt in Richtung der zweiten Stufe rampenförmig an. Etwa auf der Hälfte der ersten Stufe 41 beginnt eine eckige Nut 50, welche sich auch über die gesamte zweite Stufe 42 bis zum Anschlag an die dritte Stufe 43 fortsetzt.

Frontal betrachtet weisen das obere und das untere Teilelement 47, 48 zusammen einen in etwa zahnförmigen Umriss auf (am freien Ende), welcher in Richtung des Handgriffs am Ende der ersten Stufe eine etwa achtförmige Gestalt annimmt. Die zweite Stufe 42 sowie die dritte Stufe 43 sind im Wesentlichen rund und im Wesentlichen zylindrisch ausgebildet.

Die **Fig. 2b** veranschaulicht eine perspektivische Ansicht des um 180 ° gedrehten Handgriffs 1 gemäss **Fig. 2a****.** Man erkennt zunächst wieder die Flachstelle 10 zum Ablegen des Handgriffs 1 sowie die Rückenpartie 3a, welche im Gegensatz zur Flachstelle 10, aus einer Weichkomponente 1b gebildet ist.

An dem in Richtung des Verschlussdeckels 35 gewandten Endes der Rückenpartie 3a ist weiterhin ein Entlüftungsloch 8 vorgesehen (gilt für alle Ausführungsformen). Durch dieses Entlüftungsloch 8 können Gase aus dem Innenraum des Handgriffs 1 entweichen.

Von der schrägen Anschlagfläche 44 aus entspringt an der Unterseite des Handgriffs 1 der Nocken 45, welcher in etwa ein Drittel der Länge der Unterseite der dritten Stufe 43 umfasst.

An der Unterseite des unteren Teilelements 48 der ersten Stufe 41 ist eine runde Nut 51 vorgesehen, welche sich über die gesamte zweite Stufe 42 fortsetzt. Die eckige Nut 50 auf der Oberseite des oberen Teilelements 47 und die runde Nut 51 an der unteren Seite des unteren Teilelements 48 dienen insbesondere zu einem sicheren und verdrehungsfreien Einführen in die entsprechende buchsenartige Kupplungsstruktur 70 eines erfindungsgemässen Aufsteckteils 60.

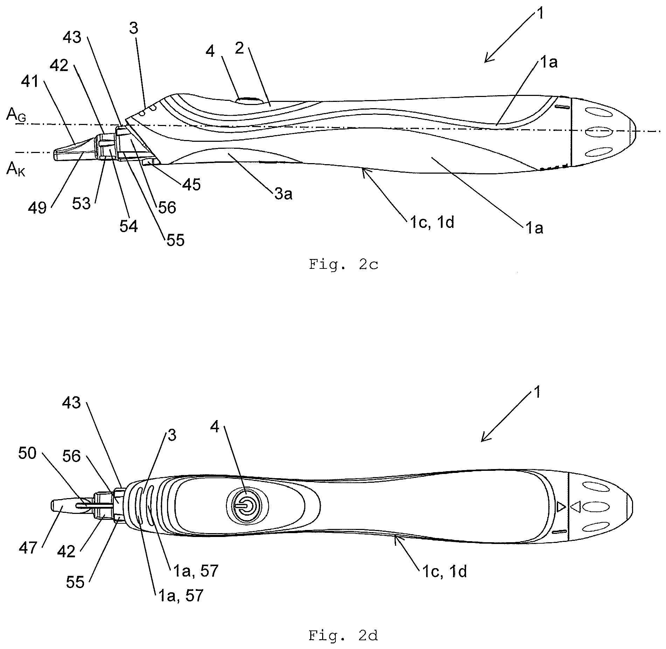

Die **Fig. 2c** ist eine Seitenansicht des erfindungsgemässen Handgriffs 1 gemäss **Fig. 2a****.** Man erkennt wiederum an der Unterseite der dritten Stufe 43 den Nocken 45 sowie einen umfänglichen Vorsprung 56 der dritten Stufe und eine umfängliche Aussparung 55 der dritten Stufe. Auch die zweite Stufe 42 weist jeweils umfängliche Vorsprünge 54 und umfängliche Aussparungen 53 auf, welche in der Regel versetzt angeordnet sind zu den umfänglichen Vorsprüngen bzw. Aussparungen der dritten Stufe 43. Des Weiteren ist die Längsachse A_{K} der steckerartigen Kupplungsstruktur 40 parallel versetzt ist zur Längsachse A_{G} des Handgriffs 1.

Die erste Stufe weist zudem eine zwischen dem oberen Teilelement 47 und dem unteren Teilelement 48 verlaufende Nut 49 auf, welche über die gesamte Länge der ersten Stufe 41 verläuft. Die Nut 49 ist etwa in Form einer Einkerbung ausgebildet, was zu der achtförmigen Gestalt, insbesondere des hinteren Endes der ersten Stufe, führt.

In der Draufsicht gemäss **Fig. 2d** erkennt man, dass die eckige Nut 50 etwa nach der Hälfte der ersten Stufe 41 bzw. des oberen Teilelements 47 beginnt und sich bis zum Anschlag zur dritten Stufe 43 fortsetzt. Zudem erkennt man nochmals die umfänglichen Aussparungen 55 und die umfänglichen Vorsprünge 56 der dritten Stufe.

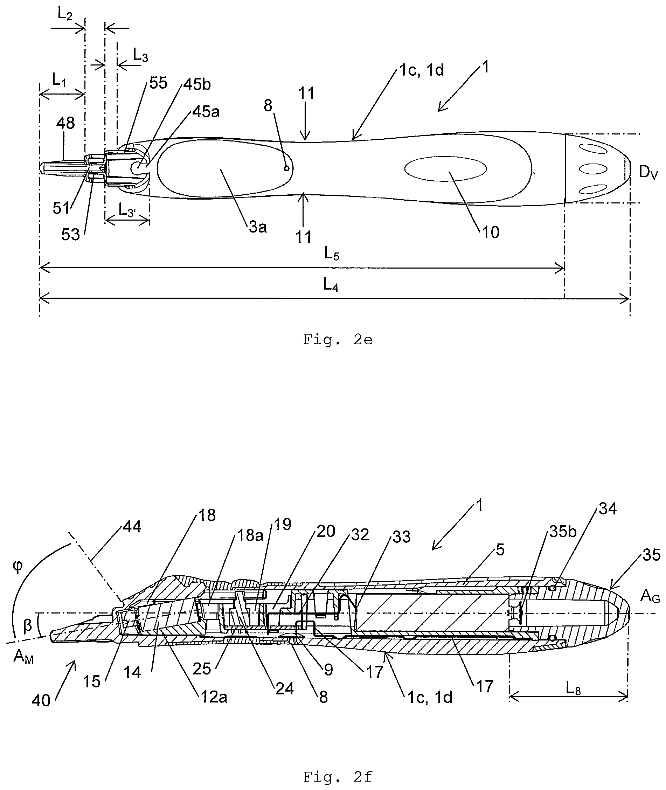

Aus der in **Fig. 2e** gezeigten Unteransicht des erfindungsgemässen Handgriffs 1 lassen sich die Längenverhältnisse der einzelnen Stufen der steckerartigen Kupplungsstruktur 40 des Handgriffs 1 erkennen. Die erste Stufe 41 weist eine Länge L₁ auf, die zweite Stufe 42 weist eine Länge L₂ auf und die dritte Stufe 43 weist eine Länge L₃ an der Oberseite sowie eine Länge L_{3'} an der Unterseite auf. Die erste Stufe 41 ist länger als die zweite Stufe 42 und in etwa gleich lang wie die dritte Stufe 43 an ihrer Unterseite. Die dritte Stufe 43 ist an ihrer Unterseite entsprechend länger als die zweite Stufe 42, allerdings an ihrer Oberseite etwas kürzer als die zweite Stufe 42.

An der Unterseite der dritten Stufe 43 ist wiederum der Nocken 45 zu sehen, welcher sich aufteilt in den Stamm 45a sowie die Krone 45b. Diese Ausgestaltung sichert ein besonders gutes Verrasten mit der gegengleich ausgebildeten Ausnehmung 67 des Aufsteckteils 60.

Die Rückenpartie 3a weist an ihrem zum Verschlussdeckel 35 hin gelegenen Ende wiederum das Entlüftungsloch 8 auf. Weiterhin erkennt man wiederum die Taillierung 11 und die Flachstelle 10.

Der maximale Durchmesser des Verschlussdeckels 35 wird mit D_{V} bezeichnet. Die Länge des erfindungsgemässen Handgriffs 1 mit Verschlussdeckel 35, gemessen vom freien Ende der steckerartigen Kupplungsstruktur 40 bis zum hinteren Ende des Verschlussdeckels 35 wird mit L₄ bezeichnet und die Gesamtlänge des Handgriffs 1 ohne Verschlussdeckel, d.h. gemessen vom freien Ende der steckerartigen Kupplungsstruktur 40 bis zum hinteren Ende des Handgriffs wird mit L₅ bezeichnet.

Bezüglich der konkreten Abmessungen, Materialien und sonstigen Ausgestaltungen wird im Übrigen auch auf die obige allgemeine Beschreibung zum Handgriff verwiesen.

Die **Fig. 2f** ist eine Querschnittsansicht des erfindungsgemässen Handgriffs gemäss **Fig. 2a** und entspricht der **Fig. 1e** (nur ohne Aufsteckteil 60). Zusätzlich wird hier die Gesamtlänge des Verschlussdeckels bezeichnet, und zwar mit L₈. Des Weiteren ist gezeigt, dass zwischen der Längsachse des Handgriffs A_{G} sowie der Rotationsachse des Elektromotors A_{M} ein Winkel β gebildet wird, welcher der Schrägstellung des Elektromotors 14 entspricht.

Vermittels der hierdurch erreichten Einbettung des Exzenters 15 in den Basisbereich 46 der steckerartigen Kupplungsstruktur 40 kann eine besonders effiziente Vibrationsübertragung erreicht werden. Im Übrigen bildet die Rotationsachse A_{M} des Elektromotors 14 mit der Anschlagfläche 44 des Handgriffs 1 einen Winkel φ, welcher ebenfalls für eine optimale Vibrationsübertragung abgestimmt ist (vgl. konkrete Zahlen in der obigen allgemeinen Beschreibung).

Im Übrigen erkennt man, dass an der Stelle, an welcher das Trägerelement-Kontaktblech 17 an der Printplatte 25 befestigt ist, die Entlüftungsmembrane 9 vorgesehen ist, welche verhindert, dass Gase von aussen in den Innenraum des Handgriffs 1 penetrieren können. Die übrigen Bezugszeichen bezeichnen - wie auch bei allen anderen Ausführungsformen - jeweils dieselben Komponenten.

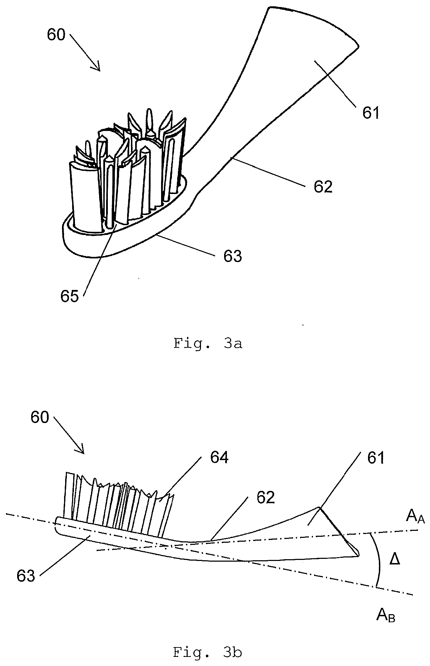

**Fig. 3a** veranschaulicht eine perspektivische Ansicht einer ersten beispielhaften Form eines erfindungsgemässen Aufsteckteils 60 für eine Zahnbürste. Dieses weist wiederum einen Basisbereich 61 sowie einen Kopfbereich 63 auf, welche durch einen Halsbereich 62 verbunden sind. In dieser Ausführungsform ist im Kopfbereich 63 ein Trägerplättchen 65 montiert, auf welchem die Reinigungselemente 64 angeordnet sind (AFT-Verfahren).

Die **Fig. 3b** ist eine Seitenansicht des erfindungsgemässen Aufsteckteils 60 für eine Zahnbürste gemäss **Fig. 3a****.** Man erkennt, dass bei dieser Ausführungsform der Basisbereich 61 (bzw. der Basisbereich 61 und der Halsbereich 62) einen Winkel gegenüber dem flachen Kopfbereich 63 aufweisen. Der Winkel ist definiert als Winkel zwischen der Längsachse des Aufsteckteils A_{A} und der Längsachse des Kopfbereichs A_{B} und wird mit Δ bezeichnet. Die Masse für den Winkel sind der obigen Beschreibung zu entnehmen.

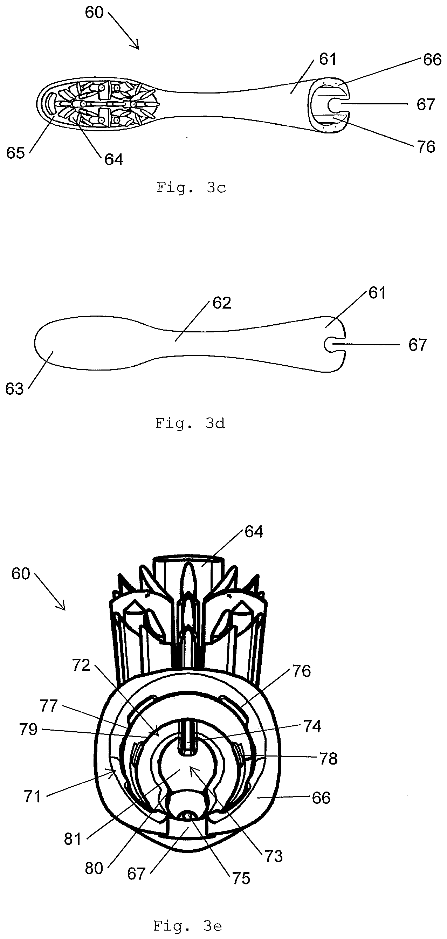

**Fig. 3c** zeigt eine Draufsicht auf die erfindungsgemässe Aufsteckteils 60 für eine Zahnbürste gemäss **Fig. 3a****.** Man erkennt wiederum die Reinigungselemente 64, welche auf den Trägerplättchen 65 angeordnet sind. Des Weiteren erkennt man die schräge Anschlagfläche 66 am Basisbereich 61 der Aufsteckzahnbürste 60. An die zum Nocken 45 des Handgriffs 1 gegengleich ausgebildete Ausnehmung 67 der Aufsteckzahnbürste 60 grenzen an der Innenseite jeweils umfängliche Aussparungen 76 an.

Die **Fig. 3d** ist eine Unteransicht des erfindungsgemässen Aufsteckteils 60 für eine Zahnbürste. Man erkennt wiederum den Kopfbereich 63, den Halsbereich 62 sowie den Basisbereich 61 mit der Ausnehmung 67.

**Fig. 3e** ist eine Hinteransicht des erfindungsgemässen Aufsteckteils 60 für eine Zahnbürste, d.h. es wird der Innenraum des Aufsteckteils 60 für eine Zahnbürste veranschaulicht.

Der Innenraum umfasst im Wesentlichen die buchsenartige Kupplungsstruktur 70, welche sich korrespondierend in drei Stufen unterteilt, nämlich die erste Stufe 71 (das Pendant zur dritten Stufe des Handgriffs), die zweite Stufe 72 (das Pendant zur zweiten Stufe des Handgriffs) sowie die dritte Stufe 73 (das Pendant zur ersten Stufe des Handgriffs). Man erkennt des Weiteren die von der schrägen Anschlagfläche 66 ausgehend gebildete Ausnehmung 67 für den Nocken 45 des Handgriffs 1.

Die erste Stufe umfasst umfängliche Aussparungen 76 sowie umfängliche Vorsprünge 77. Die Aussparungen und Vorsprünge sind symmetrisch zu einander ausgebildet, wobei die Vorsprünge 77 der ersten Stufe 71 des Aufsteckteils 60 mit den entsprechenden umfänglichen Vorsprüngen 56 der dritten Stufe 43 des Handgriffs 1 in Anlage gelangen. Dadurch wird erreicht, dass die Luft beim Aufstecken des Aufsteckteils auf die Kupplungsstruktur 40 des Handgriffs 1 entweichen kann.

Insoweit ist hier bei der ersten Stufe 71 der buchsenartigen Kupplungsstruktur 70 und der dritten Stufe 43 der steckerartigen Kupplungsstruktur 40 keine (vollständige) Gegengleichheit gegeben. Gleiches gilt auch im Hinblick auf die zweite Stufe 72 der buchsenartigen Kupplungsstruktur 70, welche wiederum umfängliche Aussparungen 78 sowie umfängliche Vorsprünge 79 aufweist, wobei die umfänglichen Vorsprünge 79 dieser zweiten Stufe 72 in Anlage gelangen mit den umfänglichen Vorsprüngen 54 der zweiten Stufe 42 der steckerartigen Kupplungsstruktur 40 des Handgriffs 1. Diese Ausgestaltung dient ebenfalls der Entlüftung.

Die zweite Stufe 72 der buchsenartigen Kupplungsstruktur 70 weist aber an der Oberseite einen eckigen Kamm 74 auf, welcher in seiner Ausgestaltung mit der eckigen Nut 50 der steckerartigen Kupplungsstruktur 40 korrespondiert. Der eckige Kamm 74 setzt sich entsprechend von der zweiten Stufe 72 des zur dritten Stufe 73 der buchsenartigen Kupplungsstruktur 70 fort, so dass er vollständig in Eingriff mit der eckigen Nut 50 der steckerartigen Kupplungsstruktur 40 des Handgriffs 1 gelangen kann.

Auf der Unterseite der zweiten Stufe 72 der buchsenartigen Kupplungsstruktur 70 ist entsprechend ein runder Kamm 75 angeordnet, welcher mit der runden Nut 51 an der Unterseite des unteren Teilelements 48 der ersten Stufe 41 der steckerartigen Kupplungsstruktur 40 korrespondiert. Auch der runde Kamm 75 setzt sich über die dritte Stufe 73 der buchsenartigen Kupplungsstruktur 70 hinweg fort.

Die dritte Stufe 73 der buchsenartigen Kupplungsstruktur 70 weist entsprechend eine achtförmige Öffnung 81 auf, an deren Seiten jeweils eine spitz zulaufende Rippe 80 ausgebildet ist, wobei die spitz zulaufenden Rippen 80 mit den beiden Nuten 49 zwischen dem oberen Teilelement 47 und dem unteren Teilelement 48 der ersten Stufe 41 der steckerartigen Kupplungsstruktur 40 korrespondieren bzw. mit diesen in Eingriff gelangen.

Die vorstehend beschriebene Ausgestaltung der buchsenartigen Kupplungsstruktur 70 gilt im Übrigen für sämtliche erfindungsgemässen Aufsteckteile.

Die **Fig. 4 und 5** zeigen Seitenansichten von weiteren Ausführungsformen eines erfindungsgemässen Zahnbürsten-Aufsteckteils 60. Die Ausführungsformen gemäss **Fig. 4** weist konventionelle Borstenbündel 64' im Kopfbereich 63 auf. Das Aufsteckteil 60 weist hier praktisch keinen Winkel auf. Der Winkel Δ ist quasi 0°.

In der Ausführungsform gemäss **Fig. 5** weisen die Borstenbündel 64" unterschiedliche Längen auf. Insbesondere die zum freien Ende des Kopfbereichs 63 hin angeordneten Borstenbündel 64'' sind etwas länger ausgebildet als die übrigen Borstenbündel. Das Aufsteckteil 60 weist weiterhin einen Winkel Δ zwischen der Längsachse des Aufsteckteils A_{A} und der Längsachse des Kopfbereichs A_{B} auf. Die Masse für den Winkel sind der obigen Beschreibung zu entnehmen.

Bei der Ausführungsform gemäss **Fig. 6** weisen die im Kopfbereich 63 angeordneten Borstenbündel 64‴ jeweils eine Abstufung an ihrem freien Ende auf. Solche Ausgestaltungen dienen insbesondere einer verbesserten Reinigung der Zahnzwischenräume. Auch bei dieser Ausführungsform weist das Aufsteckteil 60 einen Winkel Δ auf. Die Masse für den Winkel sind der obigen Beschreibung zu entnehmen.

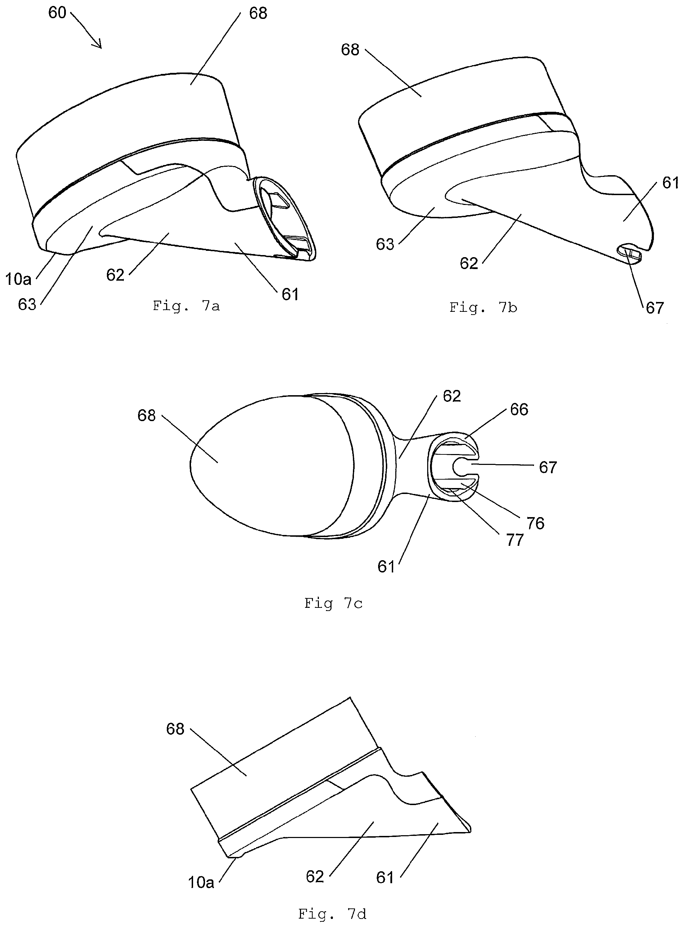

Die **Fig. 7a bis 7d** veranschaulichen eine weitere Ausführungsform eines erfindungsgemässen Aufsteckteils 60, hier in Form einer Gesichtsbürste.

Wie zu sehen, ist bei der Gesichtsbürste der Halsbereich 62 deutlich verkürzt (d.h. insbesondere gegenüber den Aufsteckteilen für eine Zahnbürste), so dass der Kopfbereich 63 praktisch oberhalb der Schnittstelle X liegt (d.h. im aufgesteckten Zustand).

Die Gesichtsbürste weist ein Borstenfeld 68 auf, welches aus mehreren Borstenbüscheln gebildet sein kann, oder aber ein durchgängiges Feld bzw. ein Teppich aus aneinander anliegenden Einzelborsten sein kann. Die Borsten bei dieser Anwendungsform sind regelmässig sehr fein ausgebildet, um allfällige Hautirritationen zu vermeiden.

Im Basisbereich 61 der Gesichtsbürste ist wiederum die zu Nocken 45 des Handgriffs gegengleiche Ausnehmung 67 ausgebildet. Die Anschlagfläche 66 weist wiederum die entsprechende Abschrägung auf. Auch hier ist natürlich eine buchsenartige Kupplungsstruktur 70 im Innenraum des Aufsteckteils vorgesehen, von der etwa in **Fig. 7c** die umfänglichen Aussparungen 76 der ersten Stufe 71 zu erkennen sind.

Weiter ist in den Fig. 7a und 7d im Speziellen die Flachstelle 10a am Aufsteckteil zu erkennen. Diese korrespondiert mit der oder den Flachstelle(n) 10 am Handgriff 1.

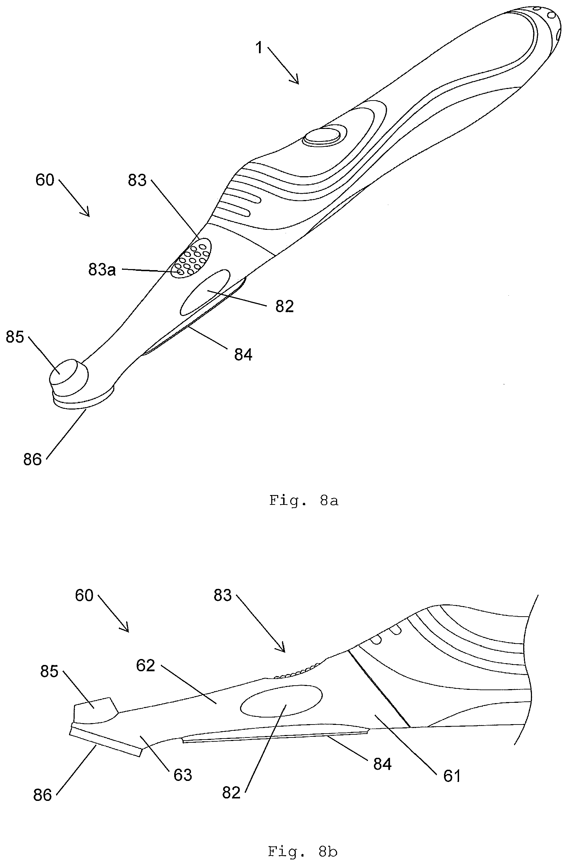

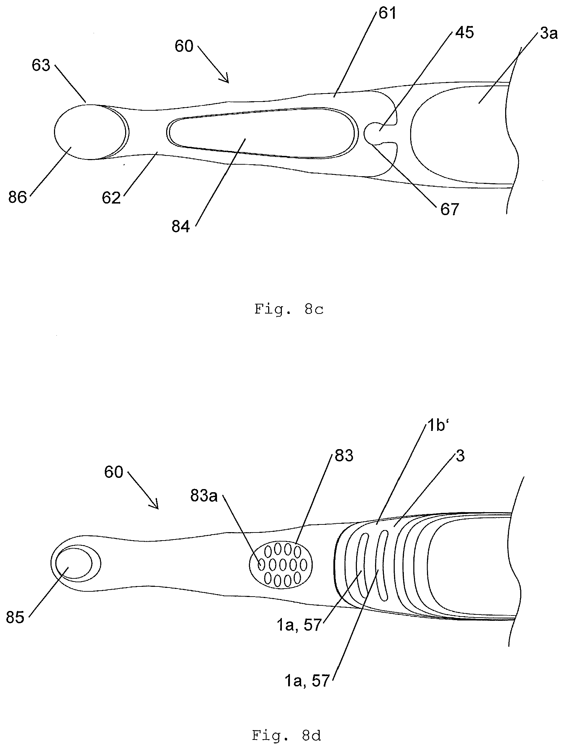

Als weitere Ausführungsform eines erfindungsgemässen Aufsteckteils wird in den **Fig. 8a** **bis d** ein Nailtool dargestellt.

Das Aufsteckteil 60 weist wiederum einen Basisbereich 61 auf, in welchem wiederum die Ausnehmung 67 zur Aufnahme des Nockens 45 des Handgriffs ausgebildet ist. An der Unterseite des Nailtools ist ein erster Aufsatz 84 ausgebildet, welcher vorzugsweise als Nagelfeile ausgestaltet ist. Dieser erstreckt sich im Wesentlichen über den Basisbereich 61 sowie den Halsbereich 62 des Nail Tools.

Am freien Ende des Nailtools ist an der Unterseite ein Behandlungselement 86 angeordnet, welches die oben in der allgemeinen Beschreibung aufgezeigten Ausgestaltungen (etwa Schleif-, Polier-, Lackiermittel) aufweisen kann. Das Behandlungselement 86 ist an der Unterseite des Kopfbereichs 63 angeordnet. Auf der Oberseite des Kopfbereichs 63 ist ein zweiter Aufsatz 85 angeordnet, welcher etwa als wechselbare Schmiergelscheibe etc. ausgestaltet sein kann.

Da für diese Anwendung als Nailtool das Gerät besonders genau geführt werden muss, sind an der Oberseite sowie an den Seitenwänden des Aufsteckteils Griffmulden 82, 83 vorgesehen. Auf der Oberseite ist insbesondere eine Griffmulde 83 mit Noppen 83a vorgesehen. Die seitlichen Griffmulden 82 weisen hier keine Noppenstruktur auf und sind als Vertiefungen geformt.

Die Griffmulden 82, 83 bzw. auch die Noppen 83a können aus Hart- und/oder Weichkomponente gebildet werden.

Auf diese Weise kann die Griffigkeit bzw. Führung des Gerätes signifikant verbessert werden. Die Stege 57 und die Weichkomponente der Frontpartie 3 können dabei als zusätzliche Abstützung für einen Führungsfinger oder Führungspartien der Hand dienen.

Bezüglich der konkreten Abmessungen, Materialien und sonstigen Ausgestaltungen wird im Übrigen auch auf die obige allgemeine Beschreibung zum Gesichtsbürsten-Aufsteckteil verwiesen.

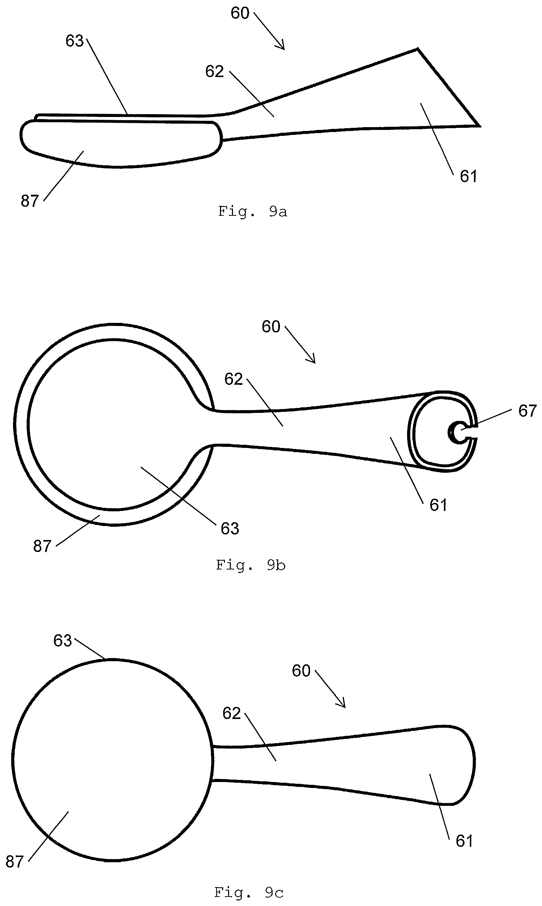

Als weitere Ausführungsform eines erfindungsgemässen Aufsteckteils wird in den **Fig. 9a** **bis c** ein Aufsteckteil mit einer schwammartigen Struktur dargestellt.

Das Aufsteckteil 60 weist wiederum einen Basisbereich 61 auf, in welchem wiederum die Ausnehmung 67 zur Aufnahme des Nockens 45 des Handgriffs ausgebildet ist.

Am freien Ende des Aufsteckteils 60 ist an der Unterseite ein Behandlungselement 87 in schwammartiger Struktur angeordnet. Das Behandlungselement 87 ist an der Unterseite des Kopfbereichs 63 angeordnet.

Bezüglich der konkreten Abmessungen, Materialien und sonstigen Ausgestaltungen wird im Übrigen auch auf die obige allgemeine Beschreibung verwiesen.

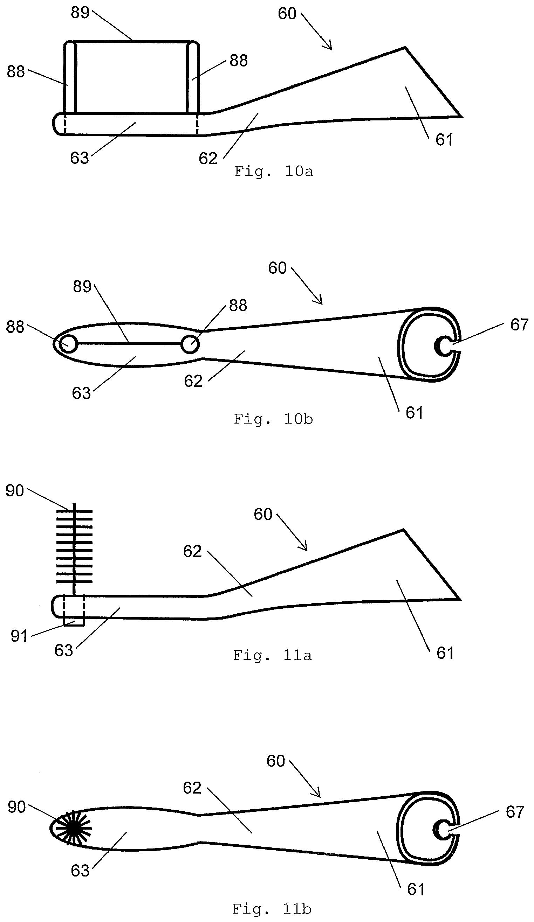

Als weitere Ausführungsform eines erfindungsgemässen Aufsteckteils wird in **Fig. 10a** **und b** ein Flosser-Aufsteckteil dargestellt. Das Aufsteckteil 60 weist wiederum einen Basisbereich 61, in welchem wiederum die Ausnehmung 67 zur Aufnahme des Nockens 45 des Handgriffs ausgebildet ist. Am freien Ende auf der Oberseite sind zwei Haltearme 88 geformt, zwischen welchen ein Stück Zahnseide 89 gespannt ist.

Die Haltearme 88 sind direkt an der Oberseite des Kopfbereichs 63 angeordnet.

Die beschriebene Wechselbarkeit des funktionalen Elements ohne Wechsel des Grundkörpers des Aufsteckteils wird durch die beiden gestrichelten Linien im Kopfbereich angedeutet. Im Grundkörper kann eine Ausnehmung angeordnet sein, in welche das Funktionale Element, d.h. der eigentliche Flosser wechselbar montiert ist.

Bezüglich der konkreten Abmessungen, Materialien und sonstigen Ausgestaltungen wird im Übrigen auch auf die obige allgemeine Beschreibung verwiesen.

Als weitere Ausführungsform eines erfindungsgemässen Aufsteckteils wird in **Fig. 11a** **und b** ein Interdental-Aufsteckteil dargestellt. Das Aufsteckteil 60 weist wiederum einen Basisbereich 61, in welchem wiederum die Ausnehmung 67 zur Aufnahme des Nockens 45 des Handgriffs ausgebildet ist.

Das funktionale Element ist so gestaltet, dass eine Wechselbarkeit besteht. Das Tragelement der Interdentalbürste 91 ist zusammen mit der Interdentalbürste 90 fest verbunden. Durch die Anordnung des Tragelements der Interdentalbürste 91 im Kopfbereich 63 des Aufsteckteils 60 entsteht das funktionierende Aufsteckteil.

Das funktionale Element ist wie oben beschrieben wechselbar. Die Wechselbarkeit des funktionalen Elements ohne Wechsel des Grundkörpers des Aufsteckteils wird durch die beiden gestrichelten Linien im Kopfbereich angedeutet. Im Grundkörper kann eine Ausnehmung angeordnet sein, in welche das Funktionale Element bzw. das Tragelement der Interdentalbürste 91, welches mit der Interdentalbürste 90 verbunden ist, einbringbar ist. Der Wechselmechanismus kann auf verschiedene bekannte Weisen realisiert werden beispielsweise durch eine Schraubung oder einen Bajonettverschluss.

Bezüglich der konkreten Abmessungen, Materialien und sonstigen Ausgestaltungen wird im Übrigen auch auf die obige allgemeine Beschreibung verwiesen.

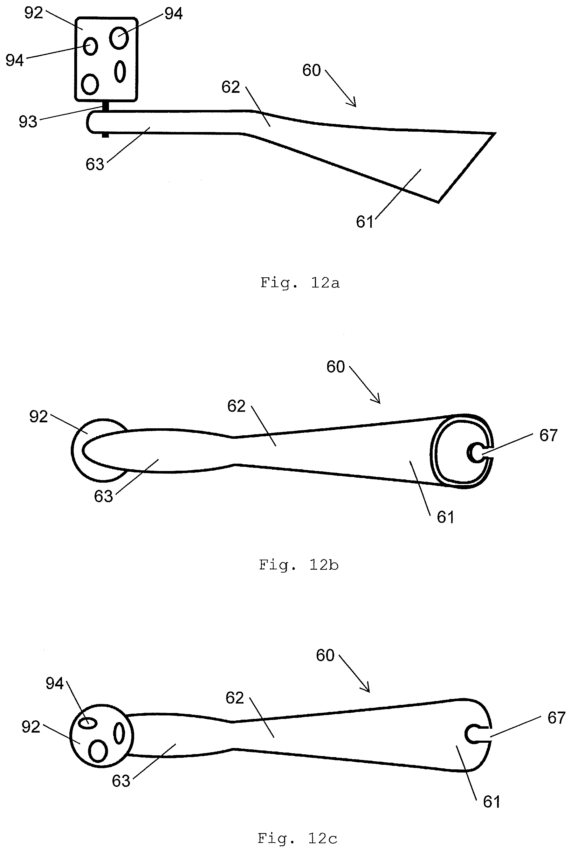

Als weitere Ausführungsform eines erfindungsgemässen Aufsteckteils wird in **Fig. 12a** **bis c** ein Massageroller-Aufsteckteil dargestellt. Das Aufsteckteil 60 weist wiederum einen Basisbereich 61, in welchem wiederum die Ausnehmung 67 zur Aufnahme des Nockens 45 des Handgriffs ausgebildet ist.

Das Massageroller-Aufsteckteil 60 weist im Kopfbereich 63 einen eigentlichen Massageroller, d.h. einen Zylinder 92 auf, der auf der Drehachse des Massagerollers 93 gelagert ist. Die Drehachse des Massagerollers 93 ist im Kopfbereich des Aufsteckteils 60 fixiert und nicht wechselbar angeordnet. Auf der Oberfläche des Massagerollers sind Vertiefungen 94 gezeigt, die zur Massage dienen. Die Vertiefungen 94 sind auf dem Zylinder als auch auf der freien Grundfläche angeordnet.

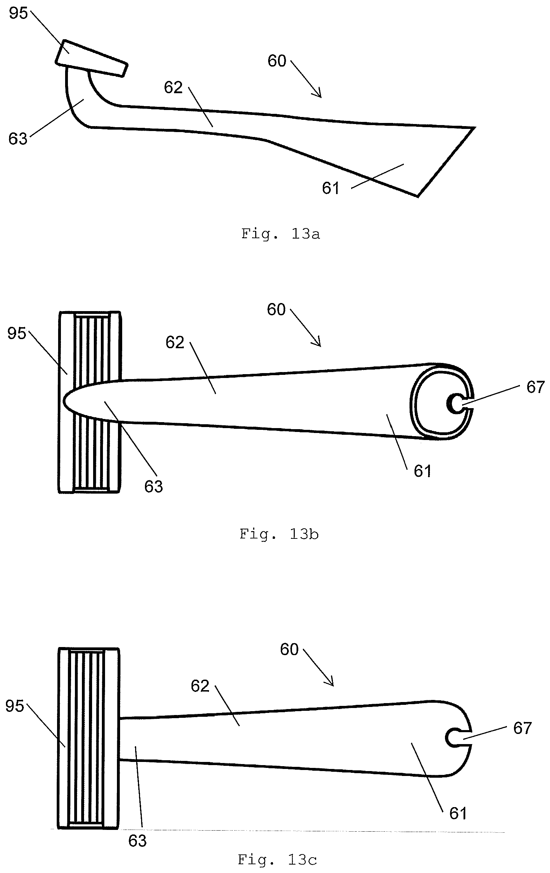

Als weitere Ausführungsform eines erfindungsgemässen Aufsteckteils wird in **Fig. 13a** **bis c** ein Nassrasierer-Aufsteckteil dargestellt. Das Aufsteckteil 60 weist wiederum einen Basisbereich 61, in welchem wiederum die Ausnehmung 67 zur Aufnahme des Nockens 45 des Handgriffs ausgebildet ist.

Die Klinge des Nassrasierers 95 ist am Kopfteil 63 angeordnet und kann wechselbar oder fix montiert sein, wie dies bereits oben beschrieben ist.

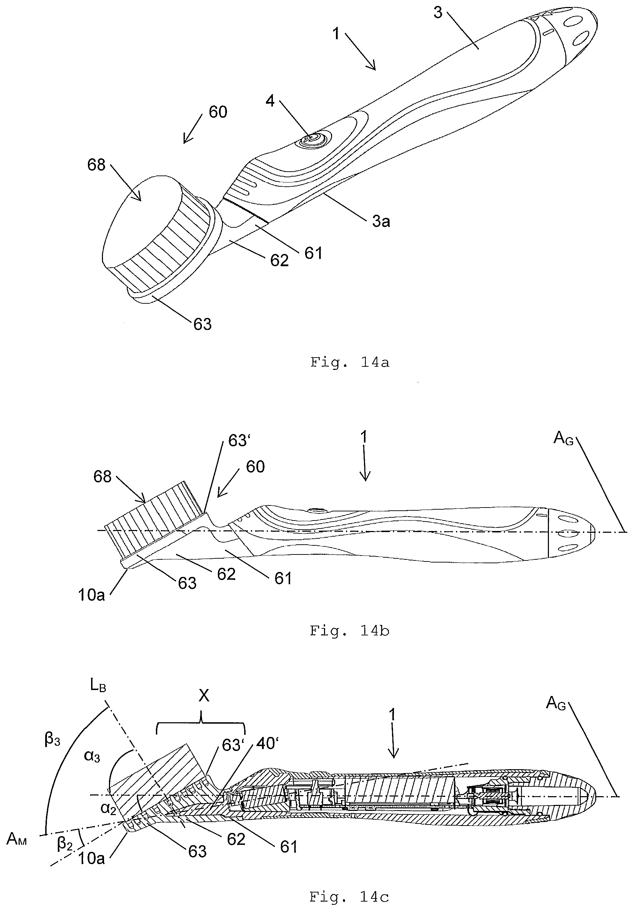

In den Fig. 14a bis 14c wird die Ausführungsform des Aufsteckteils 60 in Form einer Gesichtsbürste gemäss Fig. 7a bis 7d gezeigt, wie sie auf einem Handgriff 1 montiert ist.

Der deutlich verkürzte Halsbereich 62 bringt mit sich dass der Kopfbereich 63 praktisch oberhalb der Schnittstelle X liegt. Der Kopfbereich 63 weist eine Grundfläche 63' (Borstenaustrittsfläche) auf.

Weiter ist erkennbar, dass das Borstenfeld 68 des Gesichtsbürsten-Aufsteckteils 60 über die hintere Fläche der Aufsteckbürste hinaus ragt. Ebenfalls erkennbar ist, dass die (gedachte) Verlängerung der steckerartigen Kupplungsstruktur 40 des Handgriffs 1 das Borstenfeld bzw. die Borsten schneidet.

Zu erkennen ist, dass auf der Rückseite des Aufsteckteils die Flachstelle 10a ausgeformt ist, welche mit der Flachstelle auf der Rückseite des Handgriff 1 korrespondiert.

Im montierten Zustand erkennt man, dass der Bürstenkopf grösser ist als die Schnittstelle X und so ein Element bildet, welches eine gute Handhabung für die Montage und Demontage des Gesichtsbürsten-Aufsteckteils 60 auf dem Handgriff 1 bildet.

Die Längsachse A_{G} des Handgriffs 1 schliesst mit der Grundfläche 63' den Winkel α₂ ein und mit der Längsachse L_{B} der Borsten den Winkel α₃. Die Rotationsachse A_{M} des Vibrationsmotors 14 schliesst mit der Grundfläche 63' den Winkel β₂ ein und mit der Längsachse L_{B} der Borsten den Winkel β₃.

In der Zeichnung sind nicht alle Bezugszeichen aufgeführt, denn die Zeichnung des Handteils 1 korrespondiert mit Fig. 1f, wobei die Bezugszeichen für ebendieses Handteil 1 identisch sind.

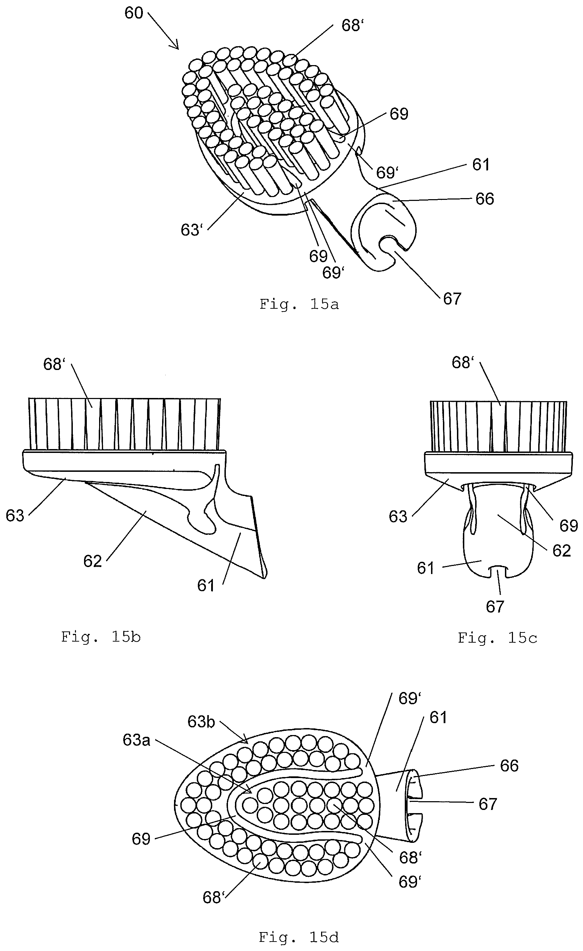

Fig. 15a bis 15d zeigen eine weitere Ausführungsform eines erfindungsgemässen Aufsteckteils 60 mit Verwendung als Gesichtsbürste.

Gezeigt ist ein Aufsteckteil 60 mit einer Ausnehmung 69 im Borstenfeld, welche dem Kopfbereich eine gewisse Flexibilität gibt. Gezeigt ist eine geschlossene Ausnehmung 69, welche von der Oberseite des Aufsteckteils 1 zur Unterseite des Aufsteckteils 1 reicht.

Der äussere Teil des Borstenfeldes 68 ist hufeisenförmig um eine Zunge im Zentrum gelegt. Die Verbindung 69' links und rechts der zentralen Zunge ist die einzige Verbindung des hufeisenförmigen Teils zum eigentlichen Aufsteckteil. Damit wird eine Flexibilität erreicht, der Aussenring kann sich flexibel bewegen.

Zu bemerken ist, dass in Fig. 15a die Schnittstelle nur stilisiert angedeutet ist.

Es sind Borstenbündel 68' auf dem statischen Teil bzw. Teilbereich 63a und auf dem flexiblen Teil bzw. Teilbereich 63b angebracht. In der dargestellten Variante beträgt das Verhältnis 21:44 Borstenlöcher/Borstenbündel. Die Fläche des statischen Teilbereichs 63a in der dargestellten Variante beträgt rund 550 mm² bis 650 mm² und die des flexiblen Teilbereichs 63b zwischen rund 1100 mm² und 1300 mm².

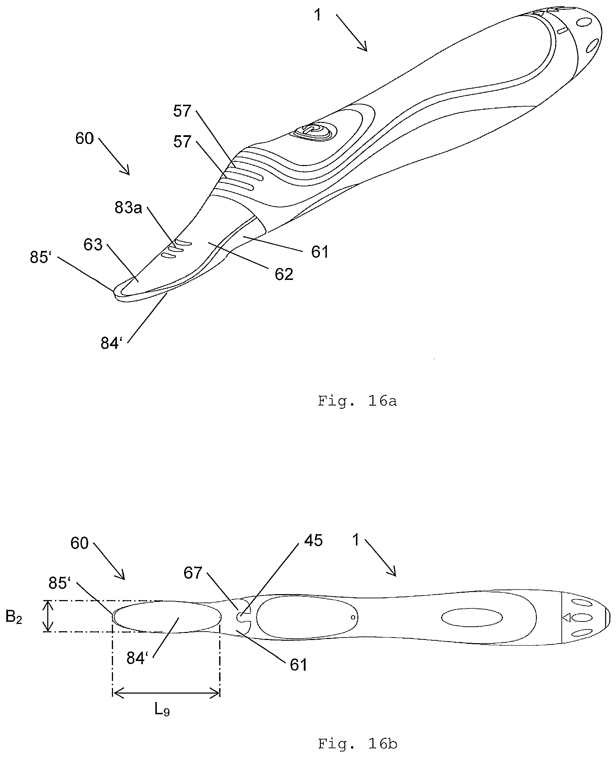

In Fig. 16a bis 16e ist eine weitere Ausgestaltung eines erfindungsgemässen Nailtools gezeigt.

Das Aufsteckteil 60 weist wiederum einen Basisbereich 61 auf, in welchem wiederum die Ausnehmung 67 zur Aufnahme des Nockens 45 des Handgriffs ausgebildet ist.

An der Unterseite des Nailtools ist ein erster Aufsatz mit einer Arbeitsfläche in Form einer Schleif- bzw. Polierfläche 84' ausgebildet, welche vorzugsweise etwa als Nagelfeile ausgestaltet ist. Diese erstreckt sich im Wesentlichen über den Halsbereich 62 sowie den Kopfbereich 63 des Nail Tools.

Auf der Oberseite des Kopfbereichs 63 ist ein Behandlungselement (Oberseite) 85' angeordnet. Dieses Behandlungselement ist als Kante bzw. Schabkante für das Zurückschieben der Nagelhaut gestaltet. Die Kante ist als relativ scharfe Kante sowie zumindest teilweise freigestellte Kante gestaltet, sodass die Behandlung möglich ist.

Die Kante definiert (bzw. die beiden zur Kante führenden/zusammenlaufenden Flächen definieren) einen spitzen Winkel 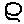 .

Die Kante für die Nagelhaut-Behandlung ist mit einem Verlauf gestaltet und verläuft von der Anschlagkante des Aufsteckteils um das vordere Ende wiederum zur Anschlagkante. Die Nutzbare Kante ist im vorderen Bereich am vorderen Ende angebracht. Die seitlichen Elemente sind nicht nutzbar.

Da für diese Anwendung als Nailtool das Gerät besonders genau geführt werden muss, sind auf Oberseite Strukturen 83a angebracht, die eine gute Positionierung ermöglichen.

Die Strukturen 83a können aus Hart- und/oder Weichkomponente gebildet werden und sind vorliegend beispielhaft als rippenartige Strukturen gezeigt.

Auf diese Weise kann die Griffigkeit bzw. Führung des Gerätes signifikant verbessert werden. Die Stege 57 und die Weichkomponente der Frontpartie 3 können dabei als zusätzliche Abstützung für einen Führungsfinger oder Führungspartien der Hand dienen.

Bezüglich der konkreten Abmessungen (Winkel 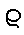 , Breite B₂ und Länge L₉), Materialien und sonstigen Ausgestaltungen wird im Übrigen auch auf die obige allgemeine Beschreibung verwiesen.

Damit die Montage und Demontage des Aufsteckteils auf das Handgerät einfacher passieren kann, ist der Trägerkörper d.h**.** der Grundkörper des Aufsteckteils im Halsbereich 62 tailliert gestaltet. Die Aufsteckachse des Nagelpflege-Aufsteckteils 60 ist im Wesentlichen parallel zu der Längsachse des Handgriffs A_{G}; d.h**.** sie kann auch eine leichte Neigung gegenüber der Längsachse des Handgriffs A_{G} aufweisen oder aber mit dieser zusammenfallen.

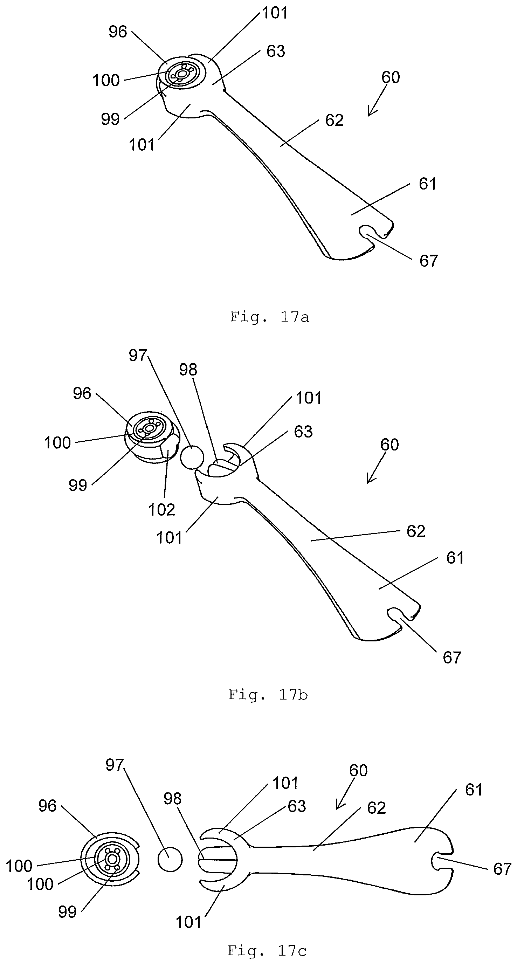

In den Fig. 17a bis 17c ist eine mögliche Ausgestaltung eines Serum-Applikator-Aufsteckteils gezeigt.

Das Aufsteckteil 60 weist wiederum einen Basisbereich 61 auf, in welchem wiederum die Ausnehmung 67 zur Aufnahme des Nockens 45 des Handgriffs ausgebildet ist.

Im Kopfbereich 63 eine Struktur mit zwei Haltearmen 101 ausgebildet, die es erlaubt ein Wechselteil 96 zu tragen.

Das Wechselteil 96 ist dazu zwischen den beiden Haltearmen 101 eingelegt/eingeklemmt. Die Haltearme 101 sind so gestaltet, dass sie quasi eine Gegengeometrie zur Aussengeometrie des Wechselteils 96 bilden und so das Teil optimal halten können. Die Haltearme 101 sind zudem mit einer gewissen Flexibilität ausgestattet die das Einführen und Rausziehen des Wechselteils 96 ermöglichen.

Im Wechselteil 96 ist eine Kugel 97 mit einem flüssigen oder zähflüssigen Medium eingebracht. Durch die Montage des Wechselteils 96 auf dem eigentlichen Aufsteckteil 60 wird die Kugel 97 zerdrückt und das Medium tritt aus. Dazu sind im Wechselteil 96 Ausnehmungen gestaltet durch welche das Medium austreten kann.

Das Wechselteil 96 kann so gestaltet sein, dass der Träger 97 des Mediums z.B. die Kugel direkt bereits im Teil montiert ist, oder dass der Nutzer dies selbst montiert. Im ersten Fall werden immer Wechselteile 96 benötigt und verkauft, während im zweiten Fall lediglich die Medien 97 gewechselt bzw. ersetzt werden können.

Auf dem Wechselteil 96 sind neben den Ausnehmungen 99 für den Fluid-Austritt vorzugsweise Strukturen 100 aufgebracht, welche das Verteilen des Fluids verbessern bzw. unterstützen.

Das eigentliche Aufsteckteil 60 hat einen Dorn 98, welcher mit der Ausnehmung 102 des Wechselteils 96 zusammenspielt. Dieser Dorn 98 wird bei der Montage des Wechselteils 96 in das Wechselteil 96 eingeführt. Durch das Zusammenführen wird die Kugel 96 des Mediums in der Ausnehmung 102 zerdrückt und das Medium fliesst durch die Ausnehmungen 99 aus.

Die Ausnehmung 102 des Wechselteils 96 ist grösser gestaltet als der Dorn 98 jedoch ist der Grössenunterschied nur so gewählt, dass der Träger 97 des Mediums dennoch zerdrückt werden kann.

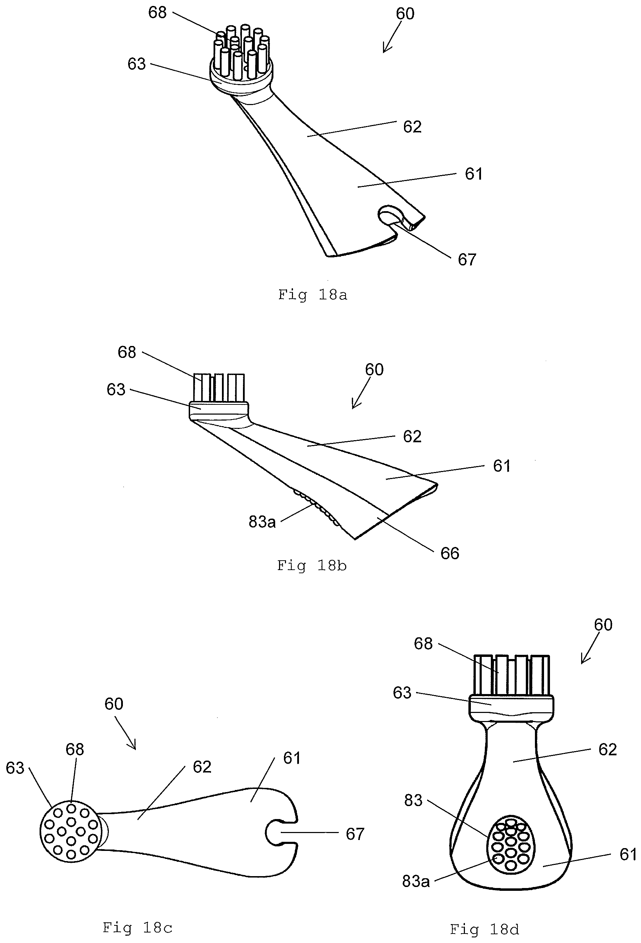

In den Fig. 18a bis 18d ist ein Nagelpflege-Aufsteckteil 60 in Form einer Nagelbürste gezeigt. Im vordersten Bereich des Aufsteckteils ist eine Bürste geformt.

Die Bürste kann zum Polieren der lackierten Nägel oder aber zum Polieren der unbehandelten Nägel (Polierbürste) sowie zum Reinigen der Nägel von Dreck oder Fett, insbesondere unter den Nagelrändern (Reinigungsbürste) dienen.

Die Bürste besteht aus einem Borstenfeld, welches aus gespritzten oder konventionellen gestanzten Borsten besteht. Daneben können weitere Elemente als Umspritzkörper beispielsweise aus Hart- und/oder Weichkomponente realisiert werden.

Der Hals- und Kopfbereich ist wiederum je nach Grösse der Bürste unterschiedlich ausgestaltet.

Das Aufsteckteil 60 weist wiederum einen Basisbereich 61 auf, in welchem wiederum die Ausnehmung 67 zur Aufnahme des Nockens 45 des Handgriffs ausgebildet ist.

Auf der Unterseite des Aufsteckteils 60 ist im Kopfbereich 63 ein Borstenfeld 68 ausgebildet.

Auf der Oberseite des Aufsteckteils 60 ist für die genaue Führung eine Griffmulde 83 mit Noppen 83a vorgesehen. Die Griffmulde 83 bzw. auch die Noppen 83a können aus Hart- und/oder Weichkomponente gebildet werden.

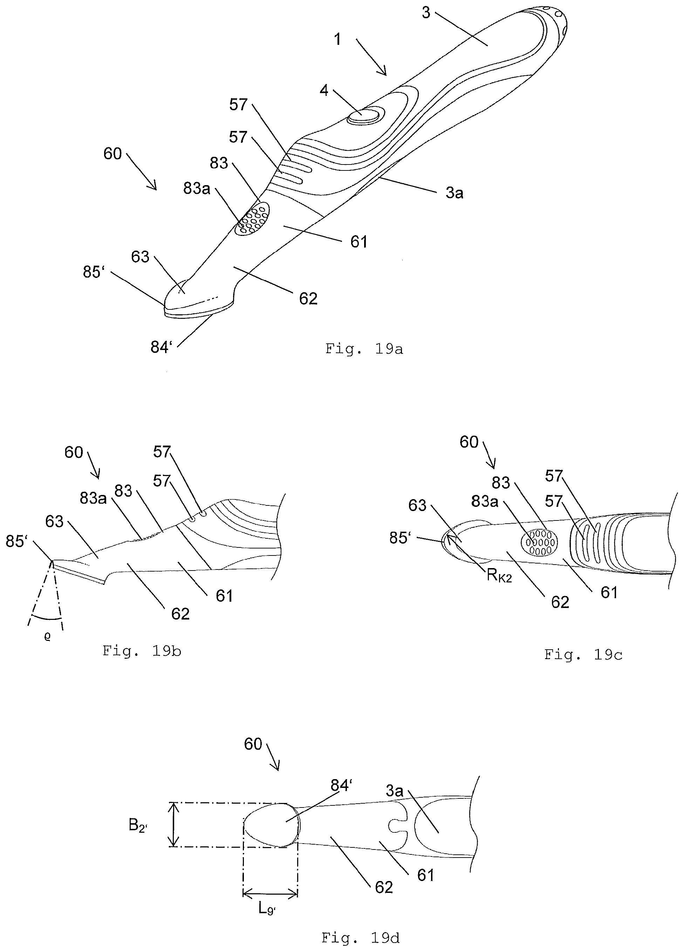

In Fig. 19a bis 19d ist eine weitere Ausgestaltung eines erfindungsgemässen Nailtools gezeigt.

Das Aufsteckteil 60 weist wiederum einen Basisbereich 61 auf, in welchem wiederum die Ausnehmung 67 zur Aufnahme des Nockens 45 des Handgriffs ausgebildet ist.

An der Unterseite des Nailtools ist ein erster Aufsatz mit einer Arbeitsfläche in Form einer Schleif- bzw. Polierfläche 84' ausgebildet, welche vorzugsweise etwa als Nagelfeile ausgestaltet ist. Diese erstreckt sich im Wesentlichen über den Kopfbereich 63 des Nail Tools.

Auf der Oberseite des Kopfbereichs 63 ist ein Behandlungselement (Oberseite) 85' angeordnet. Dieses Behandlungselement ist als Kante bzw. Schabkante für das Zurückschieben der Nagelhaut gestaltet. Die Kante ist als relativ scharfe Kante sowie zumindest teilweise freigestellte Kante gestaltet, sodass die Behandlung möglich ist.

Die Kante bzw. die beiden zur Kante führenden Flächen nehmen einen spitzen Winkel 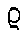 ein.

Die Kante 85' für die Nagelhaut-Behandlung ist mit einem Verlauf gestaltet und verläuft um das vordere Ende des Aufsteckteils 60. Die Nutzbare Kante ist im vorderen Bereich am vorderen Ende angebracht.

Da für diese Anwendung als Nailtool das Gerät besonders genau geführt werden muss, sind auf Oberseite Strukturen 83a in einer Griffmulde 83 angebracht, die eine gute Positionierung ermöglichen.

Die Strukturen 83a können aus Hart- und/oder Weichkomponente gebildet werden und sind vorliegend beispielhaft als noppenartige Strukturen gezeigt.

Auf diese Weise kann die Griffigkeit bzw. Führung des Gerätes signifikant verbessert werden. Die Stege 57 und die Weichkomponente der Frontpartie 3 können dabei als zusätzliche Abstützung für einen Führungsfinger oder Führungspartien der Hand dienen.

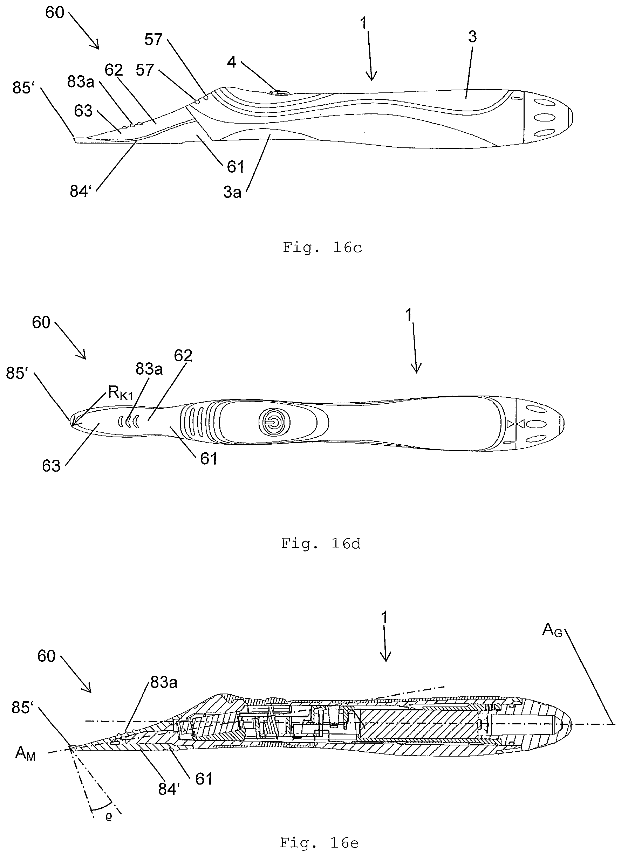

Bezüglich der konkreten Abmessungen, Materialien und sonstigen Ausgestaltungen wird im Übrigen auch auf die obige allgemeine Beschreibung verwiesen. Generell ist diese Ausführungsform des Nagelpflege-Aufsteckteils 60 im Hinblick auf den Kopfbereich 63 etwas kürzer (Länge L_{9'}), breiter (Breite B_{2'}) und insbesondere im Bereich der Kante 85' etwas weniger gekrümmt (d.h. grösserer Krümmungsradius) als etwa bei Fig. 16.

Der Krümmungsradius R_{K1} in Fig. 16 am vorderen Ende beträgt zwischen 2 mm und 4 mm vorzugsweise zwischen 2.5 mm und 3.5 mm. Während der Krümmungsradius R_{K2} in Fig. 19 am vorderen Ende zwischen 3 mm und 5 mm vorzugsweise zwischen 3.5 mm und 4.5 mm beträgt.

Damit die Montage und Demontage des Aufsteckteils auf das Handgerät einfacher passieren kann, ist der Trägerkörper d.h. der Grundkörper des Aufsteckteils im Halsbereich 62 weniger breit gestaltet als der erste Aufsatz 84.

### Bezugszeichenliste:

1 Handgriff (= Handteil und Verschlussdeckel)
1a Hartkomponente
1b Weichkomponente
1b' weitere Weichkomponente
1c Handteil (= Handkörper und Innenleben)
1d Handkörper (= Grundkörper und Umspritzkörper)
2 Schalterpartie (aus Weichkomponente 1b')
3 Frontpartie (aus Weichkomponente 1b')
3a Rückenpartie (aus Weichkomponente 1b')
4 Ein-/Ausschalter-Symbol
5 Grundkörper (aus Hartkomponente)
6 erste Markierung (dreieckförmig, auf Handteil, ggü. 37 im verschlossenen Zustand)
7 zweite Markierung (strichartig, auf Handteil ggü 37 im nicht verschlossenen Zustand)
8 Entlüftungsloch
9 Entlüftungsmembrane
10 Flachstelle
10a Flachstelle am Aufsteckteil
11 Taillierung
12 Trägerelement
12a Schräge des Trägerelements
14 Elektromotor / Vibrationsmotor
15 Exzenter
17 Trägerelement-Kontaktblech
18 Motorkompartiment
18a Kabeldurchführung
19 Schalterkompartiment
20 Kontaktblechkompartiment (Batterie-Version) für das Batterie-Kontaktblech
21 Batteriekompartiment
21a Akkukompartiment
22 Buchsenkompartiment
23 Anschlusskompartiment
24 Schalter
25 Printplatte
26 Rastnasen
27 vorderer Motoranschlag
28 hinterer Motoranschlag
29 Dichtung (am Trägerelement der Akku-Version)
30 Buchse
30a Buchsenanschlüsse (zur Printplatte)
31 Kontaktelement der Buchse
31b vorderer Anschlag der Buchse
32 Batterie-Kontaktblech
33 Kontaktzunge des Batterie-Kontaktblechs 32
34 Dichtungsring des Verschlussdeckels
35 Verschlussdeckel
35a Deckelhohlraum (des Verschlussdeckels 35)
35b Kontaktblech des Verschlussdeckels 35
35c Federblechelement (des Verschlussdeckels 35)
36 Einkerbungen
37 Markierung (dreieckförmig, ggü 6 im verschlossenen Zustand)
38 Markierung (dreieckförmig, auf Rückseite/Unterseite)
39 Batterie
39a Batteriepol (Deckelseitig)
40 Steckerartige Kupplungsstruktur des Handgriffs
41 Erste Stufe (der Kupplungsstruktur des Handteils - am freien Ende)
42 Zweite Stufe (der Kupplungsstruktur des Handteils - in der Mitte)
43 Dritte Stufe (der Kupplungsstruktur des Handteils - an Anschlagfläche anliegend)
44 Anschlagfläche des Handteils
45 Nocken
45a Stamm
45b Krone
46 Basisbereich der steckerartigen Kupplungsstruktur
47 Oberes Teilelement (der ersten Stufe 41 des Handteils)
48 Unteres Teilelement (der ersten Stufe 41 des Handteils)
49 Nut zwischen dem oberen und dem unteren Teilelement 47, 48 der ersten Stufe 41 des Handteils
50 Eckige Nut (auf der Oberseite der steckerartigen Kupplungsstruktur 40)
51 Runde Nut (auf der Unterseite der steckerartigen Kupplungsstruktur 40)
52 Übergangsbereich von der ersten zur zweiten Stufe 42 der steckerartigen Kupplungsstruktur 40
53 Umfängliche Aussparungen (der zweiten Stufe 42 der steckerartigen Kupplungsstruktur 40)
54 Umfängliche Vorsprünge (der zweiten Stufe 42 der steckerartigen Kupplungsstruktur 40)
55 Umfängliche Aussparungen (der dritten Stufe 43 der steckerartigen Kupplungsstruktur 40)
56 Umfängliche Vorsprünge (der dritten Stufe 43 der steckerartigen Kupplungsstruktur 40)
57 Stege
58 Akku
60 Aufsteckteil
61 Basisbereich des Aufsteckteils
62 Halsbereich des Aufsteckteils
63 Kopfbereich des Aufsteckteils
63' Grundfläche (Austrittsfläche Borsten)
63a statischer Teilbereich
63b flexibler Teilbereich
64 Reinigungselemente des Aufsteckteils (Borsten bzw. Borstenbündel und/oder weichelastischen Reinigungs- und Massageelemente)
64**'** Borstenbündel des Aufsteckteils
64" Borstenbündel des Aufsteckteils
64‴ Borstenbündel des Aufsteckteils
65 Trägerplättchen (AFT) des Aufsteckteils
66 Anschlagfläche des Aufsteckteils
67 Ausnehmung auf dem Aufsteckteil
68 Borstenfeld
68' Borstenbündel
69 Ausnehmung
69' Verbindung
70 Buchsenartige Kupplungsstruktur des Aufsteckteils
71 Erste Stufe der Kupplungsstruktur des Aufsteckteils (am freien Ende - Korrespondierend mit der dritten Stufe der Kupplungsstruktur des Handteils)
72 Zweite Stufe der Kupplungsstruktur des Aufsteckteils (in der Mitte - korrespondierend mit der zweiten Stufe der Kupplungsstruktur des Handteils)
73 Dritte Stufe der Kupplungsstruktur des Aufsteckteils (zu Innerst - korrespondierend mit der ersten Stufe der Kupplungsstruktur des Handteils)
74 Eckiger Kamm (auf Oberseite/Vorderseite des Aufsteckteils)
75 Runder Kamm (auf Unterseite/Rückseite des Aufsteckteils)
76 Umfängliche Aussparungen (der ersten Stufe 71 der buchsenartigen Kupplungsstruktur 70)
77 Umfängliche Vorsprünge (der ersten Stufe 71 der buchsenartigen Kupplungsstruktur 70)
78 Umfängliche Aussparungen (der zweiten Stufe 72 der buchsenartigen Kupplungsstruktur 70)
79 Umfängliche Vorsprünge (der zweiten Stufe 72 der buchsenartigen Kupplungsstruktur 70)
80 Rippen (der dritten Stufe 73 der buchsenartigen Kupplungsstruktur 70)
81 Achtförmige Öffnung (der dritten Stufe 73 der buchsenartigen Kupplungsstruktur 70)
82 Seitliche Griffmulden
83 Griffmulde (Oberseite)
83a Noppen der Griffmulde
84 erster Aufsatz (Unterseite)
84 Arbeitsfläche / Schleif- bzw. Polierfläche
85 zweiter Aufsatz (Oberseite)
85' Behandlungselement / Schabkante (Oberseite)
86 Behandlungselement (Unterseite)
87 Behandlungselement (in schwammartiger Struktur)
88 Haltearme
89 Zahnseide
90 Interdentalbürste
91 Tragelement der Interdentalbürste
92 Massageroller (Zylinder)
93 Drehachse des Massagerollers
94 Vertiefungen des Massagerollers
95 Klinge des Nassrasierers
96 Wechselteil
97 Träger des Mediums
98 Dorn
99 Ausnehmungen für den Fluid-Austritt
100 Strukturen
101 Haltearm
102 Ausnehmung
A_{G} Längsachse Handgriff
A_{K} Längsachse der steckerartigen Kupplungsstruktur
A_{M} Rotationsachse Elektromotor
A_{A} Längsachse des Aufsteckteils (Längsachse der buchsenartigen Kupplungsstruktur)
A_{B} Längsachse des Kopfbereichs des Aufsteckteils
B₁ Breite Handgriff (max)
B₂ Breite Arbeitsfläche
B_{2'} Breite Arbeitsfläche
D_{V} Durchmesser Verschlussdeckel (max)
H₁ Höhe Handgriff (max)
L₁ Länge erste Stufe
L₂ Länge zweite Stufe
L₃ Länge dritte Stufe (auf der Oberseite)
L_{3'} Länge dritte Stufe (auf der Unterseite)
L₄ Gesamtlänge Handgriff (Handteil mit Verschlussdeckel)
L₅ Gesamtlänge Handteil (Handgriff ohne Verschlussdeckel)
L₆ Länge Anschlagkante-Griffende ohne Verschlussdeckel (Vorderseite bzw. Oberseite)
L₇ Länge Anschlagkante-Griffende ohne Verschlussdeckel (Rückseite bzw. Unterseite)
L₈ Länge Verschlussdeckel
L₉ Länge Arbeitsfläche
L_{9'} Länge Arbeitsfläche
L_{B} Längsachse Borsten
R Einführrichtung Trägerelement
R_{K1} Krümmungsradius
R_{K2} Krümmungsradius
X Schnittstelle
α Winkel Anschlagfläche/A_{G}
α₂ Winkel A_{G} / Grundfläche
α₃ Winkel L_{B} / A_{G}
β Winkel A_{M}/A_{G}
β₂ Winkel A_{M} / Grundfläche
β₃ Winkel L_{B} / A_{M}
φ Winkel Anschlagfläche/A_{M}
Δ Winkel Aufsteckteil
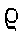 Winkel Kante bzw. Schabkante

## Patentansprüche

1. Aufsteckteil (60) für die Zahnreinigung, welches auf einen Handgriff (1) aufbringbar ist, wobei das Aufsteckteil (60) einen Basisbereich (61) und einen Kopfbereich (63) aufweist, welche durch ein Halsbereich (62) verbunden sind, wobei das Aufsteckteil (60) eine buchsenartige Kupplungsstruktur (70) umfasst, welche zumindest zwei Stufen (71, 72, 73) mit unterschiedlicher Umfangsgeometrie aufweist und welche den aufsteckteilseitigen Teil für eine Schnittstelle (X) mit einer im Wesentlichen gegengleichen, steckerartigen Kupplungsstruktur (40) des Handgriffs (1) bildet, wobei das Aufsteckteil (60) eine Anschlagfläche (66) aufweist, welche schräg zu einer geraden Einführrichtung (R) verläuft, **dadurch gekennzeichnet, dass** eine erste Stufe (71) der buchsenartigen Kupplungsstruktur (70) umfängliche Aussparungen (76) und Vorsprünge (77) umfasst.

2. Aufsteckteil (60) nach Anspruch 1, **dadurch gekennzeichnet, dass** die umfänglichen Aussparungen (76) und/oder Vorsprünge (77) symmetrisch zueinander ausgebildet sind.

3. Aufsteckteil (60) nach einem der vorangehenden Ansprüche, **dadurch gekennzeichnet, dass** eine zweite Stufe (72) der buchsenartigen Kupplungsstruktur (70) umfängliche Aussparungen (78) und Vorsprünge (79) umfasst.

4. Aufsteckteil (60) nach einem der vorangehenden Ansprüche, **dadurch gekennzeichnet, dass** das Aufsteckteil (60) auf der Oberseite einen eckigen Kamm (74) aufweist.

5. Aufsteckteil (60) nach Anspruch 3 und 4, **dadurch gekennzeichnet, dass** der eckige Kamm (74) an der Oberseite der zweiten Stufe (72) angeordnet ist.

6. Aufsteckteil (60) nach einem der vorangehenden Ansprüche, **dadurch gekennzeichnet, dass** das Aufsteckteil (60) auf der Unterseite einen runden Kamm (75) aufweist.

7. Aufsteckteil (60) nach einem der vorangehenden Ansprüche, **dadurch gekennzeichnet, dass** eine Längsachse (A_{A}) des Aufsteckteils (60) die Längsachse der buchsenartigen Kupplungsstruktur (70) bezeichnet, welche im Basisbereich (61) des Aufsteckteils (60) liegt, wobei eine Längsachse (A_{B}) des Kopfbereichs (63) entsprechend im Kopfbereich (63) des Aufsteckteils (60) und in einem Winkel Δ zur Längsachse (A_{A}) des Aufsteckteils (60) liegt.

8. Aufsteckteil (60) nach Anspruch 7, **dadurch gekennzeichnet, dass** der zwischen der Längsachse (A_{A}) der buchsenartigen Kupplungsstruktur (70) und der Längsachse (A_{B}) des Kopfbereichs (63) liegende Winkel Δ zwischen 10° und 30°, vorzugsweise zwischen 15° und 25°, beträgt.

9. Aufsteckteil (60) nach Anspruch 7 oder 8, **dadurch gekennzeichnet, dass** die Anschlagfläche (66) schräg zur Längsachse (A_{A}) des Aufsteckteils verläuft und dass das Aufsteckteil (60) eine nockengegengleiche Ausnehmung (67) aufweist, welche ausgebildet ist, mit einem gegengleichen Nocken (45) der steckerartigen Kupplungsstruktur (40) des Handgriffs (1) in der Art einer Schnappverbindung zusammenzuwirken.

10. Aufsteckteil (60) nach einem der vorangehenden Ansprüche, **dadurch gekennzeichnet, dass** die Länge des Aufsteckteils (60) zwischen 50 mm und 100 mm, vorzugsweise zwischen 60 mm und 90 mm, besonders bevorzugt zwischen 70 mm und 80 mm, beträgt.

11. Aufsteckteil (60) nach einem der vorangehenden Ansprüche, **dadurch gekennzeichnet, dass** die Anschlagfläche (66) und die Einführrichtung (R) einen Winkel α zwischen 30° und 70°, vorzugsweise zwischen 45° und 55°, einschliessen.

12. Aufsteckteil (60) nach Anspruch 9, **dadurch gekennzeichnet, dass** an die nockengegengleiche Ausnehmung an der Innenseite jeweils umfängliche Aussparungen angrenzen.

13. Aufsteckteil (60) nach einem der vorangehenden Ansprüche, **dadurch gekennzeichnet, dass** das Aufsteckteil (60) einen Grundkörper mit einer Hartkomponente aufweist, wobei das e-Modul der Hartkomponente des Grundkörpers des Aufsteckteils (60) zwischen 700 MPa und 1500 MPa, vorzugsweise zwischen 900 MPa und 1250 MPa, beträgt.

14. Aufsteckteil (60) nach einem der vorangehenden Ansprüche 1 bis 13, **dadurch gekennzeichnet, dass** das Aufsteckteil (60) einen Grundkörper mit einer Hartkomponente aus Polypropylen aufweist, wobei das e-Modul der Hartkomponente des Grundkörpers des Aufsteckteils (60) zwischen 1000 N/mm² und 2400 N/mm², vorzugsweise zwischen 1300 N/mm² und 1800 N/mm², beträgt.

15. Aufsteckteil (60) nach einem der vorangehenden Ansprüche, **dadurch gekennzeichnet, dass** zumindest eine der Stufen eine Verdrehsicherung umfasst.

16. Aufsteckteil (60) nach Anspruch 15, **dadurch gekennzeichnet, dass** Elemente der Verdrehsicherung zumindest teilweise mit Elementen einer Einführhilfe und/oder einer Längsführung kombiniert sind.

17. Aufsteckteil (60) nach einem der vorangehenden Ansprüche, **dadurch gekennzeichnet, dass** die Querschnitte der Stufen (71, 72, 73) nicht konzentrisch angeordnet sind.

18. Aufsteckteil (60) nach einem der vorangehenden Ansprüche, **dadurch gekennzeichnet, dass** die buchsenartige Kupplungsstruktur (70) eine Führungsstruktur aufweist, so dass das Aufstecken des Aufsteckteils (60) auf die steckerartige Kupplungsstruktur (40) nur in einer Position erfolgen kann.

19. Aufsteckteil (60) nach einem der vorangehenden Ansprüche, **dadurch gekennzeichnet, dass** die buchsenartige Kupplungsstruktur (70) an der Innenseite des Aufsteckteils ausgebildet ist und drei Stufen (71, 72, 73) aufweist.

## Claims

1. Plug-on part (60) for cleaning teeth, which can be attached to a handle (1), wherein the plug-on part (60) has a base region (61) and a head region (63) which are connected by a neck region (62), wherein the plug-on part (60) comprises a socket-shaped coupling structure (70) which has at least two stages (71, 72, 73) with different circumferential geometries and which form the part on the plug-on part for an interface (X) with a substantially mirror-inverted, plug-like coupling structure (40) of the handle (1), wherein the plug-on part (60) has a stop surface (66) which runs obliquely to a straight insertion direction (R), **characterised in that** a first stage (71) of the socket-shaped coupling structure (70) comprises circumferential recesses (76) and projections (77).

2. Plug-on part (60) according to claim 1, **characterised in that** the circumferential recesses (76) and/or projections (77) are symmetrical to each other.

3. Plug-on part (60) according to one of the preceding claims, **characterised in that** a second stage (72) of the socket-shaped coupling structure (70) comprises circumferential recesses (78) and projections (79).

4. Plug-on part (60) according to one of the preceding claims, **characterised in that** the plug-on part (60) has an angular comb (74) on the upper side.

5. Plug-on part (60) according to claims 3 and 4, **characterised in that** the angular comb (74) is arranged on the upper side of the second stage (72).

6. Plug-on part (60) according to one of the preceding claims, **characterised in that** the attachment part (60) has a round comb (75) on the underside.

7. Plug-on part (60) according to one of the preceding claims, **characterised in that** a longitudinal axis (AA) of the plug-on part (60) designates the longitudinal axis of the socket-shaped coupling structure (70) which lies in the base region (61) of the plug-on part (60), wherein a longitudinal axis (AB) of the head region (63) lies correspondingly in the head region (63) of the plug-on part (60) and at an angle Δ to the longitudinal axis (AA) of the plug-on part (60).

8. Plug-on part (60) according to claim 7, **characterised in that** the angle Δ between the longitudinal axis (AA) of the socket-shaped coupling structure (70) and the longitudinal axis (AB) of the head region (63) is between 10° and 30°, preferably between 15° and 25°.

9. Plug-on part (60) according to claim 7 or 8, **characterised in that** the stop surface (66) runs at an angle to the longitudinal axis (AA) of the plug-on part and that the plug-on part (60) has a cam-opposite recess (67) which is designed to interact with a cam (45) of the plug-like coupling structure (40) of the handle (1) in the manner of a snap connection.

10. Plug-on part (60) according to one of the preceding claims, **characterised in that** the length of the plug-on part (60) is between 50 mm and 100 mm, preferably between 60 mm and 90 mm, particularly preferably between 70 mm and 80 mm.

11. Plug-on part (60) according to one of the preceding claims, **characterised in that** the stop surface (66) and the insertion direction (R) form an angle α between 30° and 70°, preferably between 45° and 55°.

12. Plug-on part (60) according to claim 9, **characterised in that** circumferential recesses adjoin the cam-opposite recess on the inner side.

13. Plug-on part (60) according to one of the preceding claims, **characterised in that** the plug-on part (60) has a base body with a hard component, wherein the modulus of elasticity of the hard component of the base body of the plug-on part (60) is between 700 MPa and 1500 MPa, preferably between 900 MPa and 1250 MPa.

14. Plug-on part (60) according to one of the preceding claims 1 to 13, **characterised in that** the plug-on part (60) has a base body with a hard component made of polypropylene, wherein the modulus of elasticity of the hard component of the base body of the plug-on part (60) is between 1000 N/mm² and 2400 N/mm² , preferably between 1300 N/mm² and 1800 N/mm².

15. Plug-on part (60) according to one of the preceding claims, **characterised in that** at least one of the stages comprises a anti-rotation device.

16. Plug-on part (60) according to claim 15, **characterised in that** elements of the anti-rotation device are at least partially combined with elements of an insertion aid and/or a longitudinal guide.

17. Plug-on part (60) according to one of the preceding claims, **characterised in that** the cross-sections of the stages (71, 72, 73) are not arranged concentrically.

18. Plug-on part (60) according to one of the preceding claims, **characterised in that** the socket-shaped coupling structure (70) has a guide structure such that the plug-on part (60) can only be attached to the plug-like coupling structure (40) in one position.

19. Plug-on part (60) according to one of the preceding claims, **characterised in that** the socket-shaped coupling structure (70) is formed on the inside of the plug-on part and has three stages (71, 72, 73).

## Revendications

1. Partie enfichable (60) pour le nettoyage des dents, qui peut être enfichée sur un manche (1), la partie enfichable (60) comportant une zone de base (61) et une zone de tête (63) reliées par une zone de col (62), la partie enfichable (60) comprenant une structure d'accouplement du type douille (70) qui présente au moins deux étages (71, 72, 73) de géométrie périphérique différente et qui forme, du côté de l'élément enfichable, la partie destinée à une interface (X) avec une structure d'accouplement du type connecteur (40) sensiblement opposée du manche (1), la partie enfichable (60) présentant une surface de butée (66) qui s'étend obliquement par rapport à une direction d'introduction rectiligne (R), **caractérisé en ce qu'**un premier étage (71) de la structure d'accouplement du type douille (70) comprend des évidements périphériques (76) et des saillies (77).

2. Partie enfichable (60) selon la revendication 1, **caractérisée en ce que** les évidements périphériques (76) et/ou les saillies (77) sont symétriques les uns par rapport aux autres.

3. Partie enfichable (60) selon l'une des revendications précédentes, **caractérisée en ce qu'**un deuxième étage (72) de la structure d'accouplement du type douille (70) comprend des évidements périphériques (78) et des saillies (79).

4. Partie enfichable (60) selon l'une des revendications précédentes, **caractérisée en ce que** la partie enfichable (60) présente sur la face supérieure une crête angulaire (74).

5. Partie enfichable (60) selon les revendications 3 et 4, **caractérisée en ce que** la crête angulaire (74) est disposée sur la face supérieure du deuxième étage (72).

6. Partie enfichable (60) selon l'une des revendications précédentes, **caractérisée en ce que** la partie enfichable (60) présente un peigne rond (75) sur la face inférieure.

7. Partie enfichable (60) selon l'une des revendications précédentes, **caractérisée en ce qu'**un axe longitudinal (A_{A}) de la partie enfichable (60) désigne l'axe longitudinal de la structure d'accouplement du type douille (70) qui se trouve dans la zone de base (61) de la partie enfichable (60), un axe longitudinal (AB) de la zone de tête (63) se trouve de manière correspondante dans la zone de tête (63) de la Partie enfichable (60) et forme un angle Δ avec l'axe longitudinal (AA) de la partie enfichable (60).

8. Partie enfichable (60) selon la revendication 7, **caractérisée en ce que** l'angle Δ entre l'axe longitudinal (A_{A}) de la structure d'accouplement du type douille (70) et l'axe longitudinal (A_{B}) de la zone de tête (63) est compris entre 10° et 30°, de préférence entre 15° et 25°.

9. Partie enfichable (60) selon la revendication 7 ou 8, **caractérisée en ce que** la surface de butée (66) s'entend de façon inclinée par rapport à l'axe longitudinal (AA) de la partie enfichable et que la partie enfichable (60) présente un évidement (67) de forme opposée à celle d'une came, qui est conçu pour coopérer avec une came (45) de forme opposée de la structure d'accouplement (40) du manche (1) à la manière d'une liaison à encliquetage.

10. Partie enfichable (60) selon l'une des revendications précédentes, **caractérisée en ce que** la longueur de la partie enfichable (60) est comprise entre 50 mm et 100 mm, de préférence entre 60 mm et 90 mm, de manière particulièrement préférée entre 70 mm et 80 mm.

11. Partie enfichable (60) selon l'une des revendications précédentes, **caractérisée en ce que** la surface de butée (66) et la direction d'introduction (R) forment un angle α compris entre 30° et 70°, de préférence entre 45° et 55°.

12. Partie enfichable (60) selon la revendication 9, **caractérisée en ce que** des évidements périphériques sont adjacents à l'évidement opposé à la came sur la face intérieure.

13. Partie enfichable (60) selon l'une des revendications précédentes, **caractérisée en ce que** la partie enfichable (60) présente un corps de base avec un composant dur, le module d'élasticité du composant dur du corps de base de la partie enfichable (60) étant compris entre 700 MPa et 1500 MPa, de préférence entre 900 MPa et 1250 MPa.

14. Partie enfichable (60) selon l'une des revendications précédentes 1 à 13, **caractérisée en ce que** la partie enfichable (60) présente un corps de base avec un composant dur en polypropylène, le module d'élasticité du composant dur du corps de base de la partie enfichable (60) étant compris entre 1000 N/mm² et 2400 N/mm², de préférence entre 1300 N/mm² et 1800 N/mm².

15. Partie enfichable (60) selon l'une des revendications précédentes, **caractérisée en ce qu'**au moins l'un des étages comprend un dispositif anti-rotation.

16. Partie enfichable (60) selon la revendication 15, **caractérisée en ce que** les éléments du dispositif anti-rotation sont combinés au moins en partie avec des éléments d'une aide à l'insertion et/ou d'un guidage longitudinal.

17. Partie enfichable (60) selon l'une des revendications précédentes, **caractérisée en ce que** les sections transversales des étages (71, 72, 73) ne sont pas disposées de manière concentrique.

18. Partie enfichable (60) selon l'une des revendications précédentes, **caractérisée en ce que** la structure d'accouplement du type douille (70) comporte une structure de guidage, de sorte que l'enfichage de la partie enfichable (60) sur la structure d'accouplement du type connecteur (40) ne peut avoir lieu que dans une position.

19. Partie enfichable (60) selon l'une des revendications précédentes, **caractérisée en ce que** la structure d'accouplement du type douille (70) est formée sur la face intérieure de la partie enfichable et comporte trois étages (71, 72, 73).
